# EUROPÄISCHE PATENTSCHRIFT

(11) **EP 1 736 698 B1**
(45) Veröffentlichungstag und Bekanntmachung des Hinweises auf die Patenterteilung: **09.02.2011**
(21) Anmeldenummer: 06115796.2
(22) Anmeldetag: 21.06.2006
(51) Int. Cl.: F16L 27/00, F16L 39/04, B41F 13/26, B41F 13/004, B41F 27/12, F16L 27/08

(54) **Vorrichtung zur Anbindung eines rotierenden Bauteils in einer Druckmaschine zur Übertragung von Druckmittel**
Device for connecting a rotating component of in a printing machine for transferring pressurized fluid
Dispositif pour raccorder un composant rotatif d'une machine d'impression pour transmettre du fluide sous pression

(30) Priorität: 05.10.2005 DE 102005047660; 23.06.2005 EP 05105635
(43) Veröffentlichungstag der Anmeldung: 27.12.2006
(73) Patentinhaber: Koenig & Bauer Aktiengesellschaft, 97080 Würzburg (DE)
(72) Erfinder: Schäfer, Karl, 97273 Kürnach (DE); Masuch, Bernd, 97273, Kürnach (DE); Schneider, Georg, 97080, Würzburg (DE)

(56) Entgegenhaltungen:
- EP-A- 0 562 269
- WO-A-2005/108079
- US-A1- 2003 172 820

## Beschreibung

Die Erfindung betrifft eine Vorrichtung zur Anbindung eines rotierenden Bauteils einer Druckmaschine gemäß dem Oberbegriff des Anspruch 1.

Durch die EP 0 699 524 B1 sind Antriebszüge von Druckeinheiten offenbart, wobei in einer Ausführung ein Einzelantrieb der Druckwerkszylinder durch einen Einzelmotor erfolgt. In einer Ausbildung des Antriebsmotors ist der Wicklungen tragende Rotor gegenüber einem gestellfesten Stator axial bewegbar.

Die DE 195 34 651 A1 offenbart eine Druckeinheit mit in einer Ebene liegenden Zylindern, wobei drei von vier Zylindern entlang der Zylinderebene zur Druck-An- bzw. Druck-Ab-Stellung linear bewegbar gelagert sind. Die Lagerung erfolgt in an der Gestellinnenwand angeordneten Führungselementen. Die Zylinder sind an den gemeinsamen Führungselementen in Trägern gelagert, durch druckmittelbetriebene Arbeitszylinder aneinander an-/abstellbar und durch Antriebsmotoren rotierbar.

In der WO 02/081218 A2 sind einzelne Linearlagerungen für zwei jeweils in Schlitten gelagerte Übertragungszylinder bekannt, wobei der Schlitten an einem Einsatz gelagert ist, welcher in Richtung Zylinder aus der Flucht des Seitengestells heraustritt. Der Antrieb der Zylinder erfolgt paarweise oder einzeln durch eigene Antriebsmotoren, wobei der Motor in dargestellter Ausführung gestellfest und in nicht näher dargelegter Weise mitgeführt ausgebildet sein kann.

Durch die WO 03/025406 A1 ist eine Lageranordnung für Zylinder offenbart, bei welcher ein eine Linearführung umgreifender Schlitten durch einen am Gestell angeordneten Aktor bewegbar ist.

Die EP 1 175 300 B1 zeigt eine Flexodruckmaschine mit einem direkt am Zapfen angetriebenen Formzylinder, wobei der Motor an einem Gleitstück gelagert ist, welches auf einer tragenden Schulter des Maschinengestells angeordnet ist.

Die WO 2005/108079 A (Artikel 54(3) EPÜ) offenbart einen Rotor und einen Stator einer Drehdurchführung an einem Zylinder, wobei der Rotor mit dem Zapfen des Zylinders und der Stator drehfest am Gestell der Druckmaschine befestigt ist.

Durch die EP 0 562 269 A ist eine Drehdurchführung in einem Plattenzylinder offenbart, wobei der Stator der Drehdurchführung an einem ortsfesten Maschinengestell befestigt ist.

Die US 200372820 A1 zeigt eine Drehdurchführung für ein Arbeitsmittel in ein rotierendes Teil einer Druckmaterial bearbeitenden Maschine.

Der Erfindung liegt die Aufgabe zugrunde, eine kompakte Vorrichtung zur Anbindung eines rotierenden, radial bewegbaren Bauteils einer Druckmaschine im Hinblick auf Antriebs- und Betriebsmittel zu schaffen.

Die Aufgabe wird erfindungsgemäß durch die Merkmale des Anspruchs 1 gelöst.

Die mit der Erfindung erzielbaren Vorteile bestehen insbesondere darin, dass eine besonders kompakte Anbindung eines einzeln angetriebenen, bewegbar gelagerten Rotationskörpers der Druckmaschine geschaffen wird. Weiter wird in besonderer Ausführung ein dennoch starker Antrieb des Rotationskörpers geschaffen.

In einer vorteilhaften Ausführung, bei welcher auf eine motorinterne Lagerung zwischen Stator und Rotor verzichtet werden kann, ist der Motor besonders einfach aufgebaut und/oder ist im Hinblick auf Verschleißteile besonders wartungsarm.

In einer vorteilhaften Ausführung als permanenterregter Motor ist der Motor mit besonders hoher Antriebsleistung bei gleichzeitig kleiner Baugröße ausgebildet. Desweiteren entfallen hierbei elektrische Übertragungsmittel, z. B. Schleifkontakte, auf ein rotierendes Bauteil, z. B. den Rotor, wenn der Rotor zur Bildung des Magnetfeldes anstelle von elektromagnetisch angeregten Spulen Permanentmagneten aufweist.

In einer vorteilhaften Ausbildung des Antriebsmotors ist der Stator in axialer Richtung nicht gestell- oder lagerfest, sondern - zumindest in einer bestimmten Größenordnung - axial bewegbar angeordnet, wobei er jedoch im Hinblick auf auftretende Drehmomente verdrehgesichtert, z. B. relativ zum Seitengestell und/oder einer Lagereinheit, ausgebildet sein kann. Wird nun beispielsweise ein axial gemeinsam mit dem Zylinder bewegbarer Rotor axial bewegt, so ist über magnetische Wechselwirkung der Stator in der Weise axial mitführbar, dass die Magneten von Stator und Rotor zueinander im optimalen Arbeitspunkt verbleiben können, d. h. der Stator relativ zum Rotor betrachtet im Extremfall ortsfest verbleiben kann.

Umgekehrt kann in einer ebenfalls vorteilhaften Ausführung des Antriebsmotors der Stator in axialer Richtung gestell- oder lagerfest angeordnet sein, wobei der die Magneten tragende Rotorkörper - zumindest in einer bestimmten Größenordnung - relativ zu einer zylinderfesten Welle axial bewegbar, jedoch im Hinblick auf zu übertragende Drehmomente gegenüber dem Zylinder bzw. der Welle verdrehgesichtert ausgebildet ist. Wird nun beispielsweise der Zylinder axial bewegt, so wird der Rotor nicht zwangsweise axial mitbewegt, sondern kann über magnetische Wechselwirkung mit dem Stator in der Weise axial ― im Extremfall ortsfest - verbleiben, dass die Magneten von Stator und Rotor zueinander im optimalen Arbeitspunkt verbleiben können.

Durch einen Einsatz von Linearführungen für die Druckwerkszylinder wird eine ideale Einbaulage der Zylinder in Bezug auf mögliche Zylinderschwingungen erreicht. Daneben werden durch die Zylinderlagerung in Linearführungen geringe Stellwege realisiert und daher auch keine Synchronspindel erforderlich. Der aufwändige Einbau von Dreiringlagern entfällt.

Die Lagerung innen an den Seitengestellen erlaubt neben dem einfachen Einbau auch die Verkürzung von Zylinderzapfen, was sich schwingungsmindernd und auch raumsparend auswirkt.

In einer vorteilhaften Ausführung mit dem am bewegbaren Lagerblock angeordneten Stator ist eine einfache Kopplung von Zylinder und Motor geschaffen.

Die Weiterbildung der linearen Lager mit bewegbaren Anschlägen ermöglicht ein druckrelevantes Einstellen der Zylinder und im weiteren eine Automatische Grundeinstellung ― für eine neue Konfigurierung, ein neues Drucktuch etc.

Ausführungsbeispiele der Erfindung sind in den Zeichnungen dargestellt und werden im Folgenden näher beschrieben.

Es zeigen:
- Fig. 1: eine schematische Darstellung einer Druckeinheit;
- Fig. 2: eine erste Betriebsstellung einer ersten Ausführung einer Druckeinheit;
- Fig. 3: eine zweite Betriebsstellung einer ersten Ausführung einer Druckeinheit;
- Fig. 4: eine schematische Darstellung der Modularität einer Druckeinheit;
- Fig. 5: eine Draufsicht auf ein Doppeldruckwerk;
- Fig. 6: ein schematischer Längsschnitt durch eine Lagereinheit;
- Fig. 7: ein schematischer Querschnitt durch eine Lagereinheit;
- Fig. 8: eine vergrößerte Darstellung des Linearlagers aus Fig. 6;
- Fig. 9: eine Ankopplung eines Zylinders an eine Seitenregisterantrieb;
- Fig. 10: eine erste Ausführung für die Ankopplung eines Antriebsmotors an einen Zylinder;
- Fig. 11: eine Ausführung für den Antrieb eines Druckwerks;
- Fig. 12: eine zweite Ausführung für die Ankopplung eines Antriebsmotors an einen Zylinder;
- Fig. 13: eine schematische 3-D Darstellung eines Rotors;
- Fig. 14: eine weitere schematische Darstellung eines Stators;
- Fig. 15: eine Ausführungsvariante des Antriebsmotors aus Fig. 12;
- Fig. 16: eine Ausführungsvariante des Antriebsmotors aus Fig. 12;
- Fig. 17: eine Ausführungsvariante des Antriebsmotors aus Fig. 12;
- Fig. 18: eine Ausführungsvariante des Antriebsmotors aus Fig. 12;
- Fig. 19: eine dritte Ausführung des Antriebes eines Rotationskörpers, insbesondere Zylinders;
- Fig. 20: eine Variante der dritten Ausführung des Antriebes eines Rotationskörpers, insbesondere Zylinders;
- Fig. 21: eine axial versetzte Anordnung benachbarter Antriebsmotoren;
- Fig. 22: eine segmentierte Ausführung des Antriebes eines Rotationskörpers, insbesondere Zylinders;
- Fig. 23: Varianten eines segmentierten Antriebsmotors mit achsparalleler Anordnung;
- Fig. 24: Varianten eines segmentierten Antriebsmotors mit achsvertikaler Anordnung;
- Fig. 25: Varianten eines segmentierten Antriebsmotors mit achsvertikaler Anordnung;
- Fig. 26: Varianten eines segmentierten Antriebsmotors mit achsvertikaler Anordnung;
- Fig. 27: Anordnungen von Statorsegmenten benachbarter Antriebsmotoren;
- Fig. 28: einer Ausgestaltung eines Statorsegmentes für ein bewegbares Bauteil;
- Fig. 29: Varianten für die Ansteuerung von Statorsegmenten;
- Fig. 30: eine weitere Ausführung für die Ankopplung des Antriebsmotors an ein rotierendes Bauteil mit integriertem Axialantrieb;
- Fig. 31: eine Prinzipskizze einer Druckmaschine;
- Fig. 32: eine Vorderansicht eines Rollenwechslers;
- Fig. 33: einen Falzaufbau;
- Fig. 34: eine schematische Darstellung eines Falzapparats;
- Fig. 35: eine zweite Ausführung eines Falzapparates;
- Fig. 36: eine dritte Ausführung eines Falzapparates;
- Fig. 37: ein Ausführungsbeispiel eines Antriebs einer Druckmaschine.

Eine Druckmaschine, z. B. Rollenrotationsdruckmaschine, insbesondere eine Mehrfarbenrollenrotationsdruckmaschine, weist eine Druckeinheit 01 auf, in welcher einen Bedruckstoff 02, z. B. eine Materialbahn 02, kurz Bahn 02 beidseitig einfach oder insbesondere nacheinander beidseitig mehrfach, z. B. hier vierfach, oder aber mehrere Bahnen gleichzeitig ein- oder mehrfach durch Druckwerke 04 bedruckbar sind. Es kann auch eine oder mehrere Druckeinheiten 01 bzw. Druckwerke 04 vorgesehen sein, in welchen eine Bahn 02 an der Druckstelle 05 lediglich einseitig bedruckbar ist. Die Druckwerke 04 weisen Druckwerkszylinder 06; 07 auf, welche in Druck-An paarweise aneinander anzustellen sind.

Die im folgenden aufgezeigten Lösungen können auch auf Druckwerke 04 vorteilhafte angewandt sein, in welchen der Bedruckstoff 02 nicht bahnförmig, sondern als Bogen ausgebildet ist.

Vorteilhaft ist nun, dass einer oder mehrere der Druckwerkszylinder 06; 07 und/oder andere rotierende Bauteile - einen eigenen, zumindest von anderen Druckwerken 04 bzw. anderen Aggregaten mechanisch unabhängigen - Antriebsmotor (s. u. ) aufweisen. Dieser ist vorzugsweise im wesentlichen koaxial zum Druckwerkszylinder 06; 07 angeordnet und in vorteilhafter Ausführung ohne zwischengeschaltetes Getriebe an den Druckwerkszylinder 06; 07 angekoppelt.

Die Ausführung und Ankopplung des Antriebsmotors kann auf vielfältige Weise ausgestaltet sein und wird unten näher beschrieben. Ebenso können dieses Ausführungen in Druckwerken 04 bzw. Druckeinheiten 01 oder auch für andere getriebene rotierende Bauteile unterschiedlichster Ausgestaltung eingesetzt sein, wobei im Folgenden der Einsatz anhand einer vorteilhaften Ausführung einer Druckeinheit 01 bzw. vorteilhaften Ausbildung eines Druckwerkes 04 beschrieben ist.

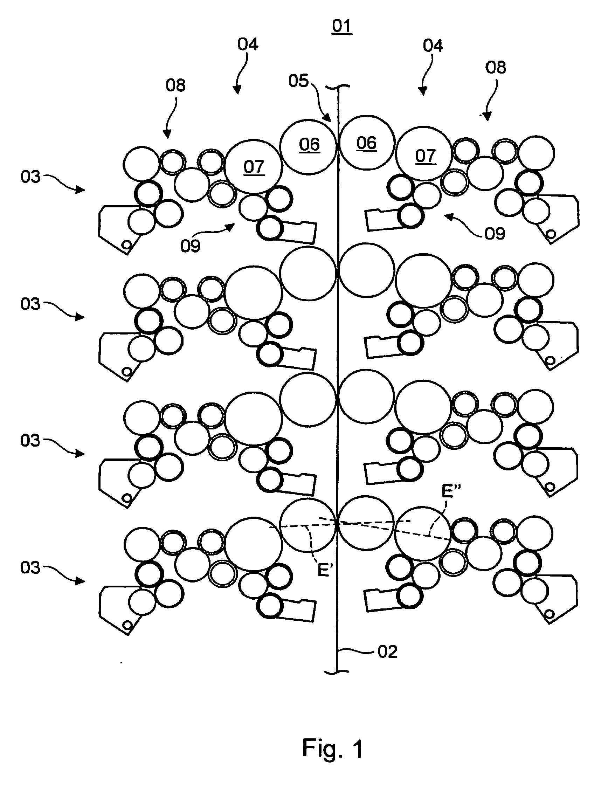

Die Druckeinheit 01 weist im hier vorliegenden Beispiel mehrere (im vorliegenden Fall vier) vertikal übereinander angeordnete Doppeldruckwerke 03 für den beidseitigen Druck im Gummi-gegen-Gummi-Betrieb auf. Die Doppeldruckwerke 03 - hier in Form von Brücken- oder n-Druckwerken dargestellt - werden jeweils durch zwei Druckwerke 04 gebildet, welche je einen als Übertragungszylinder 06 und einen als Formzylinder 07 ausgebildeten Zylinder 06; 07, z. B. Druckwerkszylinder 06; 07, sowie jeweils ein Farbwerk 08 und im Fall des Nassoffsetdruckes zusätzlich ein Feuchtwerk 09 aufweisen. Jeweils zwischen den beiden Übertragungszylindern 06 wird in Anstelllage eine (Doppel-)Druckstelle 05 gebildet. Die genannten Bauteile sind lediglich am obersten Doppeldruckwerk 03 der Fig. 1 bezeichnet, wobei die übereinander angeordneten (Doppel-)Druckwerke 03; 04 jedoch im wesentlichen - insbesondere in der Ausgestaltung der für die Erfindung relevanten Merkmale - identisch ausgeführt sind. Die Doppeldruckwerke 03 können - ohne das unten beschriebene vorteilhafte Merkmal der linearen Anordnung - genauso gut entgegen der Darstellung in Fig. 1 als sich nach oben öffnende U - Einheit ausgeführt sein.

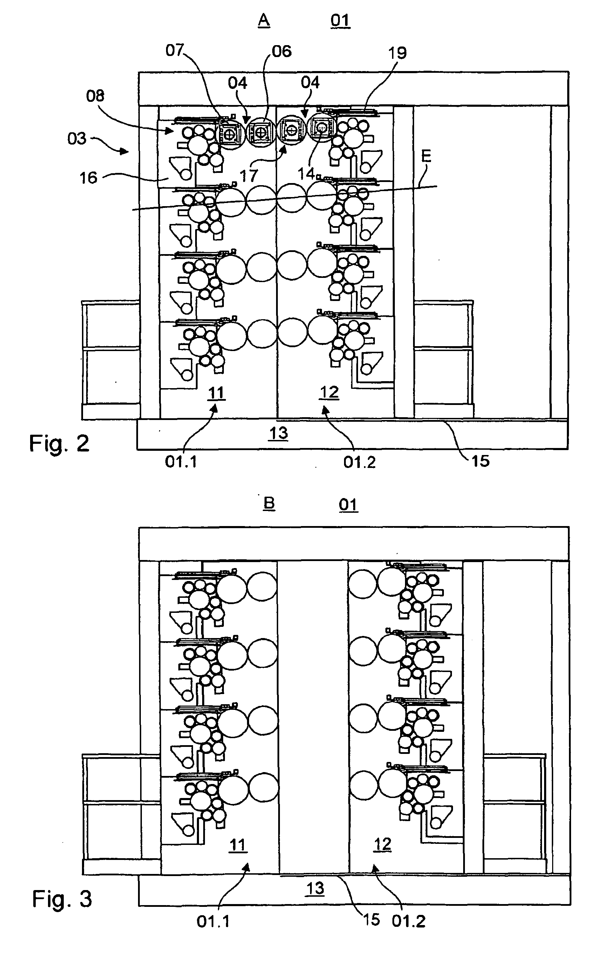

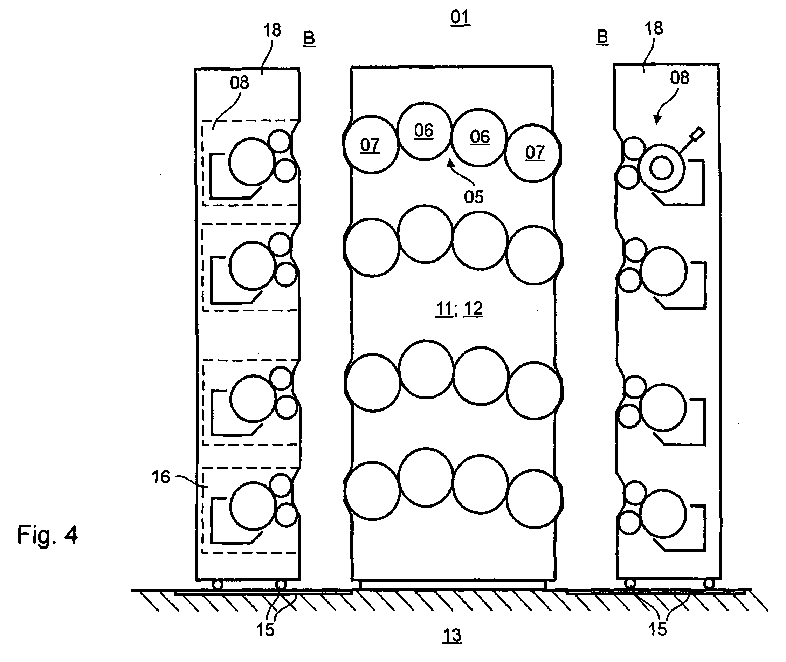

Wie zu Fig. 2 und 3 beschrieben kann die Druckeinheit 01 in einer vorteilhaften Ausführungen z. B. mittig, d. h. im Bereich der Doppeldruckstelle(n) 05, oder aber wie in Fig. 4 dargestellt, zwischen Formzylinder(n) 07 und Farbwerk(en) 08 betriebsmäßig teilbar ausgeführt sein.

Im oberen Doppeldruckwerk 03 der Fig. 2 sind exemplarisch Lageranordnungen 14 dargestellt, welche - z. B. zwecks An-/Abstellens - eine Bewegung des jeweiligen Zylinders 06; 07 in einer Richtung senkrecht zu dessen Rotationsachse ermöglicht. Dies kann prinzipiell eine Exzenterlageranordnung, eine Hebelanordnung oder aber in vorteilhafter Ausführung (s. u.) eine Linearlageranordnung 14, z. B. eine Lagereinheit 14 sein.

Wie ebenfalls in Fig. 2 und 4 exemplarisch angedeutet, können die Farbwerke 08 (und ggf. Feuchtwerke 09) als bereits mehrere Walzen aufweisende Module mit eigenem Gestell 16 bzw. einer Rahmenkonstruktion 16 ausgebildet und als vormontierbare Module in die Druckeinheit 01 einsetzbar ausgebildet sein. Wie unten näher erläutert können die Zylinder 06; 07 mit ihnen zugeordneten Lagereinheiten 14 als vormonierbare bzw. vormontierte Zylindereinheiten 17 ausgebildet sein. In vorteilhafter Ausführung können die Rotationsachsen der Druckwerkszylinder 06; 07 eines Druckwerks 04 in Druck-An im wesentlichen in einer gemeinsamen Ebene E liegend ausgeführt sein. Die Ebene E nimmt z. B. einen Winkel zwischen 76° und 87°, insbesondere zwischen 80° und 85° zur Ebene der einlaufenden Bahn 02 ein.

In den nachfolgenden Fig. 2 und 3 ist eine vorteilhafte Ausführung der Druckeinheit 01 dargestellt, wobei diese im Bereich ihrer Doppeldruckstelle(n) 05, betriebsmäßig, d. h. für Rüst- und Wartungszwecke (im Gegensatz zum Zerlegen bzw. einer Demontage), teilbar ausgeführt ist. Die beiden voneinander trennbaren Teile werden hier mit Teildruckeinheiten 01.1 und 01.2 bezeichnet.

Hierzu sind die Druckwerkszylinder 06; 07 der mehreren (vier) übereinander
angeordneten Doppeldruckwerke 03 rotierbar in bzw. an einem rechten und einem linken Gestell- bzw. Wandabschnitt 11; 12, z. B. Seitengestell 11; 12 in der Weise gelagert, dass die beiden Druckwerkszylinder 06; 07 eines selben Druckwerkes 04 dem selben Gestell- bzw. Wandabschnitt 11; 12 zugeordnet ist. Vorzugsweise sind die Druckwerkszylinder 06; 07 mehrerer, insbesondere aller die Bahn 02 auf der selben Seite bedruckenden Druckwerke 04 am selben Gestell- bzw. Wandabschnitt 11; 12 gelagert. Die Druckwerkszylinder 06; 07 können prinzipiell lediglich einseitig, d. h. fliegend an lediglich nur einer stirnseitigen Gestellabschnitte 11 gelagert sein. Vorzugsweise sind jedoch je Teildruckeinheit 01.1; 01.2 zwei stirnseitig zu den Zylindern 06; 07 angeordnete Gestellabschnitte 11; 12 vorgesehen. Die beiden voneinander trennbaren Teildruckeinheiten 01.1 und 01.2 weisen die jeweiligen Gestellabschnitte 11; 12 und Druckwerke 04 (Druckwerkszylinder 06; 07 und Farbwerke 08 sowie ggf. Feuchtwerk 09) auf.

Die Teildruckeinheiten 01.1; 01.2 sind entlang einer Richtung senkrecht zur Rotationsachse der Zylinder 06; 07 aufeinander zu bzw. voneinander weg bewegbar, indem vorzugsweise eine von beiden raumfest (hier Teildruckeinheit 01.1), d. h. beispielsweise auf einem Boden 13 des Druckereiraumes, einem raumfesten Träger 13, einer Montageplatte 13 oder einem Montagerahmen 13 für die Druckeinheit 01 ortsfest, und die andere (hier Teildruckeinheit 01.2) bewegbar gegenüber dem Boden 13 bzw. Träger 13 bzw. Montageplatte 13 oder Montagerahmen 13 (im folgenden Träger 13) gelagert ist.

Hierfür sind die äußeren Gestellabschnitte 12 in zueinander korrespondierenden, in nicht dargestellten Lagerelementen des Gestellabschnitts 12 und des Trägers 13, z. B. gemeinsam eine Linearführung 15 bildend, gelagert. Diese können als in Schienen laufende Rollen oder aber auch als gleit- oder wälzkörpergelagerte einander zugeordnete Linearführungselemente ausgeführt sein.

Vorzugsweise sind die Wandabschnitte 11; 12 derart ausgebildet, dass sie in ihrer Betriebsstellung A (Fig. 2) auf ihrer einander zugewandten Seite paarweise im wesentlichen zueinander formkomplementär ausgebildet sind und zusammengefahren an ihren Trennlinien bzw. Stoßlinien dennoch eine im wesentlichen geschlossene Seitenfront bilden.

Fig. 3 zeigt eine Wartungsstellung B der Druckeinheit 01 (ohne die in Fig. 2 angedeuteten Lagereinheiten 14), wobei die Relativstellung der Teildruckeinheiten 01.1; 01.2 zueinander durch Bewegen der Gestellabschnitte 12 bewirkt ist. Die Relativstellung kann grundsätzlich in anderer Ausführung auch erreicht werden, indem beide Teildruckeinheiten 01.1; 01.2 bzw. deren Gestellabschnitte 11; 12 bewegbar gelagert sind.

In einer Variante (Fig. 4) einer teilbaren Druckeinheit 01 ist das Seitengestell 11; 12 nicht in der Weise teilbar, dass die Druckwerkszylinder 06; 07 an der Druckstelle 05 getrennt werden, sondern es sind die Druckwerkszylinder 06; 07 in bzw. an einem gemeinsamen Seitengestell 11; 12 nichtteilbar gelagert, während zu beiden Seiten die Farbwerke 08 aufnehmende Wandabschnitte 18 in eine Betriebsstellung A (nicht dargestellt) oder eine Wartungsstellung B (dargestellt) verbringbar sind. Die Teilung erfolgt hier zwischen Formzylinder 07 und Farb- sowie ggf. Feuchtwerk 08; 09.

Form- und Übertragungszylinder 07; 06 können in einer vorteilhaften
Formatausgestaltung mit einer Ballenbreite von mindestens vier, z. B. vier oder auch für besonders hohen Produktausstoß sechs, nebeneinander angeordneten stehenden Druckseiten im Zeitungsformat, insbesondere im Broadsheet-Format, ausgebildet sein. So kann eine doppelt breite Bahn 02 nebeneinander mit vier bzw. eine dreifach breite Bahn 02 nebeneinander mit sechs Zeitungsseiten bedruckt, und der Formzylinder 07 entsprechend mit vier bzw. sechs Druckformen, insbesondere mit ihren Enden zueinander fluchtend, nebeneinander belegt werden. In einer ersten Formatausgestaltung weisen die Zylinder 06; 07 einen Umfang auf, welcher im wesentlichen zwei hintereinander angeordneten Druckseiten in einem Zeitungsformat, insbesondere im Broadsheet-Format, entspricht.

In den Ausführungen der Druckeinheit 01 mit Formzylindern 07 doppelt großen Formats (zwei Zeitungsseiten im Umfang hintereinander) weist dieser vorteilhafter Weise zwei in Umfangsrichtung um 180° zueinander versetzte Kanäle zur Aufnahme der Druckformen auf, welche vorzugsweise über die gesamte wirksame Ballenlänge durchgehend ausgebildet sind. Der Formzylinder 07 kann dann mit vier bzw. sechs Druckformen nebeneinander und je zwei Druckformen hintereinander bestückt sein.

Der Übertragungszylinder 06 weist bei doppelt großem Format (zwei Zeitungsseiten im Umfang hintereinander) in einer Ausführung z. B. lediglich einen Kanal zur Aufnahme eines oder mehrerer nebeneinander angeordneter Drucktücher auf, welcher vorzugsweise über die gesamte wirksame Ballenlänge durchgehend ausgebildet ist. Der Übertragungszylinder 06 kann dann mit einem über die Ballenlänge durchgehenden und über im wesentlichen den vollen Umfang reichenden oder mit zwei oder drei über im wesentlichen den vollen Umfang reichenden Drucktüchern nebeneinander bestückt sein. In anderer Ausführung des doppelt großen Übertragungszylinders 06 kann dieser zwei oder drei Drucktücher nebeneinander aufweisen, wobei die jeweils benachbarten zueinander um 180° in Umfangsrichtung versetzt sind. Diese zueinander versetzten Drucktücher können in zwei bzw. drei Kanalabschnitten gehalten sein, welche ebenfalls in Längsrichtung des Zylinders 06 nebeneinander, die jeweils benachbarten Kanalabschnitte in Umfangsrichtung jedoch zueinander um 180° versetzt sind.
In anderer Ausführung können die Zylinder 06; 07 jedoch auch mit einfachem Umfang - eine Druckseite insbesondere Zeitungsseite in Umfangsrichtung - ausgebildet sein. Es kann der Übertragungszylinder 06 auch mit doppeltem Umfang und der Formzylinder 07 mit einfachem Umfang ausgebildet sein. In Druckwerken 04 für den Akzidenzdruck können die Zylinder 06; 07 auch mit Umfängen ausgebildet sein, welche vier liegenden Tabloidseiten entspricht.

Grundsätzlich kann das Farbwerk 08 in unterschiedlicher Weise ausgebildet sein. So kann es wie in Fig. 1 exemplarisch dargestellt z. B. als einzügiges Walzenfarbwerk 08 z. B. mit zwei Reibzylindern (z. B. aus dem Zeitungsdruck) oder aber wie exemplarisch in Fig. 2 und Fig. 3 gezeigt als Kurzfarbwerke 08 unter Verwendung einer Näpfchen oder Haschuren aufweisenden Rasterwalze ausgebildet sein. In nicht dargestellter Ausführung kann es auch als Walzenfarbwerk 08 mit zwei Farbzügen und z. B. drei Reibzylindern (z. B. aus dem Akzidenzdruck) ausgeführt sein.

Im Fall des Trockenoffset ist je Druckwerk 04 ein Farbwerk 08, jedoch kein Feuchtwerk 09 vorgesehen. Im Nassoffset wird durch das Feuchtwerk 09, strikt getrennt vom Farbwerk 08 oder aber parallel verbunden über eine Brückenwalze mit dem Farbwerk 08, Feuchtmittel zugeführt.

Das Feuchtwerk 09 kann als Feuchtwerk 09 mit wenigstens drei Walzen (in Fig. 1 dargestellt) ausgebildet sein. Vorzugsweise ist das Feuchtwerk 09 als sog. kontaktloses Feuchtwerk 09, insbesondere Sprühfeuchtwerk 09, ausgeführt. Wie ebenfalls in Fig. 2 und 3 angedeutet, können die Druckwerke 04 jeweils eine Handhabungsvorrichtung 19 zur Unterstützung des Druckformwechsels aufweisen. In bevorzugter Ausführung ist die Handhabungsvorrichtung 19 als zumindest teilautomatischer oder gar vollautomatischer Druckformwechsler 19 ausgeführt.

Unabhängig von der unten beschriebenen, vorteilhaften Ausbildung der Lagerung als Lagereinheit 14, deren spezieller Ausbildung und Anordnung, der Ankopplung des Antriebes an den Zylinder 06; 07 kann ein Druck-An-Stellen von Druckwerkszylindern 06; 07 bzw. zumindest ein Druck-An-Stellen im Rahmen des Voreinstellens eines wegbegrenzenden Anschlages mittels wenigstens eines Aktors 43 erfolgen, insbesondere durch einen kraftgesteuerten bzw. über eine Kraft definierten Aktor 43, mittels welchem zur Anstellung eine definierte bzw. definierbare Kraft F in Druck-An-Richtung auf den Zylinder 06; 07 bzw. dessen Zapfen 21; 22 bringbar ist. Die für die Farbübertragung und damit die Druckqualität u.a. entscheidende Linienkraft in den Nippstellen ist daher nicht durch einen indirekten Parameter wie z. B. einen gemessenen Abdruckstreifen, sondern durch das Kräftegleichgewicht zwischen der Kraft F und der zwischen den Zylindern 06; 07 resultierenden Linienkraft F_{L} und das resultierende Gleichgewicht definiert.

Der in der vorstehenden Ausführung der Lagereinheiten 14 vorgesehene Aktor 43 ist dazu ausgebildet, einen für das An- bzw. Abstellen geeigneten Stellweg ΔS bereitzustellen und weist daher vorzugsweise einen wenigstens ΔS entsprechenden Hub auf. Der Aktor 43 ist zum Einstellen des Anstelldruckes aneinander angestellter Walzen bzw. Zylinder 06, 07 und/oder zur Durchführung des Druck-An-/-Ab-Stellung vorgesehen und entsprechend ausgebildet. Der Stellweg ΔS (bzw. Hub) beträgt beispielsweise mindestens 0,5 mm, für den Formzylinder 07 insbesondere mindestens 1 mm.

Zur Grundeinstellung eines Systems kann es daher in einer vorteilhaften Ausführung vorgesehen sein, dass zumindest ein Zylinder 06 (07) während eines Zeitraumes beim Einstellen - ohne wirksame Wegbegrenzung zur Druckstelle 05 hin - lediglich kraftgesteuert an den benachbarten Zylinder 06 (07) anstellbar ist. Vorteilhaft ist zumindest während eines bestimmten Zeitraumes des Einstellvorganges ein an der Druckstelle 05 beteiligter Zylinder 06 in einer definierten Lage, vorteilhaft in der durch das Kräftegleichgewicht gefundenen Anstelllage, fixierbar bzw. zumindest in Richtung der Druckstelle 05 hin wegbegrenzbar.

Im folgenden wird das Prinzip des kraftgesteuerten Anstellens (zumindest während des Einstellvorganges) an vorteilhaften Ausführungen für die Lagerung und die Aktuatorik erläutert.

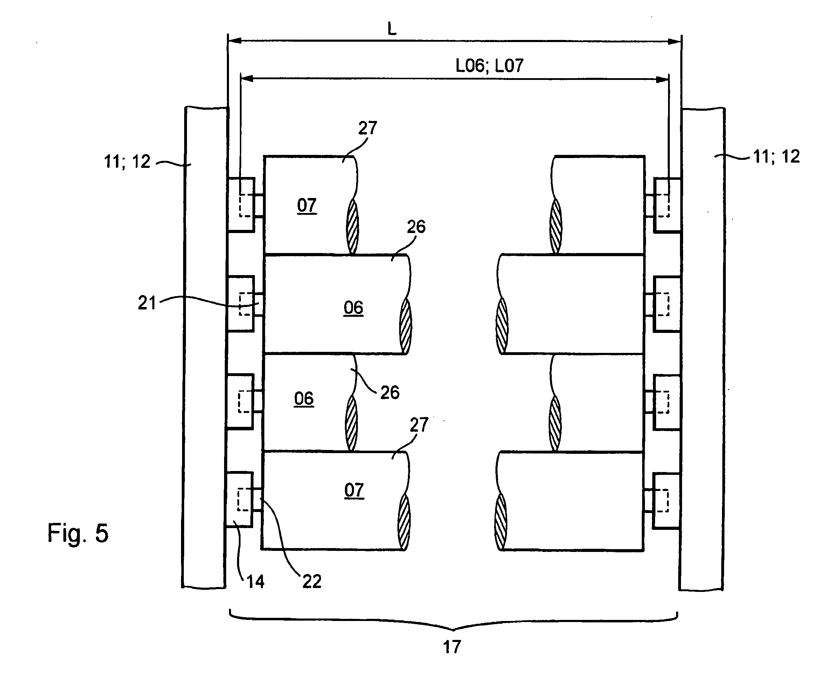

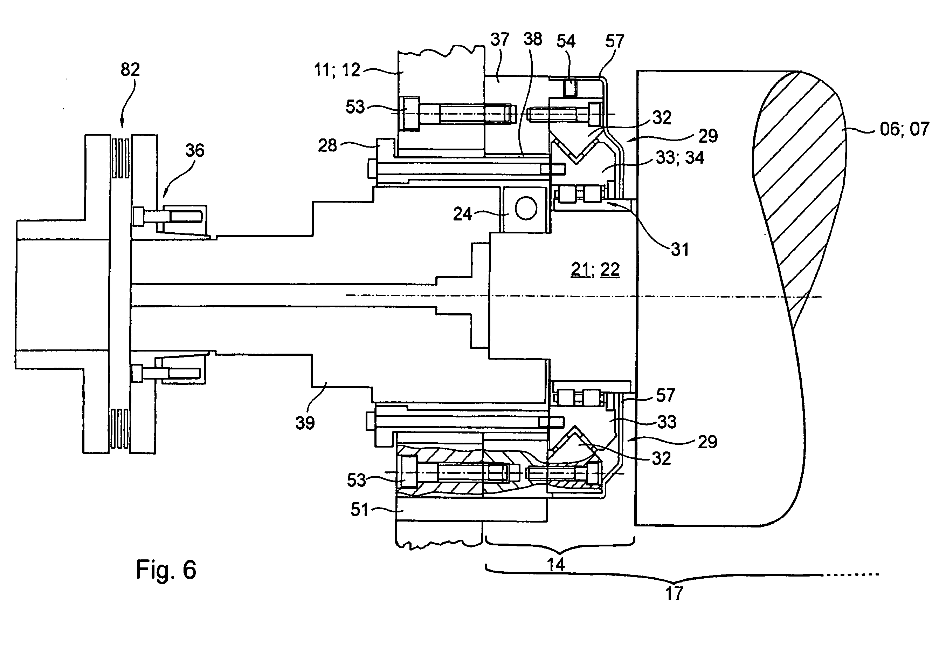

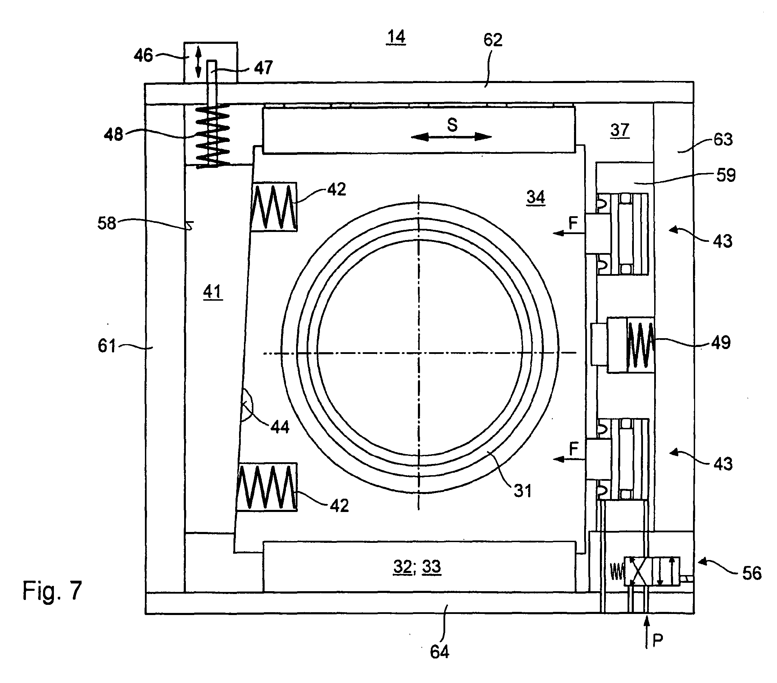

Fig. 5 zeigt in Draufsicht an den Seitengestellen in Lagereinheiten 14 rotierbar gelagerte Zylinder 06; 07. In der Ausführung mit als Zylindereinheiten 17 ausgeführten Modulen (siehe unten zu Fig. 6 und Fig. 7) weisen z. B. einen Zylinder 06; 07 mit Zapfen 21; 22 und einer bereits auf dem Zapfen 21; 22 vormontierten (vorgespannt und/oder voreingestellt) Lagereinheit 14 auf. Lagereinheit 14 und Zylinder 06; 07 erhalten bereits vor dem Einsetzten in die Druckeinheit 01 ihre fest definierte Lage zueinander und sind insgesamt in die Druckeinheit 01 einbringbar.

In einer vorteilhaften Ausführung der Druckeinheit 01 ist vorgesehen, die Zylinder 06; 07 in Lagereinheiten 14 an den Seitengestellen 11; 12 rotierbar zu lagern, welche die Flucht der Seitengestelle 11; 12 nicht durchdringen und/oder die Zylinder 06; 07 mit ihrem Ballen 26; 27 einschließlich ihrer Zapfen 21; 22 eine Länge L06; L07 aufweisen, welche kleiner oder gleich einer lichten Weite L zwischen den die Druckwerkszylinder 06; 07 zu beiden Stirnseiten tragenden Seitengestellen 11; 12 (Fig. 5). Bei den die Druckwerkszylinder 06; 07 zu beiden Stirnseiten tragenden Seitengestellen 11; 12 handelt es sich vorzugsweise nicht um seitlich derart offene Seitengestelle, sodass die Zylinder 06; 07 axial entnehmbar wären, sondern um Seitengestelle 11; 12 welche in axialer Richtung eine zumindest teilweise Überdeckung mit der Stirnseite der montierten Zylinder 06; 07 aufweisen, d. h. der Zylinder 06; 07, insbesondere dessen Lager (s. u.), ist stirnseitig durch die beiden Seitengestelle 11; 12 zumindest teilweise eingefasst.

Vorzugsweise weisen alle vier Druckwerkszylinder 06; 07 (mindestens jedoch drei) eine eigene Lagereinheit 14 auf, in welcher der An-/Abstellmechanismus bereits integriert ist. Es können auch für drei der vier Zylinder 06; 07 den An-/Abstellmechanismus aufweisende Lagereinheiten 14 und für den vierten Lagereinheiten 14 ohne An-/Abstellmechanismus vorgesehen sein.

Fig. 6 und 7 zeigen eine bevorzugt auf linearen Stellwegen basierende Lagereinheit 14 im schematischen Längs- und Querschnitt. Die den An-/Abstellmechanismus integrierende Lagereinheit 14 weist neben einem Lager 31, z. B. Radiallager 31, beispielsweise ein Zylinderrollenlager 31, zur rotatorischen Lagerung des Zylinders 06; 07, Lagermittel 32; 33 bzw. Lagerelemente 32; 33 für eine radiale Bewegung des Zylinders 06; 07 - zum Druck-An- bzw. Druck-Ab-Stellen ― auf. Hierzu weist die Lagereinheit 14 (nach Montage der Lagereinheit 14 gestellfeste) trägerfeste Lagerelemente 32 als auch die gegen diese bewegbaren Lagerelemente 33 auf. Die trägerfesten und bewegbaren Lagerelemente 32; 33 sind als zusammenwirkende Linearelemente 32; 33 und gemeinsam mit entsprechenden Gleitflächen oder dazwischenliegenden Wälzelementen insgesamt als Linearlager 29 ausgebildet. Die Linearelemente 32; 33 nehmen paarweise einen das Radiallager 31 aufnehmenden Lagerblock 34, z. B. Schlitten 34 zwischen sich auf. Lagerblock 34 und die bewegbaren Lagerelemente 33 können auch einteilig ausgeführt sein. Die trägerfesten Lagerelemente 32 sind an einem Träger 37 angeordnet, welcher insgesamt mit dem Seitengestell 11; 12 verbunden wird bzw. ist. Der Träger 37 ist beispielsweise als Trägerplatte 37 ausgeführt, welche beispielsweise zumindest auf einer Antriebsseite eine Ausnehmung 38 für den Durchgriff einer Welle 39, z. B. Antriebswelle 39 eines in Fig. 7 nicht dargestellten Zapfen 21; 22 eines Zylinders 06; 07 aufweist. Auch das Seitengestell 11; 12 auf der Antriebsseite weist vorzugsweise eine Aussparung bzw. einen Durchbruch für eine Antriebswelle 39 auf. Auf der der Antriebsseite gegenüberliegenden Stirnseite muss nicht zwangsläufig eine Ausnehmung 38 oder eine Aussparung im Seitengestell 12; 11 vorgesehen sein.

Vorzugsweise ist eine Länge des Linearlagers 29, insbesondere zumindest eine Länge des im montierten Zustand gestellfesten Lagermittels 32 des Linearlagers 29, in Stellrichtung S betrachtet kleiner als ein Durchmesser des zugeordneten Druckwerkszylinders 06; 07.

Die Ausbildung der Linearlager 29 in der Weise, dass die zusammen wirkenden Lagerelemente 32; 33 beide an der Baueinheit Lagereinheit 14 - und nicht ein Teil am Seitengestell 11; 12 der Druckeinheit 01 -vorgesehen sind, ermöglicht eine Vormontage und Vorjustierung bzw. Einstellung der Lagerspannung. Die vorteilhafte Anordnung der beiden den Lagerblock 34 umgreifenden Linearlager 29 ermöglicht ein spielfreies Einstellen, da sich die beiden Linearlager 29 in der Weise gegenüberliegen, dass die Lagervorspannung und die Lagerkräfte eine wesentliche Komponente in einer Richtung senkrecht zur Rotationsachse des Zylinders 06; 07 erfahren bzw. aufnehmen. Die Linearlager 29 sind somit in derjenigen Richtung einstellbar, auf welche es beim spielfreien Stellen der Zylinder 06; 07 auch ankommt. Die Anordnung der Linearlager 29 birgt auch insbesondere Vorteile hinsichtlich der Steifigkeit und Stabilität. Dies ist besonders im Zusammenhang mit einer Ausführung einer Ankopplung eines Stators (86, siehe unten) am Lagerblock 34 erforderlich.

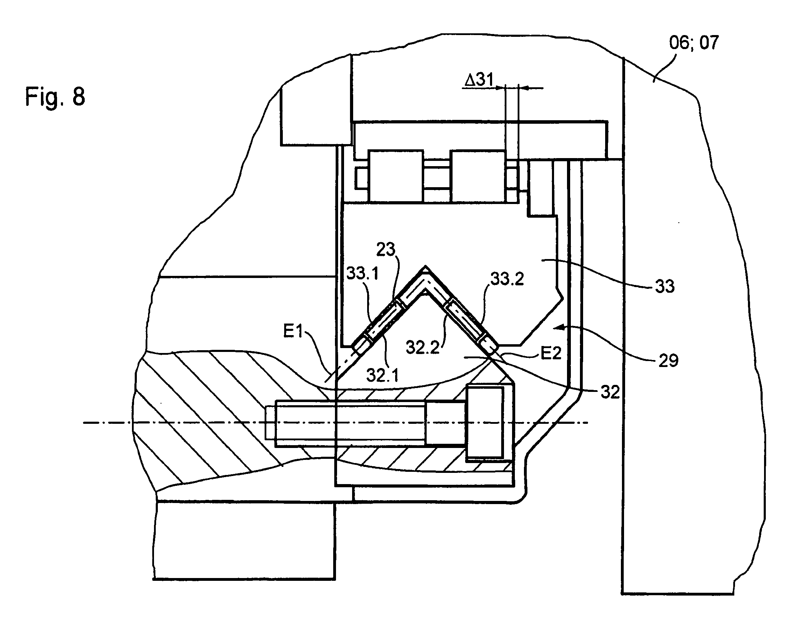

Die in Fig. 6 und 7 erkennbaren Linearlager 29 (32, 33) weisen somit jeweils Paarungen korrespondierender, zusammen wirkender Lagermittel 32 und 33 bzw. deren Führungs- oder Wirkflächenflächen, als Gleitflächen (nicht dargestellt) ausgebildet oder mit dazwischen angeordneten Wälzkörpern 23, auf. Wie in Fig. 8 dargestellt, ist in bevorzugter Ausführung zumindest eines der beiden, vorteilhafte beide Linearlager 29 einer Lagereinheit 14 derart ausgeführt, dass die beiden korrespondierenden Lagermittel 32 und 33 jeweils mindestens zwei Führungsflächen 32.1; 32.2; 33.1; 33.2 aufweisen, welche in zwei zueinander geneigten Ebenen E1; E2 liegen. Die beiden Führungsflächen 32.1; 32.2; 33.1; 33.2 (bzw. deren Ebenen E1; E2) des selben Lagermittels 32; 33 sind z. B. v-förmig zueinander, z. B. mit einem Zwischenwinkel zwischen 30 bis 60°, insbesondere zwischen 40 und 50°, geneigt. Die beiden Führungsflächen 33.1; 33.2; 32.1; 32.2 des zusammen wirkenden Lagermittels 33; 32 sind hierzu formkomplementär geneigt. Wenigstens eine der beiden Paarungen zusammenwirkender Führungsflächen 32.1; 32.2; 33.1; 33.2 liegt parallel zu einer Ebene E1, welche eine Komponente ungleich Null in radialer Richtung der Zylinderachse aufweist und dadurch den Bewegungsfreiheitgrad in eine rein axialer Richtung des Zylinders 06; 07 unterbindet. Vorzugsweise liegen beide Paarungen zu Ebenen E1; E2, welche beide eine Komponente ungleich Null in radialer Richtung der Zylinderachse, jedoch in umgekehrter Neigung gegen die Zylinderachse aufweisen und dadurch den Bewegungsfreiheitgrad in beide axiale Richtungen des Zylinders 06; 07 unterbinden. Eine Schnittlinie der beiden Ebenen E1; E2 verläuft parallel zur Stellrichtung S.

Ist, wie in Fig. 6 zu erkennen, der Lagerblock 34 zwischen den beiden, je zwei Paarungen zusammenwirkender Führungsflächen 32.1, 33.1 und 32.2; 33.2 aufweisenden Linearlagern 29 eingefasst, insbesondere mit einer Vorspannung vorgespannt, so weist der Lagerblock 34 nur noch einen einzigen Bewegungsfreiheitsgrad entlang der Stellrichtung S auf.

Die geneigten Wirk- bzw. Führungsflächen 32.1; 32.2; 33.1; 33.2 sind derart angeordnet, dass sie einer Relativbewegung der Lagerteile des Linearlagers 29 in axialer Richtung des Zylinders 06; 07 entgegenwirken, d. h. das Lager ist in axialer Richtung "abgebunden".

Vorzugsweise weisen die Linearlager 29 beider einem Zylinder 06; 07 stirnseitig zugeordneter Lagereinheiten 14 zwei derart zueinander angeordnete Paare zusammenwirkender Führungsflächen 32.1; 32.2; 33.1; 33.2 auf. In diesem Fall weist jedoch vorteilhafter Weise zumindest eines der beiden Radiallager 31 der beiden Lagereinheiten 14 ein geringfügiges Lagerspiel Δ31 in axialer Richtung auf.

In Fig. 6 und 8 weisen die Führungsflächen 32.1; 32.2 der gestellfesten Lagermittel 32 der Linearführung 29 in den dem Zapfen 21; 22 zugewandten Halbraum. Die gestellfesten Lagermittel 32 umgreifen hier den zwischen ihnen angeordnete Lagerblock 34. Die gestellfesten Führungsflächen 32.1; 32.2 der beiden Linearlager 29 umgreifen somit teilweise die Führungsflächen 33.1; 33.2 des Lagerblockes 34 hinsichtlich einer axialen Richtung des Zylinders 06; 07.

Zur korrekten Platzierung der Lagereinheiten 14, bzw. Zylindereinheiten 17 samt Lagereinheit 14, können Montagehilfen 51, z. B. Passstifte 51 im Seitengestell 11; 12 vorgesehen sein, an welchen die Lagereinheit 14 der vollständig montierten Zylindereinheit 17 ausgerichtet wird, bevor sie durch lösbare Haltemittel 53, z. B. Schrauben 53, oder gar stoffschlüssig durch Schweißen mit dem Seitengestell 11; 12 verbunden werden. Für die bereits vor dem Einsetzten in die Druckeinheit 01 vorzunehmende und/oder nach dem Einsetzten nachzujustierende Einstellung der Lagervorspannung in den Linearlagern 29 können entsprechende Mittel 54, z. B. Spannschrauben 54 vorgesehen sein (Fig. 6). Vorzugsweise ist die Lagereinheit 14 - zumindest zur Zylinderseite hin - durch eine Abdeckung 57 weitgehend gegen Verschmutzung geschützt bzw. gar gekapselt als Baueinheit ausgeführt.

In Fig. 6 ist schematisch der Zylinder 06; 07 mit Zapfen 21; 22 und einer vormontierten Lagereinheit 14 gekennzeichnet. Diese Baugruppe kann somit vormontiert zwischen die Seitengestelle 11; 12 der Druckeinheit 01 montagefreundlich eingesetzt und an hierzu vorgesehenen Stellen befestigt werden. Vorzugsweise für eine module Bauweise sind die Lagereinheiten 14 für Form- und Übertragungszylinder 07; 06 - ggf. bis auf die erlaubte betriebsmäßige Größe des Stellweges ― baugleich ausgeführt. Durch die vormontierbare Ausführung können die wirksame Innenfläche des Radiallager 31 und die äußere wirksame Mantelfläche des Zapfens 21; 22 zylindrisch anstelle von konisch ausgeführt sein, da sowohl die Montage der Lagereinheit 14 auf dem Zapfen 21; 22 als auch die Einstellung des Lagerspiels außerhalb der Druckeinheit 01 erfolgen kann. Die Lagereinheit 14 kann beispielsweise aufgeschrumpft werden.

Die als ganzes montierbare Baueinheit (Lagereinheit 14) ist vorteilhaft in der Art eines ggf. zum Teil offenen Gehäuses aus z. B. dem Träger 37, und/oder z. B. einem Rahmen (in Fig. 7 z. B. die vier die Lagereinheit 14 zu allen vier Seiten hin nach außen begrenzenden Seitenträgern 61; 62; 63; 64, z. B. Seitenplatten 61; 62; 63; 64 und/oder z. B. der Abdeckung 57 (Fig. 6). Innerhalb dieses Gehäuses bzw. dieses Rahmens sind der das Radiallager 31 aufweisende Lagerblock 34, die Linearlager 29 sowie in vorteilhafter Ausführung z. B. der Aktor 43 bzw. die Aktoren 43 untergebracht.

Die gestellfesten Lagerelemente 32 sind im wesentlichen parallel zueinander angeordnet und definieren eine Stellrichtung S (Fig. 7).

Ein Druck-An-Stellen erfolgt durch Bewegen des Lagerblocks 34 in Richtung Druckstelle 05 mittels einer durch wenigstens einen Aktor 43 auf den Lagerblock 34 aufgebrachten Kraft F, insbesondere durch einen kraftgesteuerten bzw. über eine Kraft definierten Aktor 43, mittels welchem zur Anstellung eine definierte bzw. definierbare Kraft F in Druck-An-Richtung auf den Lagerblock 34 bringbar ist (Fig. 7). Die für die Farbübertragung und damit die Druckqualität u.a. entscheidende Linienkraft in den Nippstellen ist daher nicht durch einen Stellweg, sondern durch das Kräftegleichgewicht zwischen der Kraft F und der zwischen den Zylindern 06; 07 resultierenden Linienkraft F_{L} und das resultierende Gleichgewicht definiert. In einer ersten, nicht eigens dargestellten Ausführung werden Zylinder 06; 07 paarweise aneinander angestellt, indem der Lagerblock 34 mit der entsprechend eingestellten Kraft F über den/die Aktor(en) 43 beaufschlagt wird. Sind mehrere (z. B. drei oder vier) einander in direkter Folge benachbarte jeweils paarweise zusammenwirkende Zylinder 06; 07 ohne eine Möglichkeit zur Fixierung oder Begrenzung des Stellweges mit einem rein kraftabhängigen Stellmechanismus ausgeführt, so lässt sich zwar ein bereits bzgl. der erforderlichen Drücke (Linienkräfte) eingestelltes System ab- und nachfolgend wieder korrekt anstellen, eine Grundeinstellung vorzunehmen ist aufgrund der sich z. T. überlagernden Reaktionen nur schwer möglich.

Zur Grundeinstellung eines Systems (mit entsprechenden Aufzügen etc.) ist es daher in einer vorteilhaften Ausführung vorgesehen, dass wenigstens die beiden mittleren der vier Zylinder 06 - oder anders ausgedrückt, zumindest sämtliche von den beiden äußeren Zylindern 07 verschiedenen Zylinder 06 wenigstens während eines Zeitraumes beim Einstellen in einer definierten Lage, vorteilhaft in der durch das Kräftegleichgewicht gefundenen Anstelllage, fixierbar bzw. zumindest wegbegrenzbar ist.

Besonders vorteilhaft ist eine Ausführung, wobei der Lagerblock 34 - auch während des Betriebes - zumindest in eine Richtung von der Druckstelle 05 weg gegen eine Kraft, z. B. Federkraft, insbesondere eine definierbare Kraft, bewegbar gelagert ist. Damit wird - im Gegensatz zur reinen Wegbegrenzung - einerseits eine maximale Linienkraft beim zusammen wirken der Zylinder 06; 07 definiert, und andererseits ein Nachgeben, beispielsweise bei einem Bahnriss mit anschließendem Wickler am Zylinder 06; 07, ermöglicht.

Zu einer der Druckstelle 05 zugewandten Seite weist die Lagereinheit 14 - zumindest während des Einstellvorgangs ― einen ortsveränderbaren Anschlag 41 auf, welcher den Stellweg zur Druckstelle 05 hin begrenzt. Der Anschlag 41 ist in der Weise ortsveränderbar, dass die als Anschlag wirksame Anschlagfläche 44 entlang der Stellrichtung S zumindest in einem Bereich varüerbar ist. Es ist somit in vorteilhafter Ausführung eine Justiervorrichtung (verstellbarer Anschlag 41) vorgesehen, mittels welcher die Position einer druckstellennahen Endlage des Lagerblockes 34 einstellbar ist. Zur Wegbegrenzung/Justage dient z. B. ein unten beschriebener Keilantrieb. Das Stellen des Anschlages 41 kann grundsätzlich manuell oder über ein als Aktor 46 ausgeführtes Stellmittel 46 erfolgen. Weiter ist in vorteilhafter Ausführung ein in Fig. 6 und 7 nicht dargestelltes Halte- oder Klemmmittel vorgesehen, mittels welchem sich der Anschlag 41 in der gewünschten Lage festlegen lässt. Weiter ist mindestens ein federnd wirkendes Element 42, z. B. Federelement 42, vorgesehen, welches auf den Lagerblock 34 eine Kraft F_{R} vom Anschlag 41 in eine Richtung von der weg aufbringt. D. h. das Federelement 42 bewirkt ein Druck-Ab-Stellen für den Fall, dass der Lagerblock 34 nicht in anderer Weise an der Bewegung gehindert wird. Ein Druck-An-Stellen erfolgt durch Bewegen des Lagerblocks 34 in Richtung Anschlag 41 durch wenigstens einen Aktor 43, insbesondere einen kraftgesteuerten Aktor 43, mittels welchem zur Anstellung wahlweise eine definierte bzw. definierbare Kraft F in Druck-An-Richtung auf den Lagerblock 34 bringbar ist. Ist diese Kraft F größer als die Rückstellkraft F_{R} der Federelemente 42, so erfolgt bei entsprechender räumlicher Ausbildung ein Anstellen des Zylinders 06; 07 an den benachbarten Zylinder 06; 07 und/oder ein Anstellen des Lagerblocks 34 an den Anschlag 41.

Im Idealfall ist die aufgebrachte Kraft F, die Rückstellkraft F_{R} und die Position des Anschlages 41 derart gewählt, dass zwischen Anschlag 41 und der Anschlagfläche des Lagerblockes 34 in Anstelllage keine wesentliche Kraft ΔF übertragen wird, dass beispielsweise gilt |ΔF|< 0,1*(F- F_{R}), insbesondere |ΔF|< 0,05*(F- F_{R}), idealerweise |ΔF| ≈ 0. In diesem Fall wird die Anstellkraft zwischen den Zylindern 06; 07 wesentlich über die durch den Aktor 43 anliegende Kraft F bestimmt. Die für die Farbübertragung und damit die Druckqualität u.a. entscheidende Linienkraft in den Nippstellen ist daher nicht primär durch einen Stellweg, sondern bei quasifreiem Anschlag 41 durch die Kraft F und das resultierende Gleichgewicht definiert. Grundsätzlich wäre nach Auffinden der Grundeinstellung mit den hierzu passenden Kräften F ein Entfernen des Anschlages 41 bzw. einer entsprechenden, lediglich während des Grundeinstellens wirksamen Fixierung denkbar.

Der Aktor 43 kann grundsätzlich als beliebiger, eine definierte Kraft F aufbringender Aktor 43 ausgeführt sein. Vorteilhaft ist der Aktor 43 als durch Druckmittel betätigbares Stellmittel 43, insbesondere als durch ein Fluid bewegbarer Kolben 43 ausgeführt. Vorteilhaft im Hinblick auf mögliches Verkanten ist die Anordnung mehrerer, hier zwei, derartiger Aktoren 43. Der oder die Aktoren 43 können entweder in den Seitenträgern 63 oder den Schlitten 34 integriert sein, oder aber sie können wie dargestellt in einem gesonderten Bauteil, z. B. einen Aktorelement 59, angeordnet und in die Lagereinheit 14 eingesetzt sein. Als Fluid kommt vorzugsweise wegen deren Inkompressibilität eine Flüssigkeit, z. B. ÖI oder Wasser, zum Einsatz. In anderer Ausführung kann der Aktor 43 auch als Piezo (piezoelektrische Kraftaufbringung) oder als Magnet (magnetische Kraftaufbringung), insbesondere Elektromagnet, ausgebildet sein.

Zur Betätigung der hier als Hydraulikkolben 43 ausgeführten Aktoren 43 entweder innerhalb oder außerhalb der der Lagereinheit 14 ein steuerbares Ventil 56 vorgesehen. Dieses ist beispielsweise elektronisch ansteuerbar ausgeführt und stellt den Hydraulikkolben 43 in einer Stellung drucklos oder zumindest auf ein geringeres Druckniveau, während in anderer Stellung der die Kraft F bedingende Druck P anliegt. Zusätzlich ist hier zur Sicherheit eine nicht bezeichnete Leckageleitung vorgesehen.

Um zu große An-/Abstellwege zu vermeiden und dennoch Bahnwickler abzusichern, kann auf der druckstellenfernen Seite des Lagerblocks 34 eine Wegbegrenzung durch einen ortsveränderlichen, kraftbegrenzten Anschlag 49 als Überlastsicherung 49, z. B. Federelement 49, vorgesehen sein, welche im betriebsmäßigen Druck-Ab, d. h. die Kolben 43 sind entlastet und/oder eingefahren, zwar als Anschlag 49 für den Lagerblock 34 in Druck-Ab-Stellung dienen, im Fall eines Bahnwicklers oder anderer überhöhter Kräfte von der Druckstelle 05 her jedoch nachgibt und einen größeren Weg frei gibt. Eine Federkraft dieser Überlastsicherung 49 ist daher größer gewählt, als die Summe der Kräfte aus den Federelementen 42. Beim betriebsmäßigen An-/Abstellen ist daher ein lediglich sehr kurzer Stellweg, z. B. lediglich 1 bis 3 mm, vorsehbar.

Der Anschlag 41 ist in der dargestellten Ausführung (Fig. 7) als quer zur Stellrichtung S bewegbarer Keil 41 ausgeführt, wobei beim Bewegen desselben die Position der jeweils wirksamen Anschlagfläche 44 entlang der Stellrichtung S variiert. Der Keil 41 stützt sich beispielsweise an einem trägerfestem Anschlag 58 ab. Der trägerfeste Anschlag 58 ist hier z. B. durch einen Seitenträger 61 der Lagereinheit 14 gebildet.

Der hier als Keil 41 ausgeführte Anschlag 41 ist durch einen Aktor 46, beispielsweise ein druckmittelbetätigbares Stellmittel 46 wie einen mit Druckmittel betätigbaren Kolben 46 in einem Arbeitszylinder mit (doppeltwirkenden) Kolben über ein z. B. als Kolbenstange 47 ausgeführtes Übertragungsglied 47 oder durch einen Elektromotor über ein als Gewindespindel ausgeführtes Übertragungsglied 47, bewegbar. Dieser Aktor 46 kann entweder in beide Richtungen wirksam oder aber, wie hier dargestellt, als Einwegeaktor ausgeführt sein, welcher bei Aktivierung gegen eine Rückstellfeder 48 arbeitet. Die Kraft der Rückstellfeder 48 ist aus o. g. Gründen (weitgehend kraftfreier Anschlag 41) so schwach gewählt, dass der Keil 41 lediglich entgegen Schwerkraft oder Schwingungskräften in seiner korrekten Lage gehalten wird.

Grundsätzlich kann der Anschlag 41 auch auf andere Art (z. B. als zur Stellrichtung stellbarer und fixierbarer Stößel, etc.) in der Weise ausgeführt sein, dass er eine in Stellrichtung S variierbare, und - zumindest während des Einstellvorgangs - fixierbare Anschlagfläche 44 für die Bewegung des Lagerblockes 34 in Richtung Druckstelle 05 bildet. In nicht dargestellter Ausführung erfolgt ein Stellen des Anschlages 41 beispielsweise direkt parallel zur Stellrichtung S durch ein Antriebsmittel, beispielsweise einen mit Druckmittel betätigbaren Zylinder mit (doppelt wirkendem) Kolben oder einen Elektromotor.

In Fig. 2 ist am als Doppeldruckwerk 03 ausgeführten Druckwerk 03 schematisch je Zylinder 06; 07 eine am Seitengestell 11 angeordnete Lagereinheit 14 angedeutet. In einer vorteilhaften, hier dargestellten Ausführung bilden in Druck-An-Stellung die Rotationszentren der Zylinder 06; 07 eine gedachte Verbindungslinie bzw. -ebene E (im folgenden als "lineares Doppeldruckwerk" bezeichnet). Vorzugsweise schließen die Ebene E und die ein- bzw. auslaufende Bahn 02 einen von 90° abweichenden Innenwinkel zwischen 75 und 88°, insbesondere von 80 bis 86° ein. Die Lagereinheit 14 der Übertragungszylinders 06, insbesondere aller Zylinder 06; 07, sind im montierten Zustand in der in Fig. 2 dargestellten Ausführung am Seitengestell 11 derart angeordnet, dass deren Stellrichtungen S ― z. B. aus Gründen einer kraftdefinierten Druck-An-Einstellung ― mit der Verbindungsebene E maximal einen Winkel von 15° einschließt, z. B. einen spitzen Winkel von ca. 2° bis 15°, insbesondere 4 bis 10° miteinander bilden. Insbesondere von Vorteil im Hinblick auf die Montage ist diese Anordnung, wenn die Stellrichtung S horizontal und die Bahn 02 im wesentlichen vertikal verläuft.

In abgewandelter Ausführung (Fig. 1) eines winkelig (n- oder u-Druckwerk) angeordneten Doppeldruckwerkes 03 soll unter der Ebene E' die Verbindungsebene der die Druckstelle 05 bildenden Zylinder 06 und unter Ebene E" die Verbindungsebene zwischen Form- und Übertragungszylinder 07; 06 verstanden werden, und das oben genannte zum Winkel auf die Stellrichtung S wenigstens eines der die Druckstelle 05 bildenden Zylindern 06 bzw. den Formzylinder 07 und die Ebene E' bzw. E" bezogen werden.

Einer der die Druckstelle 05 bildenden Zylinder 06 kann auch ortsfest und betriebsmäßig nichtstellbar (ggf. jedoch justierbar) im Seitengestell 11; 12 angeordnet sein, während der andere entlang der Stellrichtung S, bewegbar gelagert ist.

Ein zum An-/Ab-Stellen betriebsmäßiger Stellweg entlang der Stellrichtung S zwischen Druck-Ab- und Druck-An-Stellung liegt z. B. beim Übertragungszylinder 06 bei 0,5 bis 3 mm, insbesondere bei 0,5 bis 1,5 mm, und beim Formzylinder 07 bei 1 bis 5 mm, insbesondere bei 1 bis 3 mm.

Bei Ausführung als lineares Doppeldruckwerk 03 ist die Ebene E gegen die Ebene der einlaufenden und auslaufenden Bahn 02 z. B. einen Winkel um 75° bis 88° bzw. 92 bis 105°, vorzugsweise einen Winkel um 80 bis 86° bzw. 96 bis 100°, auf jeweils einer Bahnseite (bzw. 96 bis 100° bzw.α 80 bis 86° auf der jeweils anderen Bahnseite) geneigt.

In einer anderen, nicht dargestellten Ausführung sind die Lagereinheiten 14 der Übertragungszylinders 06, insbesondere aller Zylinder 06; 07, im montierten Zustand am Seitengestell 11 derart angeordnet, dass deren Stellrichtungen S mit der Verbindungsebene E zusammenfallen. Sämtliche Stellrichtungen S des Druckwerkes 04 fallen damit zusammen und sind nicht voneinander beabstandet.

In einer Ausführungsvariante kann der Aktor 43 auch am Lageblock 34 integriert angeordnet sein und sich an der Seitenplatte 63 abstoßen. In einer weiteren Ausführungsfassung kann zusätzlich mindestens ein weiterer, bei Aktivierung von der Druckstelle 05 weg wirkender, Aktor vorgesehen sein. Dieser kann das Federelement 42 ersetzen oder unterstützen.

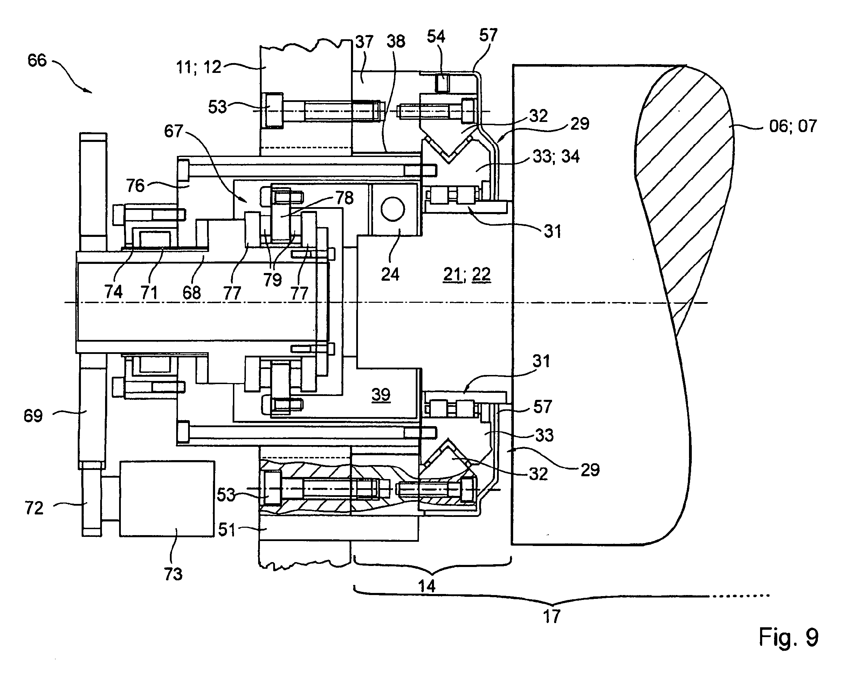

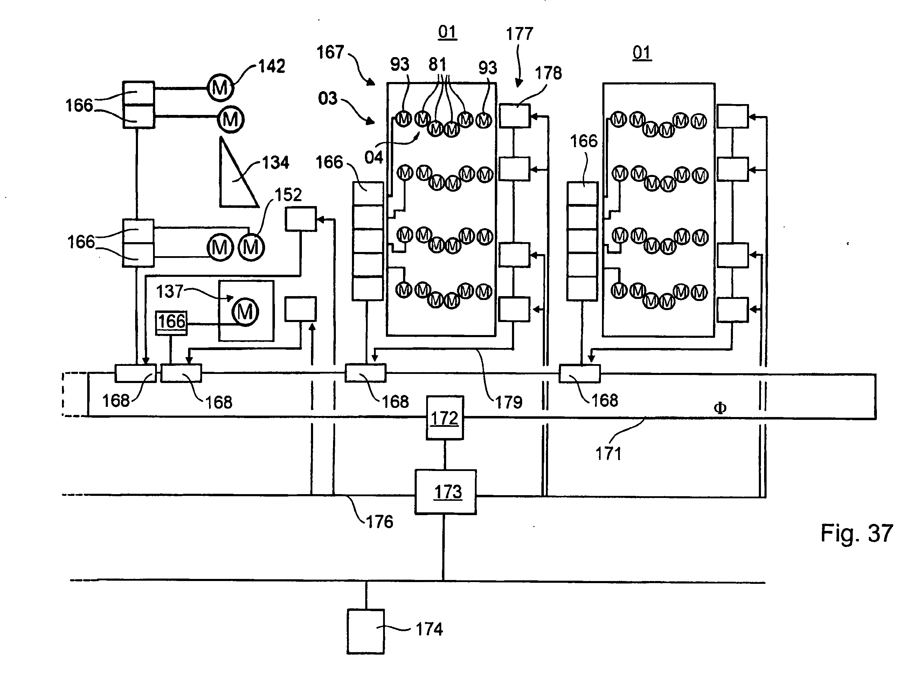

Fig. 9 zeigt ein Ausführungsbeispiel für die Ankopplung eines Axialantriebes zur Seitenregistereinstellung, z. B. auf der Antriebsseite gegenüberliegenden Seite des Zylinders 06; 07, insbesondere des als Formzylinder 07 ausgeführten Zylinders 07. Hierzu ist der Zapfen 21 vorzugsweise mit einer Vorrichtung zum axialen bewegen des Zylinders 07, d. h. mit einem Seitenregisterantrieb 66, z. B. ein Antriebsmotor 66, gekoppelt (Fig. 37). Die beispielsweise in der Art der Fig. 9 mit dem Zapfen 21 verbundene Welle 39, ist über ein Lager 67, z. B. Axiallager 67 mit einem Axialantrieb 68, 69, 72, 73 verbunden. Der Axialantrieb 68, 69, 72, 73 umfasst eine Spindel 68, insbesondere mit zumindest einem Gewindeabschnitt 71, ein mit der Spindel 68 drehfest verbundenes Stirnrad 69, ein Ritzel 72 sowie einen das Ritzel 72 antreibenden Motor 73. Der Gewindeabschnitt 71 wirkt mit einem lagerblockfesten Innengewinde 74, z. B. einem Innengewinde 74 eines mit dem Lagerblock 34 verbundenen Topfes 76, zusammen und bewirkt beim Verdrehen der Spindel 68 eine Axialbewegung derselben samt Welle 39 (über das Axiallager 67) und Zapfen 21. Das Axiallager 67 erlaubt eine relative Rotation zwischen Welle 39 und Spindel 68, ist jedoch bezüglich einer Axialrichtung des Zylinders 07 druck- und zugsteif ausgebildet. Dies erfolgt über eine an der Welle 39 angeordnete Scheibe 78, welche, beispielsweise über Wälzkörper 79 beidseitig gelagert, durch spindelfeste Anschläge 77 in beide Richtungen wegbegrenzt ist. Eine Verstellung des Seitenregisters erfolgt nun durch den Motor 73 über eine nicht dargestellte Steuereinrichtung. Hierbei kann der Motor 73 entweder selbst über eine - z. B. zuvor entsprechend geeichte - motorinterne Positionsrückmeldung verfügen, oder aber es erfolgt eine Positionsrückmeldung an die Steuerung über einen nicht dargestellten Sensor, z. B. ein entsprechend geeichtes Drehpotentiometer, welches an ein drehendes Bauteil des Axialantriebes gekoppelt ist.

Unabhängig von der speziellen Ausbildung des Lagers und/oder der Ausrichtung des Stellweges zur Ebene E bzw. E' oder E" (kleine Neigung oder aber nicht) und/oder der Teilbarkeit der Druckeinheit 01 und/oder der Ankopplung eines Axialantriebes werden im Folgenden besonders vorteilhafte Ausführungen zur Ankopplung eines Antriebsmotors 66 an den hier als Zylinder 06; 07 ausgebildeten Rotationskörper und/oder besonders vorteilhafte Ausbildungen des den Rotationskörper antreibenden Antriebsmotors 66 aufgezeigt:

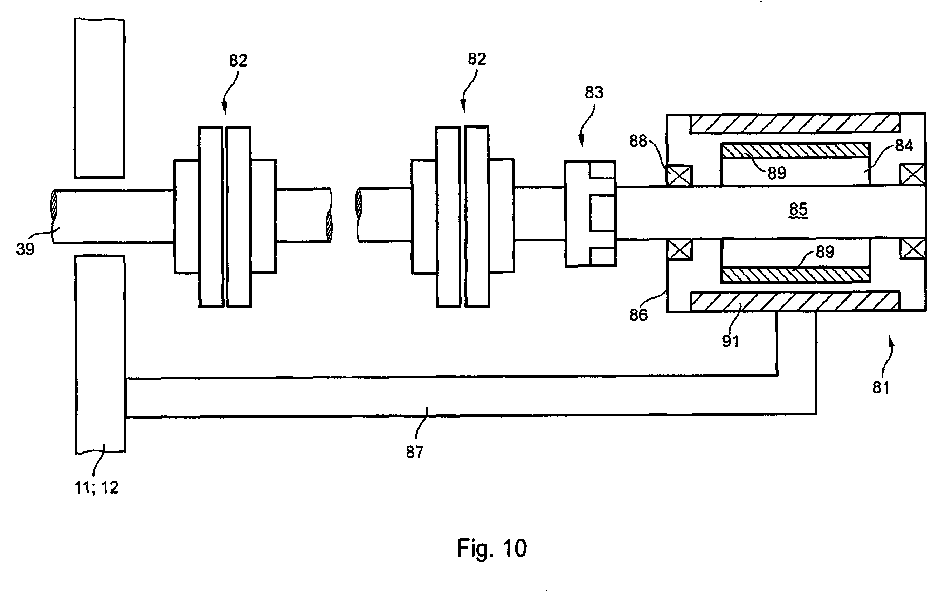

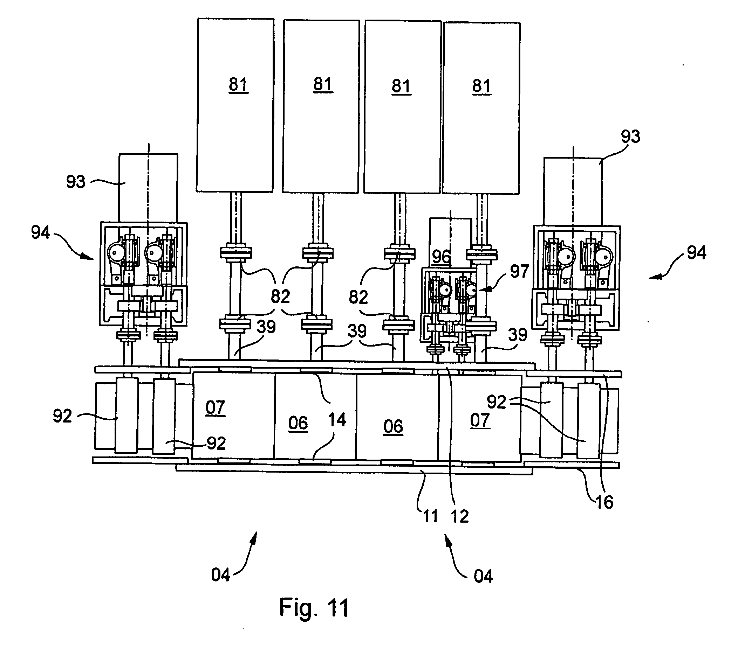

In einem ersten Ausführungsbeispiel für die Antriebsankopplung erfolgt, wie in Fig. 6 i.V.m. Fig. 10 bzw. 11 dargestellt, die Ankopplung des Zylinders 06; 07 bzw. des Zapfens 21; 22 auf einer Antriebsseite der Druckeinheit 01 an einen Antrieb, z. B. direkt zu einem Rotor eines Antriebsmotors 81 und/oder einem Antriebszug, über mindestens eine winkel- und/oder versatzausgleichende Kupplung 82. Der Antriebsmotor 81, insbesondere dessen Rotor, kann dann gestellfest angeordnet sein und muss der An-/Abstellbewegung des Zylinders 06; 07 nicht folgen.

Vorzugsweise ist der anzukoppelnde Antriebsmotor 81 in dieser ersten Ausführung für den Antrieb des Zylinders 06; 07 (bzw. rotierenden Bauteils) als Synchronmotor 81 und/oder permanentmagneterregter Elektromotor 81, insbesondere als permanentmagneterregter Synchronmotor 81, ausgebildet. Dieser Antriebsmotor 81 ist ein direkt angetriebener Rundmotor und weist einen Stator mit Drehstromwicklung sowie einen Rotor mit Permanentmagneten auf. Durch diese Ausbildung des Antriebsmotor 81, insbesondere die Permanentmagneten, wird eine hohe Leistungsdichte erreicht und macht daher die Verwendung von Getriebeübersetzungen unnötig. Damit entfallen Ungenauigkeiten im Antriebsstrang sowie Verschleiß mechanischer Elemente wie Getriebe.

Die Ankopplung des rotatorischen Antriebes an das rotierende Bauteil, hier den Zylinder 06, 07; erfolgt hierbei wie in Fig. 6 beispielhaft für die erste Ausführung dargestellt über die Welle 39, welche an ihrem zylindernahen Ende ein Ende des Zapfens 21; 22 umfasst und beispielsweise über eine Klemmeinrichtung 24 mit dem Zapfen 21; 22 drehsteif verbunden ist. Die Klemmeinrichtung 24 ist hier beispielsweise als z. T. geschlitztes Hohlwellenende ausgebildet, welches das Zapfenende (Zapfen 21; 22) umfasst und mittels einer Schraubverbindung in der Weise zusammen zu ziehen ist, dass eine reibschlüssige drehfeste Verbindung zwischen Zapfenende (Zapfen 21; 22) und Hohlwelleninnenfläche herstellbar ist. Die Ankopplung kann auch in anderer Weise, z. B. in Umfangsrichtung einen Formschluss aufweisend, ausgeführt sein. Auch ist es in einer vorteilhaften Variante möglich, die drehfeste Verbindung mit Spannelementen reibschlüssig herzustellen. Die Welle 39 ist durch eine Aussparung im Seitengestell 11; 12 geführt, welche ausreichend groß für die Bewegung der Welle 39 zusammen mit dem Lagerblock 34 bemessen ist und welche z. B. in der Art eines Langlochs ausgebildet ist. Als Schmutzschutz kann eine Abdeckung 28 mit einem das Langloch überdeckenden Kragen vorgesehen sein, welcher z. B. mit dem Lagerblock 34, nicht jedoch mit der Welle 39 verbunden ist.

An das zylinderferne Ende der Welle 39 ist wie in Fig. 6 dargestellt eine von ggf. mehreren in Serie angeordneten winkel- und/oder versatzausgleichende Kupplung 82, insbesondere Lamellenkupplung 82, durch eine drehfeste Verbindung 36, z. B. ein Spannelement 36, koppelbar.

In Fig. 10 ist schematisch ein als permanentmagneterregter Antriebsmotor 81, insbesondere Synchronmotor 81 ausgebildeter Antriebsmotor 81, dargestellt, dessen Rotor 84 z. B. über eine den Rotor 84 drehfest tragende Motorwelle 85 und eine weitere, drehfeste Kupplung 83, z. B. eine Klauenkupplung 83, an die Welle 39 gekoppelt ist. Der Stator 86 des Antriebsmotor 81 ist gestellfest über eine Halterung 87 mit dem Seitengestell 11; 12 verbunden. Der Rotor 84 ist im Stator 86 über Lager 88, insbesondere Radiallager 88 gelagert und ggf. zusätzlich gegen eine Axialbewegung gesichert. Die Axialbewegung im Fall des als Formzylinder 07 ausgebildeten Zylinders 07 wird durch die Kupplungen 82 aufgenommen. Der Rotor 84 bzw. Läufer des Synchronmotors 81 weist auf seinem Umfang (insbesondere sich in Umfangsrichtung abwechselnde) Pole aus Permanentmagneten 89 auf. Der Stator 86 weist den Permanentmagneten 89 gegenüberliegend Wicklungen 91 zur Erzeugung von Magnetfeldern durch elektrische Energie auf.

Der als permanentmagneterregter Synchronmotor 81 ausgebildete Antriebsmotor (z. B. Antriebsmotor 81) ist z. B. als feldschwächbarer Synchronmotor ausgebildet. Die Feldschwächung des Synchronmotors ist beispielsweise bis zu einem Verhältnis von 1:10 vorgesehen.

Er weist mindestens sechs Polpaare, vorteilhaft mindestens 12 Polpaare auf. Die Permanentmagnete 89 weisen vorzugsweise Selten-Erde-Werkstoffe auf. Insbesondere vorteilhaft ist die Ausbildung des Permanentmagneten 89 mit Neodym-Eisen-Bor.

Der als permanentmagneterregter Synchronmotor 81 ausgebildete Antriebsmotor (z. B. Antriebsmotor 81) weist z. B. ein Dauerstillstandsmoment im Bereich von 50 Nm bis 200 Nm, insbesondere für den Antrieb von Druckwerkszylindern 06; 07 von 50 bis 150 Nm bzw. für Rollenwechsler- oder Falzapparatantrieb von 100 bis 200 Nm auf. Vorteilhaft weist der als permanentmagneterregter Synchronmotor 81 ausgebildete Antriebsmotor (z. B. Antriebsmotor 81) ein maximales Drehmoment im Bereich von 200 bis 800 Nm, 200 bis 400 Nm für den Antrieb von Druckwerkszylindern 06; 07 bzw. für Rollenwechsler- oder Falzapparatantrieb von 600 bis 800 Nm auf.

Der als Synchronmotor 81 und/oder permanenterregten Motor 81 ausgebildete Antriebsmotor (z. B. Antriebsmotor 81) weist z. B. eine theoretische Leerlaufdrehzahl im Bereich von 500 U/min bis 600 U/min auf.

Dem als Synchronmotor 81 und/oder permanenterregten Motor ausgebildeten Antriebsmotor (z. B. Antriebsmotor 81) ist z. B. ein Frequenzumformer zur Drehzahlregelung vorgeschaltet. Der Stator 86 ist vorteilhaft mit 3-phasiger Drehstromwicklung ausgeführt, wobei sinusförmige Kommutierung des Stroms erfolgt.

Vorzugsweise ist am als Synchronmotor 81 und/oder permanenterregten Motor ausgebildeten Antriebsmotor (z. B. Antriebsmotor 81) ein unten genannter Sensor 106, z. B. Drehwinkelsensor 106 vorgesehen. Eine Rotationsachse des Drehwinkelsensors 106 kann vorteilhaft koaxial zur Rotationsachse des Rotors 84 des Motors (z. B. Antriebsmotor 81) angeordnet sein.

Vorteilhaft ist am als Synchronmotor 81 und/oder permanenterregten Motor ausgebildeten Antriebsmotor (z. B. Antriebsmotor 81) eine Kühleinrichtung, insbesondere ein Lüfterrad oder ein Flüssigkühlmittelkreislauf, vorgesehen.

Zusätzlich kann am als Synchronmotor 81 und/oder permanenterregten Motor ausgebildeten Motor (z. B. Antriebsmotor 81) eine Bremseinrichtung vorgesehen sein. Der Motor ist aber auch im Generatorbetrieb als Bremseinrichtung einsetzbar.

Weiter können Passmechanismen zur lagerichtigen Fixierung zwischen Stator 86 und Rotor 84 vorgesehen sein.

Das zur Ausbildung des permanentangeregten Synchronmotors 81 genannte kann teilweise oder insgesamt auf entsprechende Antriebsmotoren (138; 139; 140; 141; 142; 143; 152; 162; 163 s.u.) anderer, von Druckwerkszylindern 06; 07 verschiedenen rotierenden Bauteilen (133; 135; 136; 144; 145; 146; 147; 148; 153; 164 s.u.) übertragen werden.

Wie in Fig. 11 dargestellt, sind die Druckzylinder 06; 07 in vorteilhafter Ausführung jeweils einzeln durch einen Antriebsmotor 81 angetrieben. Der nötige Versatz beim An-/Ab- Stellen der Nippstellen wird hierbei durch die Kupplungen 82 ermöglicht.

In der Ausführung nach Fig. 11 schaffen ein Farbwerksgetriebe mit eigenem Antriebsmotor (für Rotation und Changierbewegung) und, im Fall des Nassoffset, ein Feuchtwerksgetriebe mit eigenem Antriebsmotor (für Rotation und Changierbewegung) eine Variabilität und Genauigkeit.

Exemplarisch ist in Fig. 11 der Antrieb des Druckwerkes 04 auf der linken Seite für die Verhältnisse des Trockenoffset (ohne Feuchtwerk), auf der rechten Seite für den Nassoffset (mit Feuchtwerk) dargestellt. Selbstverständlich sind die beiden Druckwerke 04 eines realen Doppeldruckwerkes 03 jedoch vom selben Typ. In der stirnseitigen Ansicht wurde aus Übersichtsgründen auf das Walzenschema verzichtet und lediglich die Antriebszüge mit Motoren dargestellt. In der Draufsicht ist das Antriebskonzept am Beispiel eines Farbwerks 08 mit zwei rotatorisch getriebenen changierbaren Walzen 92, z. B. Reibzylindern 92, und - im Fall des Nassoffset - exemplarisch eines Feuchtwerks 09 mit einem rotatorisch getriebenen, nicht dargestellten Reibzylinder dargelegt.

Das Farbwerk 08 weist jeweils einen eigenen, von den Druckwerkszylindern 06; 07 mechanisch unabhängigen Antriebsmotor 93 für den rotatorischen Antrieb auf. Durch diesen werden insbesondere die beiden Reibzylinder 92 des Farbwerks 08, z. B. über ein hier nicht weiter erläutertes Getriebe 94 rotatorisch angetrieben. Im Fall des Nassoffset (rechts) gilt im wesentlichen das selbe für den Antrieb des Feuchtwerks 09 mit einem Antriebsmotor 96 und einem Getriebe 97. Je Reibzylinder 92 des Farbwerks 08 und je Reibzylinder des Feuchtwerks 09 kann ein die axiale Changierbewegung erzeugendes Reibgetriebe angeordnet sein. Dieses kann jedoch grundsätzlich durch einen zusätzlichen Antriebsmotor angetrieben sein, oder aber wie dargestellt als ein die Rotationsbewegung in eine Axialbewegung umformendes Getriebe ausgebildet sein.

In Fig. 11 sind in vorteilhafter Ausbildung die Lager als Lagereinheiten 14 in oben genannter Ausführung für die Lagerung der vier Zylinder 06; 07 angedeutet. Die Wellen 39 sind beispielsweise durch entsprechende Aussparungen/Durchbrüche im Seitengestell 11; 12 geführt.

Die Kopplung zwischen gestellfestem Antriebsmotor 81 und Formzylinder 07 ist vorzugsweise zur Ermöglichung einer Seitenregistersteuerung/-regelung derart ausgeführt, dass sie auch eine axiale Relativbewegung zwischen Formzylinder 07 und Antriebsmotor 81 aufnimmt. Dies kann ebenfalls durch o. g. Lamellenkupplung 82 erfolgen, welche durch Verformung im Bereich der Lamellen eine axiale Längenänderung ermöglicht. Ein in der Weise der Fig. 9 dargestellter oder anders ausgeführter Axialantrieb

kann auf der anderen Gestellseite wie der rotatorische Antrieb vorgesehen sein.

Auch die angetriebenen Reibzylinder 92 des Farbwerks 09 können über wenigstens eine Winkelabweichungen ausgleichende Kupplung, mit dem Antriebsmotor 93 gekoppelt sein.

Die Antriebsmotoren 93 im Farbwerk 08 und/oder Feuchtwerk 09 können in der Weise der oben beschriebenen permanentmagneterregte Antriebsmotoren 93, insbesondere Synchronmotor 93, ausgebildet sein. Dimensionierung und Auslegung können sich jedoch ggf. zu o. g. unterscheiden.

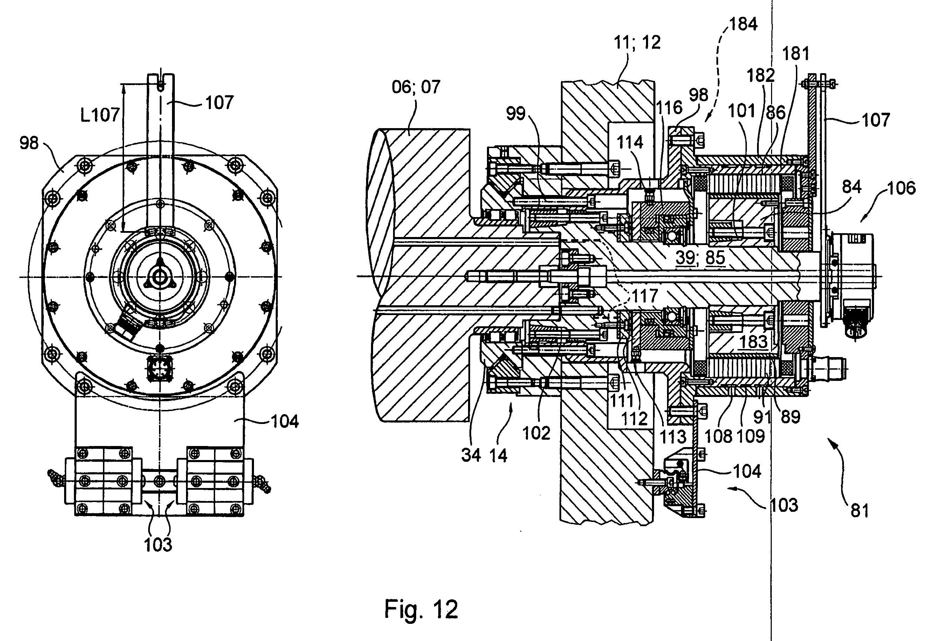

In einem zweiten Ausführungsbeispiel für die Antriebsankopplung (Fig. 12) erfolgt die Kopplung zwischen Rotationskörper, z. B. Zylinder 06; 07, und Antriebsmotor 81 direkt― d. h. ohne eine eine axiale Relativbewegung ermöglichende Kupplung und/oder ohne eine winkel- und/oder versatzausgleichende Kupplung - an die Welle 39. Diese Kopplung kann starr, aber lösbar ausgeführt sein. In dieser Ausführung ist der Antriebsmotor 81 z. B. nicht gestellfest, sondern zylinderfest angeordnet und wird beim An-/Abstellen - und ggf. bei Seitenregisterverschiebung - mit dem Zylinder 06; 07 mitbewegt. Im Fall von mittels einer Lageranordnung 14 bewegbaren Zylindern 06; 07 sind die Antriebsmotoren 81 je Druckwerkszylinder 06; 07 nicht am Seitengestell 11; 12, sondern direkt mit dem bewegbaren Lagerblock 34 starr verbunden, z. B. angeschraubt, und werden während der Stellbewegung mitbewegt.

Fig. 12 zeigt eine Ausbildung des Antriebes eines rotierenden Bauteils, insbesondere des an der Lagereinheit 14 gelagerten Zylinders 06; 07 mit einem als Synchronmotor 81 und/oder permanenterregten Motor ausgebildeten Antriebsmotor 81, d. h. mit einem Abschnitt von Permanentmagneten 89 am Rotor 84 ausgebildet.

Der Stator 86 ist hierbei beispielsweise direkt oder indirekt am beweglichen Teil der Lagereinheit 14, z. B. am bewegbaren Lagerblock 34 starr befestigt und zusammen mit diesem bewegbar. Im Fall einer anders gearteten Lageranordnung 14 ist der Stator 86 beispielsweise an der inneren Exzenterbuchse bzw. dem Hebel gelagert. Die die Lagereinheit 14 betreffenden Teile sind in Fig. 12 nicht nochmals mit Bezugszeichen versehen und können der Fig. 6 entnommen werden. Im Beispiel der Fig. 12 ist der die Wicklungen 91 aufweisende Stator 86 lösbar mit einem Haltemittel 98, z. B. einer Buchse 98, insbesondere Kragenbuchse 98 verschraubt, welche lösbar, z. B. durch Schrauben 99, mit dem Lagerblock 34 verbunden ist.

In der vorliegenden Ausführung ist die die Permanentmagneten 89 bzw. den Rotor 84 tragende Motorwelle 85 des Antriebsmotors 81 durch die Welle 39 gebildet bzw. umgekehrt die Welle 39 durch die Motorwelle 85. Motorwelle 85 und Rotor 84 können auch einteilig ausgebildet sein, sodass in diesem Fall die Motorwelle 85 die Permanentmagneten 89 an seinem Umfang trägt. Im Beispiel sind Motorwelle 85 und Rotor 84 als zwei Bauteile ausgebildet und z. B. durch ein Spannelement 101 bzw. Spannsatz 101 drehfest miteinander verbunden.

Die drehfeste Verbindung zwischen Welle 39 bzw. Motorwelle 85 und Zapfen 21; 22 ist hier durch einen Reibschluss, z. B. durch ein Spannelement 102 bzw. Spannsatz 102, hergestellt.

Im Ergebnis sind Rotor 84 und Zylinder 06; 07 (bzw. Zapfen 21; 22) miteinander in axialer und radialer Richtung starr und drehfest verbunden. Die Verbindung kann an unterschiedlichen Stellen jedoch lösbar ausgebildet sein. Der Rotor 84 bewegt sich also mit, wenn der Zylinder 06; 07, insbesondere der Formzylinder 07, axial oder radial bewegt wird. Der Stator 86 ist bzgl. einer Bewegung senkrecht zur Zylinderlängsachse zylinderfest angeordnet und bewegt sich bei An-/Abstellbewegungen mit.

Im Gegensatz zur Ausführung des Antriebsmotors 81 aus Fig. 10 sind hier vorzugsweise zwischen Stator 86 und Rotor 84 keine Radiallager 88 zur gegenseitigen Abstützung angeordnet.

Zur zusätzlichen Abstützung und/oder Verdrehsicherung des hier permanentangeregten Synchronmotors 81, insbesondere dessen Stators 86, kann eine Führung 103 vorgesehen sein, auf welcher der Motor gleitet. Die Führung 103 ist an die Kurvenform des Verstellweges der Lageranordnung 14 angepasst ("Ähnlichkeit") und ist hier als Linearführung 103 ausgebildet. Hierzu ist ein gestellfester Teil der Führung 103 mit dem Seitengestell 11; 12 und der Stator 86 beispielsweise über eine Stütze 104, z. B. ein Stützblech 104 mit dem korrespondierenden bewegbaren Teil der Führung 103 verbunden. Der Freiheitsgrad Linearführung 103 muss lediglich wenige Millimeter betragen. In der dargestellten Ausführung kann die Abstützung und/oder Verdrehsicherung aber auch entfallen, wenn die Lageranordnung 14, insbesondere das Linearlager 29, ausreichend steif und belastbar ausgebildet ist um sowohl das Drehmoment zwischen Stator 86 und Rotor 84 als auch das Kippmoment durch das Gewicht des Stators 86 (mit Buchse 98 etc.) aufzunehmen.

In bevorzugter Ausführung des Antriebsmotors 81, insbesondere als Antrieb für rotierende Bauteile mit Anforderung an Registerhaltigkeit in Umfangsrichtung wie es Druckwerkszylinder 06; 07 oder Zylinder eines Falzapparates darstellen (s. u.) ist der Antriebsmotors 81 als winkellagegeregelter Antriebsmotor 81 ausgebildet. Zur Steuerung bzw. Winkellageregelung ist ein mit dem Bauteil (Zylinder 06; 07) bzw. dem Antriebsmotor 81 drehfest verbundener Sensor 106, z. B. ein die Winkellage detektierender Sensor 106, insbesondere ein Winkellagegeber 106, erforderlich, über den die dem Regelkreis die Ist-Winkellage rückgemeldet wird. Im Fall eines Bauteils ohne Anforderung an Registerhaltigkeit (z. B. Farbwerk 08, Einzugwerk oder eine Zugwalze), jedoch mit Anforderung an eine vorgebbare Drehzahl, kann der Sensor 106 auch lediglich als die Drehzahl detektierender Sensor 106, insbesondere als Drehzahlgeber ausgeführt sein. Im in Fig. 12 vorliegenden Fall eines Zylinders 06; 07, kann der Sensor 106 grundsätzlich beliebig an einem mit dem Zylinder 06; 07 drehfest verbundenen Bauteil, z. B. auch am dem Antriebsmotor 81 gegenüberliegenden Zapfen 21; 22, angeordnet sein. In der vorteilhaften dargestellten Ausführung ist der Sensor 106, insbesondere dessen Rotor, jedoch koaxial zur Rotationsachse am zylinderfernen Ende der Motorwelle 85 angeordnet. Der Stator des Sensors 106 ist über eine Verdrehsicherung 107 am Stator 86 des Antriebsmotors 81 gegen Verdrehen gesichert. Die Verdrehsicherung 107 weist in radialer Richtung einen Freiheitsgrad auf, damit der Stator des Sensors 106 einem ggf. vorlegenden unrunden Lauf der Motorwelle 85 und damit des Sensorrotors folgen kann. Die Befestigung der Verdrehsicherung 107 erfolgt hierzu beispielsweise über ein radial verlaufendes Langloch, in welches ein Stift eingreift. Um aus einem unrunden Lauf resultierende Winkelfehler möglichst klein zu halten ist die Verdrehsicherung 107 als im Hinblick auf die radiale Richtung langer Hebel ausgeführt. Die Länge L107 vom Sensorstator zum Fixpunkt der Verdrehsicherung 107 entspricht z. B. mindestens einem Außendurchmesser, vorteilhaft mindestens dem zweifachen Außendurchmesser des Sensorrotors, um den Winkel einer ggf. bei Unwucht vorliegenden Pendelbewegung klein zu halten.

In vorteilhafter Ausführung weist der Antriebsmotor 81 (auch in Anwendung auf von Druckwerkszylindern 06; 07 verschiedenen rotierenden Bauteilen der Druckmaschine) eine Kühlung auf. In einfacher, nicht dargestellter Ausführung erfolgt die Kühlung durch ein Lüfterrad. Vorteilhaft ist jedoch ein Flüssigkühlmittelkreislauf vorgesehen, in welchem temperiertes Kühlmittel, z. B. Wasser, durch den Antriebsmotor 81 führbar ist. In Fig. 12 sind hierfür Anschlussbohrungen 108 im Gehäuse des Stators 86 vorgesehen, durch welche das Kühlmittel in Kühlmittelkanälen 109 zwischen dem Gehäuse und einem die Wicklungen 91 tragenden Träger führbar ist.

In der bislang zur Fig. 12 dargelegten Ausführung ist der Antriebsmotor 81 und seine Anbindung und Peripherie (Sensor 106 und/oder Kühlung und/oder Verdrehsicherung 107) sowohl für den als Formzylinder 07 als auch für den als Übertragungszylinder 06 ausgebildeten Zylinder 06; 07 vorsehbar. In einer speziellen Ausführung des Zylinders 06; 07, insbesondere Formzylinders 07, weist dieser jedoch Halte- und/oder Lösemittel zur Befestigung von Aufzügen, z. B. Druckformen (insbesondere Enden endlicher Druckplatten) auf, welche durch Druckmittel betätigbar ausführt sind. Vorzugsweise sind die Halte- und/oder Lösemittel selbstsichernd ausgebildet, sodass ein Halten ohne Aktivierung von Druckmittel und ein Öffnen bzw. Lösen durch Beaufschlagung mit Druckmittel erfolgt.

Der Zylinder 07 weist z. B. in axialer Richtung mehrere, z. B. vier oder gar sechs unabhängig voneinander betätigbare Halte- und/oder Lösemittel zur Befestigung bzw. zum Lösen ebenso vieler nebeneinander angeordneter Druckformen, z. B. Druckplatten, auf. Im Fall endlicher Druckplatten stecken die Enden der Druckplatten in Schlitzen auf der Zylindermantelfläche und werden durch die druckmittelbetätigbaren Haltemittel, vorzugsweise selbstsichernd, gehalten. Bei der Ausbildung endloser Druckformen, z. B. Druckformhülsen, sind z. B. am Zylindermantel Austrittsöffnungen für das Druckmittel vorgesehen, wobei die den Zylinder 07 umgreifenden Druckformen z. B. durch Beaufschlagung mit Druckmittel gelöst werden.

Der Zylinder 07 kann in Umfangsrichtung hintereinander mehrere, z. B. zwei unabhängig voneinander betätigbare Halte- und/oder Lösemittel zur Befestigung bzw. zum Lösen ebenso vieler in Umfangsrichtung hintereinander angeordneter Druckformen, z. B. Druckplatten, aufweisen. Insgesamt können dann z. B. zwei Gruppen zu je vier oder sechs Druckplatten auf dem Zylinder 07 anzuordnen sein. Der Wechsel der Druckplatten erfolgt jedoch gruppenweise, so dass in einer bestimmten Zylinderlage allenfalls die Haltemittel einer Gruppe von Druckplatten, z. vier oder sechs, betätigbar sein müssen.

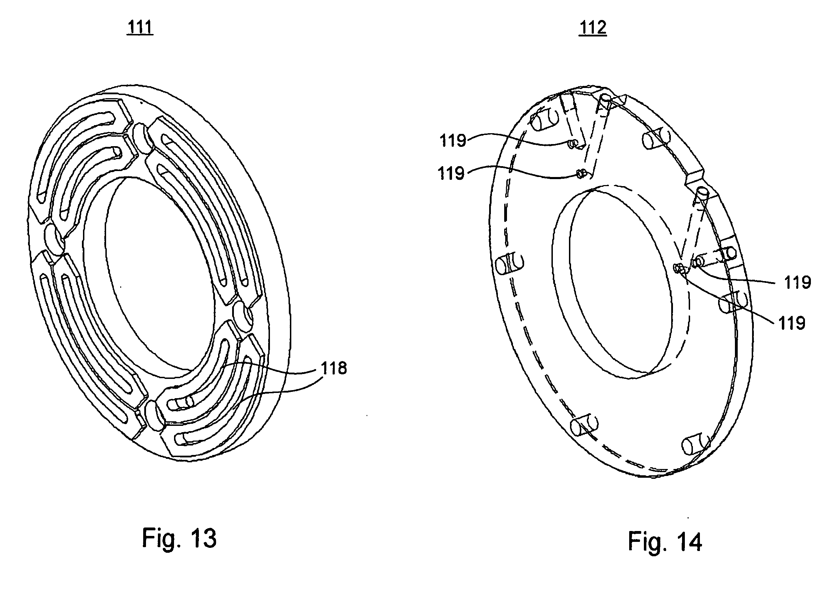

Zur definierten Versorgung der Mehrzahl von Haltemitteln im Zylinder 07 mit Druckmittel weist der Antriebsstrang einen Drehübertrager auf, durch welche mehrere Versorgungskanäle im Zylinder 07 unabhängig voneinander wahlweise mit Druckmittel beaufschlagbar sind. In einer vorteilhaften Ausführung ist die Drehdurchführung mit einer Schnittstelle zwischen rotierendem und drehfestem Bauteil ausgebildet, an welcher der zu übertragende Druckmittelstrom in axialer Richtung verläuft. Hierzu ist ein in der Art eines Kreisringes ausgebildeter Rotor 111 drehfest mit dem Zylinder 07 bzw. dessen Zapfen 21; 22 verbunden, welcher axial durch den Rotor 111 hindurchreichende Durchbrüche 118 aufweist (Fig. 13). Die Durchbrüche 118 stehen mit zu den einzelnen Haltemitteln führenden Leitungen 117 (strichliert) in Verbindung. Die Anzahl der räumlich am Rotor 111 voneinander getrennten Durchbrüche 118 entspricht mindestens der Anzahl der insgesamt unabhängig voneinander zu betätigenden Haltemittel. Der Rotor 111 wirkt an einer axial gerichteten, stirnseitigen Kontaktfläche mit einer gegenüberliegenden axial gerichteten, stirnseitigen Kontaktfläche eines drehfesten Stators 112 (Fig. 14) zusammen, welcher in seiner stirnseitigen Kontaktfläche Auslassöffnungen 119 in der Weise aufweist, dass sie je nach relativer Winkellage zwischen Stator 112 und Rotor 111 wahlweise in Deckung mit einer Einlassöffnung eines Durchbruchs 118 oder auch je nach Lage wahlweise in Deckung mit Einlassöffnungen unterschiedlicher Durchbrüche 119 verbringbar sind. Die Anzahl der Auslassöffnungen 119 entspricht mindestens der Anzahl von Haltemitteln bzw. Druckplatten einer Gruppe nebeneinander angeordneter Druckplatten, hier z. B. vier. Diese vier Auslassöffnungen 119 werden beispielsweise über vier Zuführungen 113 aus voneinander getrennten, nicht dargestellten Leitungen gespeist, welche jeweils wahlweise mit Druck beaufschlagbar sind. Um in der gewählten Relativlage des Zylinders 07 während des Beaufschlagens die Schnittstelle abzudichten, sind in vorteilhafter Ausführung Stator 112 und Rotor 111 relativ zueinander bewegbar und aneinander pressbar ausgebildet. In der vorliegenden Ausführung ist der Stator 112 auf der Welle 39 axial bewegbar gelagert und über einen ringförmigen Stempel 116 an den Rotor 111 andrückbar. Das Andrücken erfolgt z. B. durch Beaufschlagung eines ringförmigen Zwischenraumes mit einem Druckmittel, welches durch einen entsprechenden Anschluss 114 beaufschlagbar ist.

In einer Ausführung des Zylinders 06; 07, z. B. als Übertragungszylinder 06, ohne das Erfordernis einer Druckmittelversorgung kann der Drehübertrager mit den beschriebenen Bestandteilen entfallen und ggf. der Antriebsmotor 81 enger zum Zylinder 06; 07 hin gebaut werden.

In einer Variante zur in Fig. 12 dargestellten zweiten Ausführung ist der Stator 86 nicht starr mit dem Lagerblock 34 verbunden, sondern wird über Radiallager 88 (vergleichbar zu Fig. 10) auf der Motorwelle 85 getragen. Hier ist wenigstens eine Verdrehsicherung 103, 104, z. B. in der in Fig. 12 dargestellten Weise, erforderlich. Diese kann in axialer Richtung des Zylinders 06; 07 steif ausgebildet sein, wenn die Radiallager 88 zwischen Rotor 84 bzw. Motorwelle 85 und Stator 86 eine axiale Relativbewegung ermöglichen. In diesem Fall bewegt sich der Rotor 84 im gestellfesten Stator 86 axial, wenn der Zylinder 06; 07 axial bewegt wird.

Sind Rotor 84 bzw. Motorwelle 85 und Stator 86 jedoch gegen eine axiale Relativbewegung gesichert, so muss die Vorrichtung zur Verdrehsicherung 103, 104 auch einen Freiheitsgrad in axialer Richtung des Zylinders 06; 07 ermöglichend ausgeführt sein. In diesem Fall bewegt sich der Rotor 84 gemeinsam mit dem Stator 86 axial, wenn der Zylinder 06; 07 axial bewegt wird. Da es sich lediglich um wenige Millimeter handelt, kann dies in einer einfachen Ausführung beispielsweise durch einen langen Hebelarm, d. h. durch eine bzgl. des Abstandes zur Führung 103 lange Stütze 104 erfolgen, wobei die kleine axiale Bewegung durch Verformung der Stütze 104 aufgenommen wird. In einer zweiten Ausführung kann entweder die Führung 103 oder die Anbindung der Stütze 104 an den Stator 86 eine weitere Linearführung, jedoch mit einem Freiheitsgrad in axialer Richtung des Zylinders 06; 07 aufweisen. Dies kann beispielsweise durch Bolzen, z. B. am Seitengestell 11; 12, am bewegbaren Teil der Führung 103 oder am Stator 86, und eine entsprechende Bohrung bzw. Öse am korrespondierenden Bauteil, z. B. dem gestellfesten Teil der Führung 103, der Stütze 104 im Bereich der Führung 103 oder der Stütze 104 im Bereich des Stators 86 erfolgen.

In der in Fig. 12 dargelegten Ausführung war ein die Wicklungen 91 tragender Teil 181 des Stators 86 in axialer und radialer Richtung starr und drehfest, aber lösbar - z. B. über die dargestellten, jedoch in Fig. 12 nicht bezeichneten Schraubverbindungen - mit dem bewegbaren Teil der Lageranordnung 14 und beispielsweise mit einem Gehäuse 182 des Antriebsmotors 81 verbunden. Diese starre Verbindung 184 (in Fig. 12 insgesamt mit einem strichlierten Pfeil dargestellt) stellt dort eine insbesondere hinsichtlich einer axialen Richtung starre Verbindung dar und kann für nicht bewegbare Zylinder auch in radialer Richtung starr bezüglich des Seitengestells 11; 12 ausgebildet sein. Ein die Permanentmagnete 89 tragender Teil 183 des Rotors 84 war dort bzgl. einer axialen Relativbewegung starr mit dem Zylinder 06; 07 verbunden, sodass mit einer Axialbewegung des Zylinders 06; 07 - z. B. zur Einstellung des Seitenregisters - zwangsläufig eine axiale Relativbewegung zwischen Wicklungen 91 und Permanentmagnete 89 auftreten konnte.

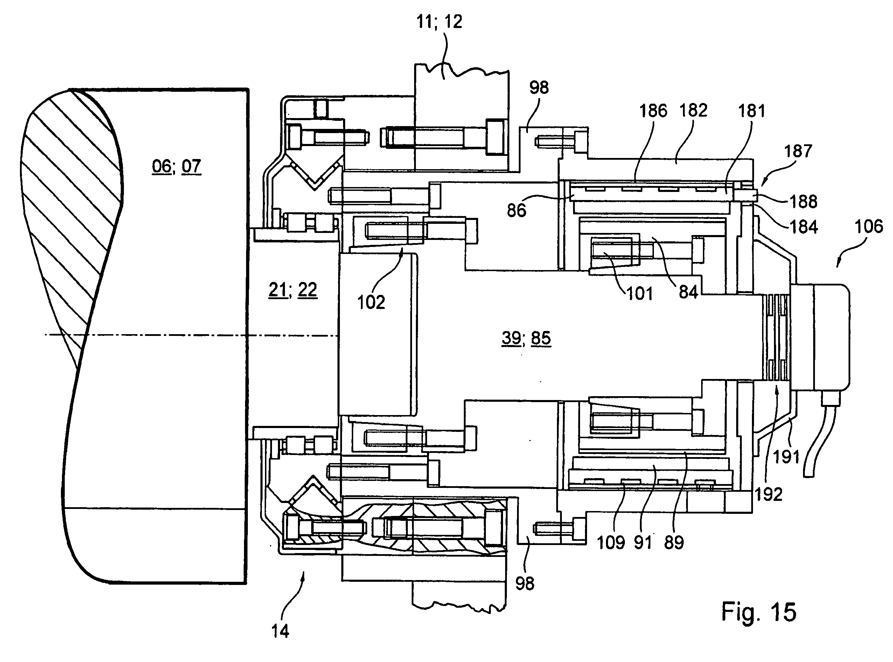

Im Folgenden (Fig. 15 bis Fig. 18) sind besonders vorteilhafte Ausführungsvarianten des Antriebsmotors 81 dargelegt, welche im Hinblick auf eine axiale Positionierung einen optimalen Arbeitspunkt zwischen Stator 86 und Rotor 84 zueinander gewährleisten. Die Figuren 15 bis 18 sind gegenüber der Fig. 12 vereinfacht dargestellt und können zusätzlich auch einen oben beschriebenen Drehübertrager und/oder eine oben beschriebene Abstützung und/oder Verdrehsicherung für den Antriebsmotor 81 aufweisen.

In einer ersten vorteilhaften Ausgestaltung des Antriebsmotors 81 ist der Stator 86 zwar drehfest, in axialer Richtung jedoch nicht gestell- oder lagerfest, sondern (zumindest in einer bestimmten Größenordnung für das Seitenregister) axial bewegbar angeordnet. Relativ zum Seitengestell 11; 12 und/oder einem zwecks An-/Abstallens beweglichen Teils einer Lageranordnung 14 ist er jedoch im Hinblick auf auftretende Drehmomente verdrehgesichert ausgebildet. Eine Kopplung zwischen Stator 86 und Rotor 84 was die axiale Bewegung anbelangt erfolgt hier nicht mechanisch, sondern z.B. über Magnetkräfte. Wird nun beispielsweise ein axial gemeinsam mit dem Zylinder 06; 07 bewegbarer Rotor axial bewegt, so ist über die magnetische Wechselwirkung der Stator zumindest teilweise mitführbar. Im Idealfall ist dieser in der Weise axial mitführbar, dass die Magneten von Stator und Rotor zueinander im optimalen Arbeitspunkt verbleiben können, d. h. der Stator relativ zum Rotor betrachtet im Extremfall ortsfest verbleiben kann.

Der axiale Freiheitsgrad des Stators 86 bzgl. des Seitengestells 11; 12 und/oder Lageranordnung 14 nebst drehfester Verbindung mit dem Seitengestell 11; 12 und/oder der Lageranordnung 14 andererseits (Verdrehsicherung) kann auf unterschiedlichste Weise realisiert sein. Ohne Einschränkung der Verallgemeinerung sind in Fig. 15, 16 und 17 drei erste vorteilhafte Ausführungsformen dargelegt. Hierbei besteht zwischen Statorwicklungen und Seitengestell 11; 12 und/oder Lageranordnung 14 bzw. Haltemittel 98) in axialer Richtung keine starre, sondern in gewissen Grenzen (z.B. einer axialen Relativbewegung im Bereich von mindestens 1 mm, d.h. mindestens ± 0,5 mm aus einer Mittellage heraus betrachtet) eine in axialer Richtung "weiche" Verbindung.

Im Gegensatz zu Fig. 12 besteht in Fig. 15 keine starre Verbindung (184) zwischen dem Stator 86 (bzw. des die Wicklungen 91 tragenden Teils) und dem Gehäuse 182. Der die Wicklungen 91 tragende Teil des Stators 181 ist im Gehäuse 182 axial bewegbar gelagert. Hierzu sind Gehäuse 182 und die Wicklungen 91 tragender Teil des Stators 181 z. B. mit zusammen wirkenden Gleitflächen 186 ausgebildet. Die Gewährleistung der einzuhaltenden radialen Relativlage bei gleichzeitiger Ermöglichung einer axialen Relativbewegung kann prinzipiell auch in anderer Weise als mit einer Gleitflächen 186 aufweisenden Gleitführung erfolgen. In dieser Ausführung ist das Gehäuse 182 (wie in Fig. 12) druck-/zugsteif und drehfest mit dem Haltemittel 98, d. h. letztlich mit der Lageranordnung 14 und/oder dem Seitengestell 11; 12 verbunden. Damit jedoch das Motordrehmoment abgefangen wird, ist der Stator 86 bzw. dessen Teil 181 drehfest mit der Lageranordnung bzw. dem Seitengestell 11; 12 verbunden. Dies erfolgt beispielsweise über eine oder mehrere bzgl. einer Drehrichtung formschlüssige Verdrehsicherungen 187 (z. B. Kupplung 187) zwischen dem Stator 86 bzw. dessen Teil 181 und einem gestell- oder lagerfesten Teil wie es z. B. das Gehäuse 182 darstellt. In Fig. 15 ist die drehfeste Verbindung durch einen oder mehrere am Stator 86 angeordnete Anschläge 188, z. B. Bolzen gebildet, welche(r) in einer Führung 189, z. B. Bohrung im Gehäuse, geführt ist bzw. sind. Dies kann auch in umgekehrter Weise ausgeführt sein. Die in Drehrichtung formschlüssige Verdrehsicherungen 187 weist innerhalb ihres axialen Bewegungsspielraum in dieser Ausführung keinen Formschluss in axialer Richtung, sondern z. B. lediglich einen Endanschlag, auf.

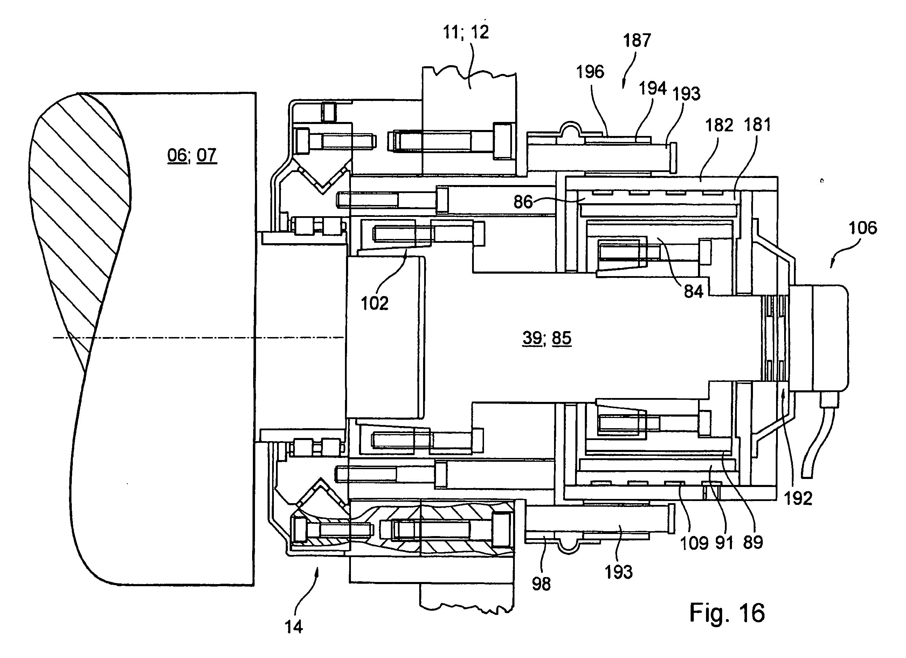

Der Sensor 106 kann entweder wie in Fig. 12 oder aber wie in Fig. 15 dargestellt über ein Haltemittel 191, z. B. eine Halterung oder sog. Dose, mit dem Gehäuse 182 verbunden sein. In Fig. 16 ist der Sensor 106 über das Haltemittel 191 im wesentlichen starr mit dem Gehäuse 181 verbunden, eine axiale Relativbewegung zwischen der Welle 39; 85 und dem Rotor des Sensors erfolgt über eine drehfeste bzw. drehsteife, jedoch eine axiale Relativbewegung aufnehmende Kupplung 192, z. B. eine Klauenkupplung, vorzugsweise jedoch über eine sog. Lamellen- oder Ganzmetallkupplung.

In der Variante zur Ausführung des axial bewegbaren Stators nach Fig. 16 ist das Gehäuse 182 nicht druck-/zugsteif mit der Lageranordnung 14 bzw. dem Seitengestell verbunden, sondern ist selbst axial bewegbar, jedoch drehfest geführt. Der die Wicklungen 91 tragende Teil 181 des Stators ist mit dem Gehäuse 182 z. B. starr verbunden, sodass sich Gehäuse 182 und der Stator 86 bzw. der Teil 181 gemeinsam axial bewegen. Das Gehäuse ist gegenüber der Lageranordnung 14 bzw. dem Seitengestell 11; 12 drehfest, jedoch axial (zumindest in gewissen Grenzen) bewegbar angeordnet. Dies erfolgt, z. B. wieder über eine formschlüssige Verdrehsicherungen 187. In Fig. 16 ist die drehfeste Verbindung (Verdrehsicherungen bzw. Kupplung 187) durch einen oder mehrere am Haltemittel 98 angeordnete, in Drehrichtung wirkende Anschläge 193, z. B. Bolzen 193, gebildet, welche(r) in einer gehäusefesten Führung 194, z. B. Bohrung 194, geführt ist bzw. sind. Die Führung 194 kann als Bohrung in einer mit dem Gehäuse 182 fest verbundenen Lasche 196 ausgebildet sein. Dies kann auch in umgekehrter Weise ausgeführt sein. Die Lasche kann als kragenförmiger Kreisring ausgebildet sein, in dem mehrere dieser Führungen 194 (oder in umgekehrter Weise Bolzen) angeordnet sein. Zwischen den axial relativ zueinander bewegbaren Teilen, hier dem Gehäuse 182 bzw. der Lasche 196 und dem Haltemittel 98 kann vorteilhaft eine Dichtung 197 oder anders geartete Abdeckung angeordnet sein. Auch hier weist die in Drehrichtung formschlüssige Verdrehsicherungen 187 innerhalb ihres axialen Bewegungsspielraum keinen Formschluss in axialer Richtung, sondern z. B. lediglich einen Endanschlag (siehe z. B. Verdickung am Ende der Bolzen 193), auf.

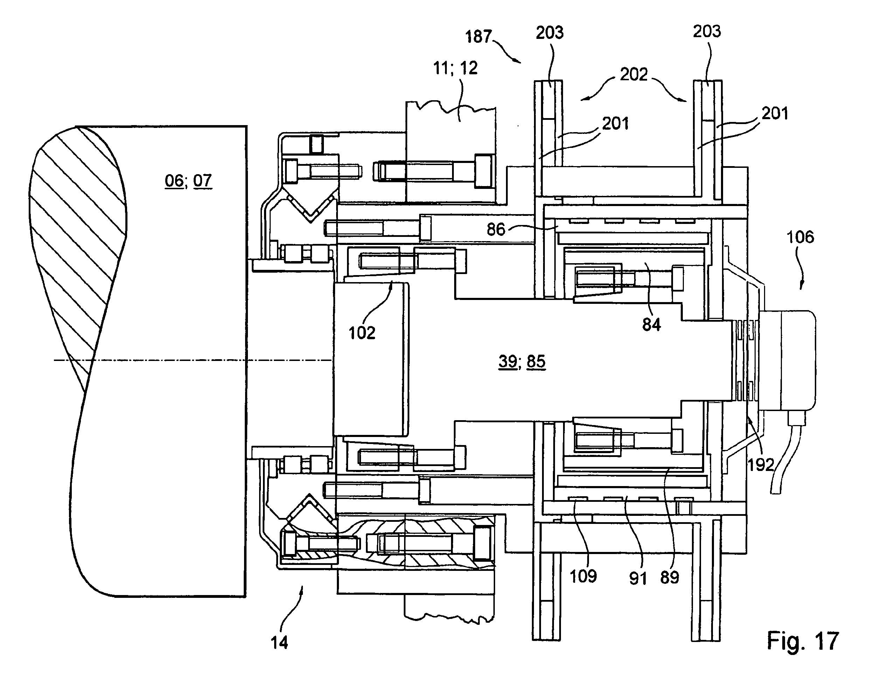

In Fig. 17 ist die Verdrehsicherung 187 als auf Verformung einzelner Lamellen 201 bzw. Lamellenpakete basierende Kupplung 187, z. B. in der Art einer Lamellen- oder Ganzmetallkupplung ausgebildet. Der die Wicklungen 91 tragenden Teil 181 des Stators bzw. das Gehäuse 182 ist über eine Gruppe von mindesten zwei in Umfangsrichtung beabstandete Federelemente 202 mit dem Haltemittel 98 bzw. dem Lagerblock 34 verbunden. Die Federelemente 202 weisen jeweils zumindest zwei miteinander - z.B. über ein Abstandsstück 203 - an einem Ende verbundene Lamellen 201 oder Lamellenpakete auf, deren andere Enden mit dem die Wicklungen 91 tragenden Teil 181 des Stators bzw. dem Gehäuse 182 einerseits und mit dem Haltemittel 98 bzw. dem Lagerblock 34 andererseits verbunden sind. Das Gehäuse 182 bzw. der Stator 112 kann nun relativ zum Haltemittel 98 bzw. dem Lagerblock axial bewegt werden, wobei die Relativbewegung von der Verformung der Federelemente 202 aufgenommen wird. Die Gruppe von Federelementen weist mindestens zwei dieser Federelemente 202 auf, welche vorzugsweise um 150° bis 210° in Umfangsrichtung zueinander versetzt sind. Hierdurch wird ein radiales Versetzen bei axialer Bewegung verhindert. In vorteilhafter Ausführung ist - wie in Fig. 17 dargestellt - eine zweite, in axialer Richtung zur ersten beabstandete Gruppe von Federelementen 202 angeordnet, wobei wieder ein Ende des Federelementes 202 "statorfest" und das andere "lagerblockfest" angeordnet ist. Hierdurch wird ein Kippen des Stators 112 bzw. des den Stator 112 aufweisenden Gehäuses 182 verhindert.

In den Ausführungen gemäß den Figuren 14 bis 17 sind die Wicklungen 91 somit zwar drehfest mit dem Lagerblock 34 , jedoch in axialer Richtung des zugeordneten Zylinders 06; 07 betrachtet relativ zum Lageblock 34 (in gewissen grenzen (z. B. mindestens 1 mm, insbesondere mindestens 2 mm) bewegbar verbunden. Die eine axiale Relativbewegung ermöglichende Verdrehsicherung 187 zwischen dem die Wicklungen 91 tragenden Teil 181 des Stators und dem Lagerblock 34 stellt eine drehfeste, jedoch eine axiale Relativbewegung aufnehmende Kupplung 187 dar, welche mit entsprechenden Anschlägen (z. B. mit geführten Anschlägen aus Fig. 15 und 16) oder wie in Fig. 17 dargestellt über eine drehfeste bzw. drehsteife, jedoch eine axiale Relativbewegung aufnehmende sog. Lamellen- oder Ganzmetallkupplung 187 mit entsprechenden Federpaketen, ausgebildet sein kann.

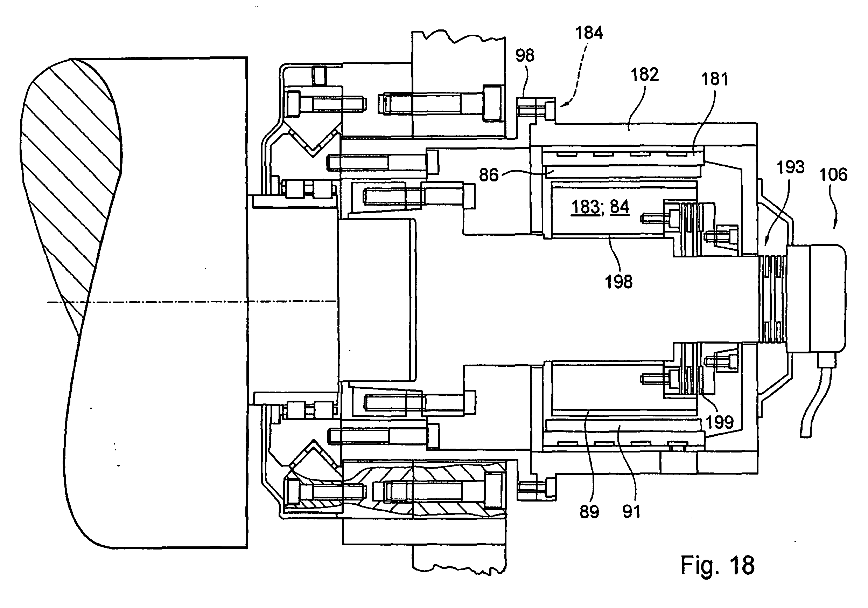

Umgekehrt kann in einer ebenfalls vorteilhaften Ausführung des Antriebsmotors 81 der Stator 86 in axialer Richtung gestell- oder lagerfest angeordnet sein, wobei der die Magneten tragende Teil 183 des Rotors 84 , z. B. Rotorkörper, zumindest in einer bestimmten Größenordnung relativ zu einer zylinderfesten Welle, d. h. im Ergebnis relativ zum Zylinder 06; 07, axial bewegbar ist (Fig. 18). Der die Magneten tragende Teil 183 des Rotors 84 ist jedoch im Hinblick auf zu übertragende Drehmomente gegenüber dem Zylinder 06; 07 bzw. der Welle 39; 85 drehfest, z. B. über eine Verdrehsicherung 199, ausgebildet. Der die Magneten tragende Teil 183 des Rotors 84 und die Welle 39; 85 können z. B. über Gleitflächen oder ähnlich wirkende Mittel in axialer Richtung relativ zueinander bewegt werden. Die eine axiale Relativbewegung ermöglichende Verdrehsicherung 199 zwischen Welle 39; 85 und Rotorkörper 183 kann entweder über entsprechende Anschläge (z. B. im Nut und Feder Prinzip oder mit zu Fig. 15 und 16 vergleichbaren Anschlägen) oder wie dargestellt über eine drehfeste bzw. drehsteife, jedoch eine axiale Relativbewegung aufnehmende Kupplung 199, z. B. eine Klauenkupplung, vorzugsweise jedoch über eine sog. Lamellen- oder Ganzmetallkupplung Kupplung, ausgebildet sein. Wird nun beispielsweise der Zylinder 06; 07 axial bewegt, so wird der Rotor 84 bzw. Rotorkörper 183 nicht zwangsweise axial mitbewegt, sondern kann über magnetische Wechselwirkung mit dem Stator 86 in der Weise axial ― im Extremfall ortsfest - verbleiben, dass die Magneten von Stator 86 und Rotor 84 zueinander im optimalen Arbeitspunkt verbleiben können.

Die dargelegten Ausführungsvarianten aus Fig. 15 bis 18 bzw. deren Prinzip ist soweit übertragbar auch auf nachfolgende Ausführungsbeispiele des Antriebsmotors 81 (bzw. andere Antriebsmotoren (s. u. 139; 140; 141; 142; 143; 162; 163) anzuwenden. Obwohl der Antriebsmotor 81 (bzw. andere) hierbei vorzugsweise als permanentmagneterregter Synchronmotor ausgebildet ist, kann er auch anstelle der Permanentmagneten 91 entsprechende Wicklungen zur elektrischen Bildung der Magnetfelder aufweisen.

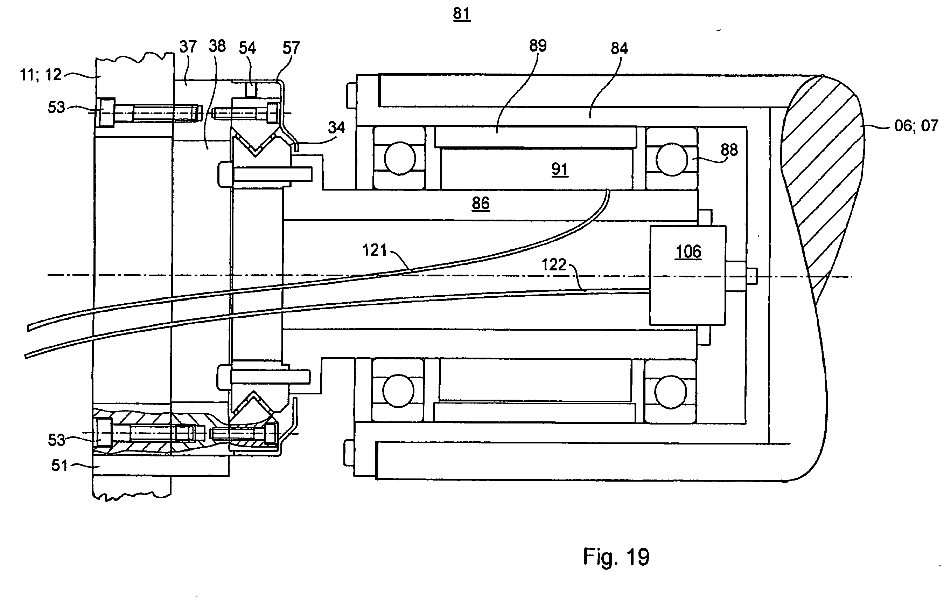

In einer dritten Ausführung für den Antrieb des rotierenden Bauteils, z. B. eines Zylinders 06; 07 oder einer Walze, ist der Antriebsmotor 81 zu dessen rotatorischem Antrieb als Außenläufermotor 81, insbesondere ebenfalls mit Permanentmagneten 89 am nun außenliegenden Rotor 84, ausgebildet (Fig. 19). Der Rotor 84 ist nun z. B. mit dem Mantelkörper des Zylinders 06; 07 verbunden oder durch diesen gebildet. Die Wicklungen 91 des Stators 86 werden beispielsweise durch elektrische Leitungen 121 mit Energie versorgt. Der Sensor 106 kann prinzipiell an unterschiedlichster Stelle drehfest mit dem Zylinder 06; 07 und/oder dem Rotor 84 verbunden sein, z. B. auch an der anderen Stirnseite des Zylinders 06; 07, und weist z. B. eine Signalleitung 121 zur Antriebssteuerung auf. Im Beispiel ist er mit dem Rotor 84 verbunden. Stator 86 und Rotor 84 sind über Lager 88, hier Radiallager 88, aufeinander abgestützt. Hierfür entfallen die Radiallager 31 im Lagerblock 34 der Fig. 6 bzw. 7. Der Stator 86 ist drehfest mit dem Lagerblock 34 verbunden und zusammen mit diesem, insbesondere linear, bewegbar. Im Fall von nicht bewegbaren rotierenden Bauteilen, wie z. B. Zylinder eines Falzapparates oder Zugwalzen, kann das Prinzip ohne die Anwendung der Lagereinheit 14 übertragen werden.

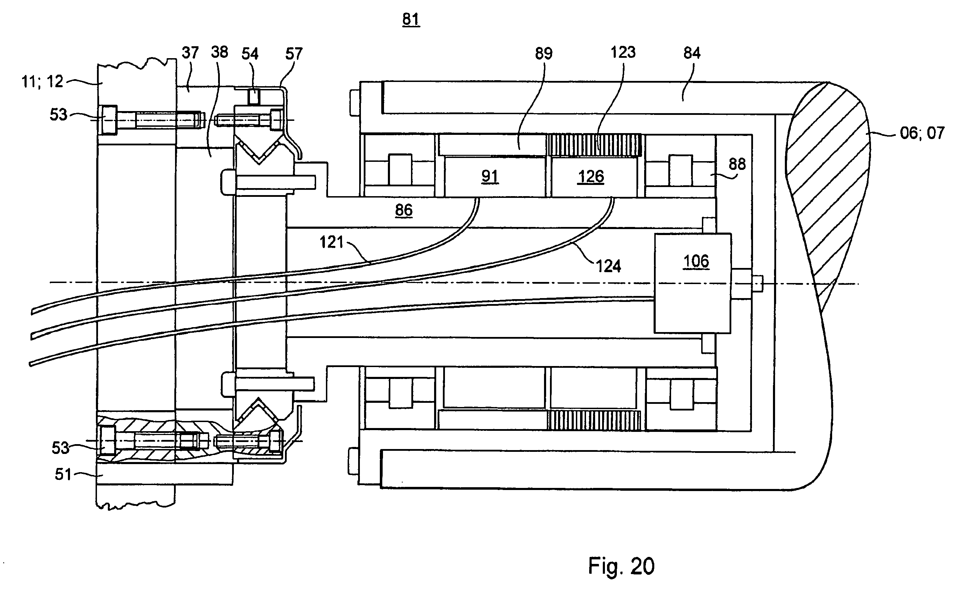

Fig. 20 zeigt eine vorteilhafte Variante, wobei insbesondere im Fall eines als Formzylinder 07 ausgebildeten Zylinders 07 auch eine Axialbewegung durch den Antriebsmotor 81 erfolgen soll. Hierzu weist der Rotor 84 einen in anderer Weise mit Permanentmagneten 123 belegten Abschnitt auf. Die Pole der Permanentmagnete 123 wechseln sich hier beispielsweise in axialer Richtung ab. Im Gegensatz hierzu wechseln sich z. B. die Pole im für den rotatorischen Antrieb vorgesehenen Abschnitt von Permanentmagneten 89 z. B. in Umfangsrichtung ab (auch in Fig. 10, 12 und 15). Dem für die Axialbewegung vorgesehenen Abschnitt von Permanentmagneten 123 sind gegenüberliegend von den Wicklungen 91 verschiedene Wicklungen 126 angeordnet, welche über eigene Signalleitungen 124 von einer Maschinensteuerung her zwecks Seitenregistereinstellung ansteuerbar sind. Die Lager 88 sind hier beispielsweise als eine axiale Relativbewegung ermöglichende Rollenlager 88 ausgebildet.

Sind, wie es bei den Druckwerkszylindern 06; 07 der Fall ist, mehrere nebeneinander angeordnete rotierende Bauteile jeweils durch Antriebsmotoren 81 anzutreiben, und so wird die Baugröße der Antriebsmotoren 81 durch die Abstände der Rotationsachsen der benachbarten Rotationskörper begrenzt, wenn diese sich in Bezug auf den Abstand zum zugeordneten Bauteil überschneiden. Die Motorengröße kann aber insbesondere bei der Ausbildung der Antriebsmotoren 81 als Direktantriebe, ohne Zwischenschaltung von Getrieben, u. U. größer als der Bauteildurchmesser, z. B. Zylinderdurchmesser, sein.

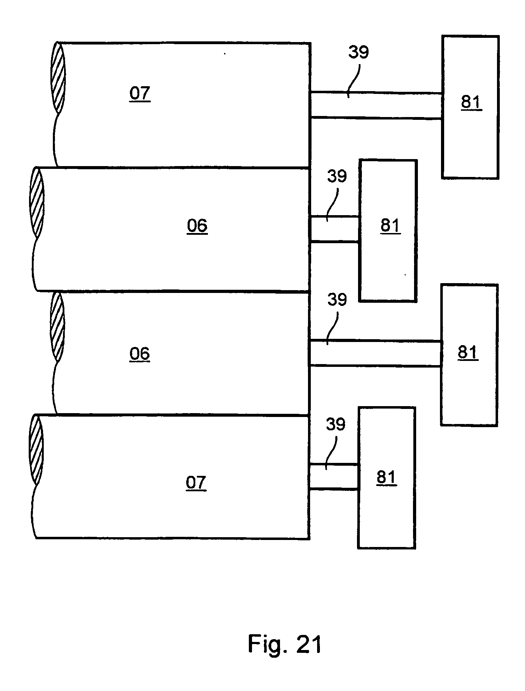

Eine erste mögliche Lösung ist es, wie schematisch in Fig. 21 dargestellt, die benachbarten Antriebsmotoren 81, z. B. in der Ausführung nach Fig. 10 oder 12, jedoch axial zueinander so zu versetzen, dass sie sich in keiner senkrecht zur Rotationsrichtung liegenden Ebene überschneiden. Hierzu können die Wellen 39 (siehe Fig. 6 bzw. 10) länger ausgebildet oder Zwischenwellen vorgesehen sein.

In einer vierten vorteilhaften Ausführung, insbesondere bei begrenztem Bauraum, z. B. beim Antrieb von Druckwerkszylindern 06; 07, kann der Stator 86 segmentiert, d. h. aus einem oder mehreren Segmenten gebildet sein, welches nicht den vollen Kreisumfang umschließt bzw. welche bei mehreren Segmenten in Summe nicht den gesamten Kreisumfang umschließen. Ein oder mehrere Statorsegmente 86' umschließen somit lediglich einen Umfangswinkel, welcher kleiner als 360°, z. B. kleiner 300°, insbesondere kleiner als 240°, ist. Sind zwei Segmente vorgesehen, so können diese je nach Bauraum am Kreisumfang beliebig verteilt sein und jeweils einen Umfangswinkel kleiner 150°, insbesondere kleiner 120° umschließen. Der aus dem mindestenseinen Statorsegment 86' bzw. den Statorsegmenten 86' gebildete Stator 86, bzw. die Bestückung mit Wicklungen 91, reicht nicht vollumfänglich sondern nur teilweise um den Kreisumfang. In vorteilhafter Ausbildung sind im Fall von zwei Statorsegmenten 86' diese jedoch sich gegenüberliegend, d. h. in Umfangsrichtung gleichverteilt, angeordnet.

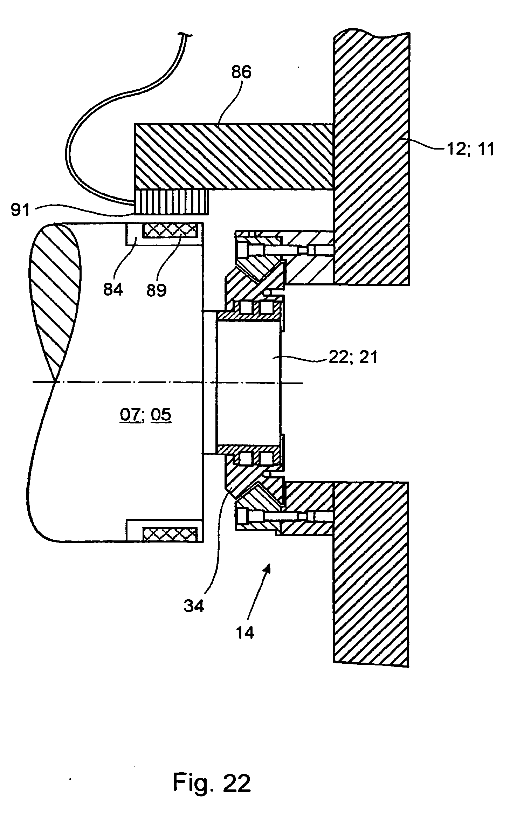

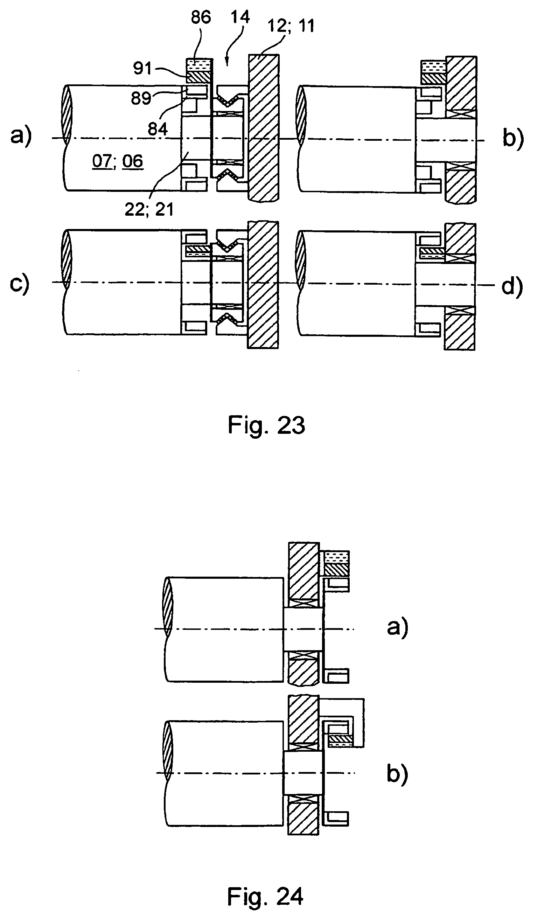

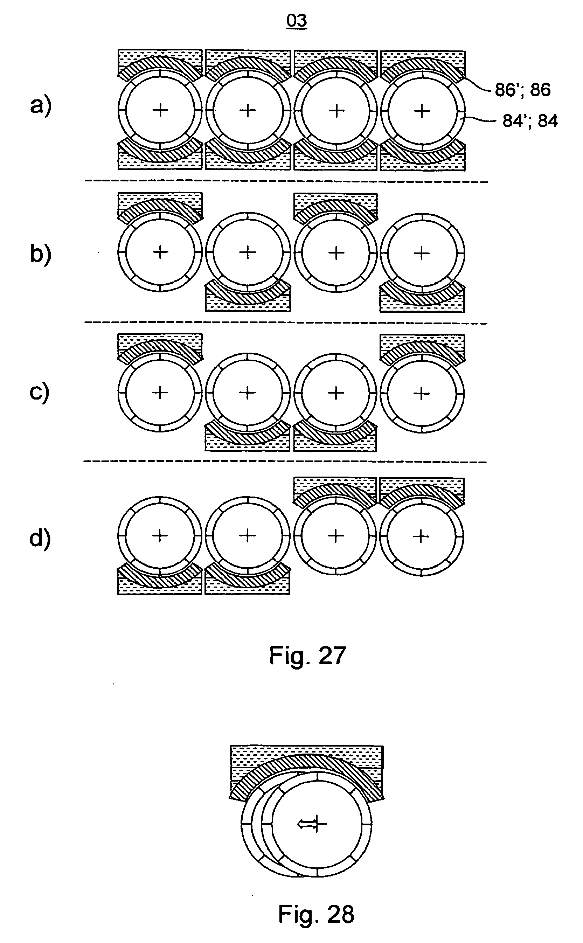

Eine erste von mehreren nachfolgenden Ausführungsvarianten dieser dritten Ausführung zur Ausbildung des Antriebes zeigt Fig. 22 detailliert. Hierbei verläuft eine Wirkfläche zwischen Stator 86 und Rotor 84, bzw. eine Wirkfläche zwischen den Permanentmagneten 89 des Rotors 84 und den Wicklungen 91 des Stators 86 parallel und z. B. koaxial zur Rotationsachse des Zylinders 06; 07 bzw. rotierenden Bauteils. Der Zylinder 06; 07 weist z. B. im Bereich seiner Mantelfläche oder einem stirnseitigen Anbau die Permanentmagneten 89 in Umfangsrichtung auf. Der die Wicklungen 91 aufweisende Stator 86 ist gestellfest außerhalb des Zylinders 06; 07 (bzw. einer Walze), jedoch zwischen den beiden Seitengestellen 11; 12 angeordnet. Der die Wicklungen 91 tragende Stator 86 reicht lediglich über ein Winkelsegment (siehe Fig. 23 bis 26). Die Permanentmagneten 89 können aber auch auf einem Zapfen 21; 22 oder einer stirnseitigen Verjüngung des Zylinders 06; 07 bzw. des Bauteils angeordnet sein. Da der Stator 86 hier am Seitengestell 12 (11) angeordnet ist, ist im Fall eines ggf. bewegbaren Zylinders 06; 07 die Formgebung des Stators 86 und/oder dessen Abstand zum Rotor 84 entsprechend zu berücksichtigen (siehe hierzu z. B. Fig. 28).

Das detaillierter an Fig. 22 erläuterte Prinzip für die segmentierten Statoren 86 ist anhand der Fig. 23 bis 26 schematisch in verschiedenen Varianten dargelegt. Bezugszeichen für die wesentlichen Bauteile wurden lediglich in Fig. 23a angegeben und können aufgrund der Formgebung und Füllmuster auf die übrigen Varianten in einfacher Weise übertragen werden.

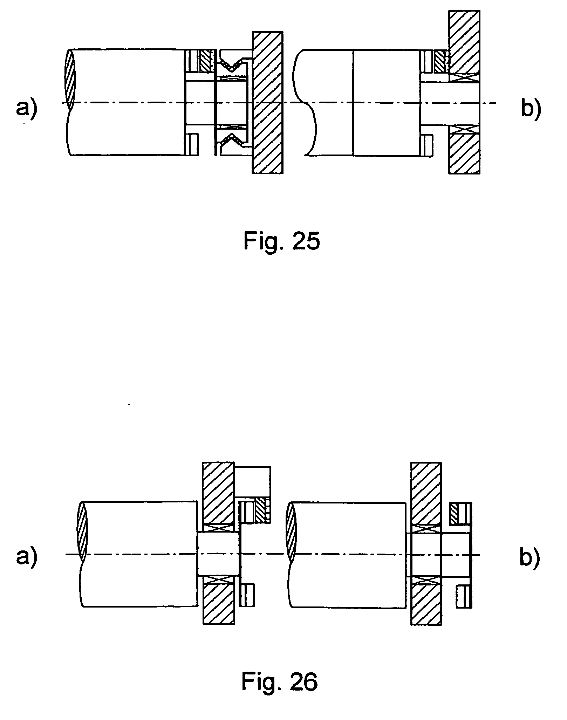

In einer ersten, in den Fig. 23 und 24 dargelegten Serie von Varianten, handelt es sich um Anordnungen von Stator 86 und Rotor 84, wobei eine Wirkfläche zwischen Stator 86 und Rotor 84, bzw. eine Wirkfläche zwischen den Permanentmagneten 89 des Rotors 84 und den Wicklungen 91 des Stators 86 parallel und z. B. koaxial zur Rotationsachse des Zylinders 06; 07 bzw. rotierenden Bauteils liegt (kurz: achsparallele Anordnung). In den Fig. 25 und 26 handelt es sich um Anordnungen von Stator 86 und Rotor 84, wobei eine Wirkfläche zwischen Stator 86 und Rotor 84, bzw. eine Wirkfläche zwischen den Permanentmagneten 89 des Rotors 84 und den Wicklungen 91 des Stators 86 senkrecht zur Rotationsachse des Zylinders 06; 07 bzw. rotierenden Bauteils liegt (kurz: achsvertikale Anordnung).

Dabei handelt es sich in Fig. 23 und 25 um Varianten, wobei Rotor 84 und Stator 86 auf der dem Zylinder 06; 07 bzw. rotierenden Bauteil zugewandten Seite des Seitengestells 12; 11, und in Fig. 24 und 26 um Varianten, wobei Rotor 84 und Stator 86 auf vom Zylinder 06; 07 bzw. rotierenden Bauteil abgewandten Außenseite des Seitengestells 12; 11 liegen. Die Fig. 23a, 23c und 25a stellen Varianten unter Berücksichtigung einer Lageranordnung 14 zum Bewegen des Zylinders 06; 07 bzw. eines bewegbaren Bauteils dar, während die Fig. 23b, 23d, 24a, 24b, 25b, 26a und 26b die Varianten für eine übliche Seitenwandlagerung der rotierenden Bauteile darlegen. Auf die figürliche Darstellung der Fig. 24a und 24b unter Berücksichtigung von Lageranordnungen 14 wurde hier verzichtet.

Die Fig. 23a, 23b und 24a stellen Antriebsmotoren 81 in der Bauweise eines Innenläufermotors dar, während Fig. 23c, 23d und 24b Außenläufermotoren darstellen.

In Ausführungen gemäß Fig. 23a, 23c und 25a ist der Stator 86 jeweils am bewegbaren Teil der Lageranordnung 14, insbesondere am Lagerblock 34, angeordnet.

Die segmentierte Ausführung der Statoren 86 bietet vielfältige Möglichkeiten zur raumsparenden Anordnung, wovon in Fig. 27 anhand eines Doppeldruckwerkes 03 vier Varianten am Beispiel der achsparallelen Anordnung dargestellt sind. Die Lehre ist entsprechend auf anders ausgeführte o. g. Varianten zu übertragen. Während in Fig. 27a die Antriebe der Zylinder 06; 07 jeweils zwei segmentartige Statoren 86, z. B. Statorsegmente 86', aufweisen, ist in den Fig. 27b bis 27d jedem Antrieb lediglich ein Statorsegment 86' zugeordnet.

Für den Fall, dass die Statoren 86 bzw. Statorsegmente 86' gestellfest und das rotierende Bauteil, insbesondere der Zylinder 06; 07 in einer Richtung senkrecht zur Rotationsachse bewegbar ausgebildet ist, ist das Statorsegment 86' so ausgeführt, dass eine Bewegung der Zylinder 06; 07 in Grenzen gewährleistet ist (Fig. 28). Dazu wird der Radius der wirksamen Statorfläche so gewählt, dass der Luftspalt auch in der Endlage der Zylinder 06; 07 nicht geschlossen wird. Dies ist beispielsweise bei Anordnungen nach Fig. 23b, 23d, 24a und 24b vorteilhaft, wenn das Lager zwischen Seitengestell 12; 11 und Zapfen 22; 21 als Exzenterlager ausgebildet ist.

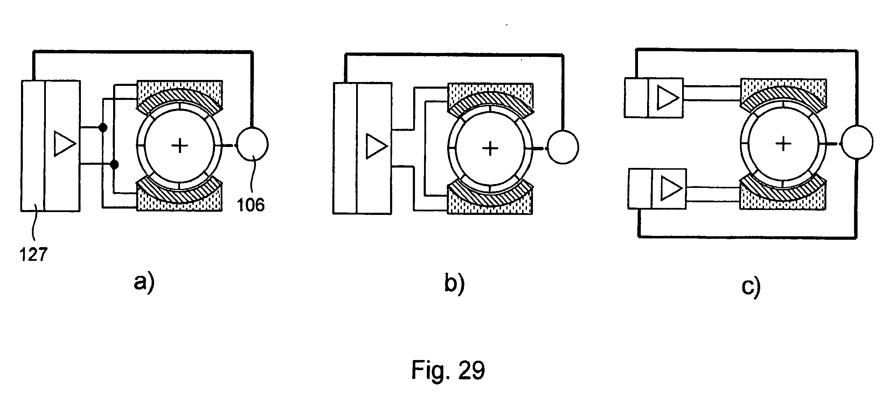

Beim Einsatz mehrerer Statorsegmente 86' je Antrieb können die Wicklungen 91 entweder parallel oder seriell geschaltet sein und von einem Steuergerät 127 betrieben werden. Auch eine getrennte Ansteuerung der Wicklungen 91 aus unterschiedlichen Steuergeräten 127 ist denkbar (Fig. 29). Es ist nur ein Sensor 106, z. B. Winkellagegeber 106, erforderlich, der alle Steuergeräte 127 mit den Lagesignalen der Ist-Lage versorgt. Der Lageoffset der Statorsegemente 86' zueinander kann im Steuergerät 127 bzw. den Steuergeräten 127 entsprechend parametriert werden. Eine ausreichend genaue relative Anordnung der Statorsegmente 86' zueinander in Umfangsrichtung ist erforderlich, damit die Statorsegemente 86' beim Betrieb nicht gegeneinander arbeiten. Hierfür ist die Einhaltung einer Genauigkeit von weniger als einem Zehntel eines Winkel-Abstandes der selben Flanke zweier gleichnamiger aufeinander folgender Pole von Vorteil. Beispielsweise liegen bei einer Polpaaranzahl von 12 im über den Winkel von z. B 120° reichenden Segment 24 Pole mit jeweiligem Abstand der selben Flanke von 5° vor. Der Abstand gleichnamiger Pole beläuft sich dann auf 10° und der maximal zulässige Winkelfehler auf 0,1°.

Auch in dieser Ausführung ist es vorteilhaft, die Statorsegmente 86' flüssigkeitsgekühlt auszubilden. Der Sensor 106 kann am Rotor 84 selbst, am Zapfen 21; 22 der selben Zylinderseite, oder am gegenüberliegenden Zapfen 22; 21 angeordnet sein. Von Vorteil ist die Ausbildung mit einer großen Poolpaaranzahl pro Antrieb, z. B. mindestens 12 Polpaare.

Wie in Fig. 27, 28 und 29 angedeutet, kann in einer vorteilhaften Ausführung der Rotor 84 in Segmenten teilbar ausgebildet sein. Der Rotor 84 setzt sich dann z. B. in Umfangsrichtung aus mehreren (z. B. drei, vier sechs oder acht) Rotorsegmenten 84' zusammen, welche in Summe den vollen Kreisumfang von 360° abdecken, bei jedoch einzeln montierbar/demontierbar sind. Die Abdeckung ist lückenlos, d. h. es besteht z. B. zwischen den Rotorsegmenten 84' keine signifikante Abweichung vom Abstandsmuster der sich abwechselnden Pole (Permanentmagnete oder auch Wicklungen) oder aber ein Abstand zweier Rotorsegmenten 84' in Umfangsrichtung beträgt höchstens 5°. Hierdurch ist es insbesondere möglich, den Rotor 84 ein- oder auszubauen, ohne den Zylinder 06; 07 bzw. das zugeordnete rotierende Bauteil ebenfalls zu entfernen.

Für den Fall der Ausbildung des rotierenden Bauteils als Walze oder aber falls kein Bauraumproblem zwischen benachbarten Zylindern 06; 07 besteht, kann in einer vierten, nicht dargestellten Ausführungsform der die Wicklungen 91 tragende Stator 86 der Fig. 22 bis 26 nicht segmentartig sonder um den gesamten Umfang der Walze bzw. des Zylinders 06; 07 reichend ausgebildet sein.

In den zu den Fig. 6 und 10 genannten Ausführung für den Antrieb eines Zylinders 06; 07 ist der Antriebsmotor 81 insbesondere als permanentmagneterregter Synchronmotor 81 ausgebildet.

Die in Fig. 12 genannte Ankopplung ist vorteilhaft für einen als permanentmagneterregten Synchronmotor 81 ausgebildeten Antriebsmotor 81, ist jedoch auch für anders ausgebildete Antriebsmotoren 81, z. B. Asynchronmotoren, insbesondere mit einem die Drehzahl untersetzenden Vorsatzgetriebe vorteilhaft einsetzbar.

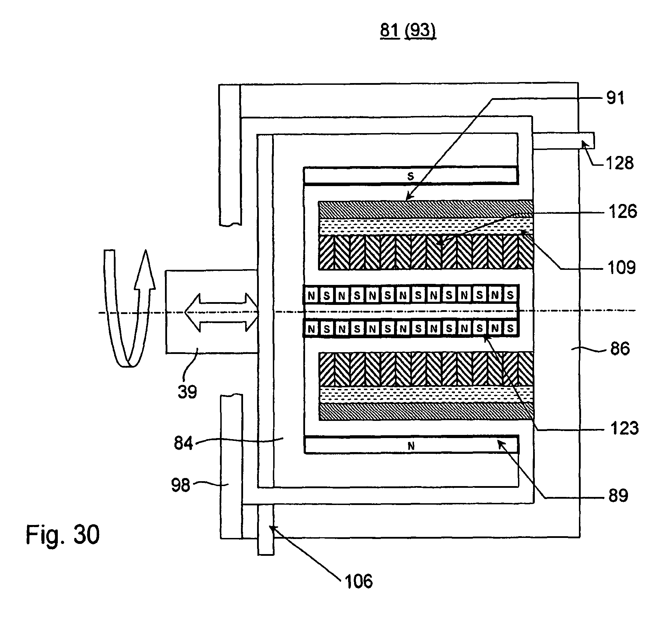

In einem weiteren Ausführungsbeispiel für die Ankopplung des rotierenden Bauteils, insbesondere des als Formzylinder 07 ausgeführten Bauteils, ist wie in Fig. 30 schematisch dargestellt, im Gegensatz zur Ausführung nach Fig. 20 ein Linearantrieb für die axiale Verstellung (Seitenregister) in den Antriebsmotor 81 integriert. Die Komponenten des axialen und des rotatorischen Antriebes können prinzipiell in axialer Richtung hintereinander angeordnet sein (wie in Fig. 20). In einer vorteilhaften Variante sind diese jedoch koaxial zueinander und zur Motorwelle bzw. der Welle 39 angeordnet. In Fig. 30 sind die Wicklungen 91; 126 für den radialen und die axialen Antrieb, die Permanentmagneten 89; 123 für die radiale und die axialen Antrieb, der die Permanentmagnete 89; 123 tragende Rotor 84 sowie der die Wicklungen 91; 126 tragende Stator 86 dargestellt. Des weiteren ist ein die Drehwinkellage detektierender Sensor 106, ein die Axiallage detektierender Sensor 128 sowie ein Kühlmittelkanal 109 vorgesehen. Die Anbindung kann entweder wie in Fig. 6 und 10 dargestellt über Kupplungen 82 gestellfest, oder aber wie angedeutet in einer vorteilhaften Ausführung an einer Buchse 98 entsprechend Fig. 12. Prinzipiell sind nicht dargestellte Varianten möglich, wobei der in Fig. 30 außen angeordnete rotatorische Antrieb innen, und der axiale Antrieb außen angeordnet ist. Hierbei sind die Permanentmagnete 89; 123 und die Wicklungen 91; 126 jeweils zu vertauschen.

Die am Beispiel des Druckwerkszylinders 06; 07 beschriebene Ankopplung des Antriebsmotors 81 an den Zylinder 06; 07 weist bevorzugt eine lösbare Verbindung zwischen Zapfen 21; 22 und Welle 39 bzw. Motorwelle 85 derart auf, so dass der Zapfen 21; 22 im montierten Zustand des Zylinders 06; 07 das Seitengestell 11; 12 nicht durchdringt. Die Antriebsverbindung zwischen dem Zylinder 06; 07 und dem, insbesondere im wesentlichen koaxial zur Rotationsachse des Zylinders 06; 07 angeordneten Antriebsmotor 81 ist hierbei mehrteilig, d. h. durch mindestens einen Zapfen 06; 07 und einen mit diesem drehfest aber lösbar verbundnen Welle 39, welche auch gleichzeitig die Motorwelle 85 darstellen kann.

Neben den Antrieben für die Druckwerkszylinder 06; 07 weist das Druckwerk 04 bzw. Doppeldruckwerk 03 wie in Fig. 11 angedeutet mindestens einen Antrieb für eine Walze 92, insbesondere changierbare Walze 92 wie z. B. Reibzylinder 92, des Farbwerkes 08 und/oder des Feuchtwerkes 09 auf.

Der Antrieb der mindestens einen Walze 92 kann wie in Fig. 11 dargestellt durch einen stirnseitigen Antriebsmotor 93 über ein Getriebe 94 erfolgen. Der Antriebsmotor 93 kann hierbei prinzipiell als Asynchronmotor oder Synchronmotor ausgebildet sein.

In einer in Bezug auf eine direkte Ankopplung ohne Untersetzungsgetriebe vorteilhaften Ausführung des Farbwerksantriebes ist der Antriebsmotor 93 aus Fig. 11 jedoch als Synchronmotor 93, insbesondere als permanentmagneterregter Synchronmotor 93 ausgebildet. Das Getriebe 94 weist hierbei z. B. kein rotatorisches Untersetzungsgetriebe, sondern lediglich ein die Drehbewegung in eine Changierbewegung umformendes Getriebe, z. B. Changiergetiebe auf. In dieser ersten Ausführung für den Farbwerksantrieb sind dann keine eigenen Antriebsmotoren für die Erzeigung der Changierbewegung vorgesehen. In Fig. 11 sind zwei Reibzylinder 92 im Farbwerk 08 vorgesehen, welche beispielsweise über eine mechanische Antriebsverbindung beide durch den Antriebsmotor 93 rotatorisch und changierend antreibbar sind. In einer Variante ist ledig der zum Formzylinder 07 entfernter angeordnete Reibzylinder 92 rotatorisch angetrieben.

In einer besonders vorteilhaften Ausführung weist der als permanentmagneterregte Synchronmotor 93 ausgebildete Antriebsmotor 93 des Farbwerksantriebes jedoch vergleichbar mit dem Antriebsmotor 81 in Fig. 30 einen Antriebsmotor 93 auf, in welchem sowohl rotatorischer Antrieb als auch der Axialantrieb integriert sind. Zu einer Ausführung wird auf die schematische Darstellung und die Beschreibung zur Fig. 30 verwiesen.

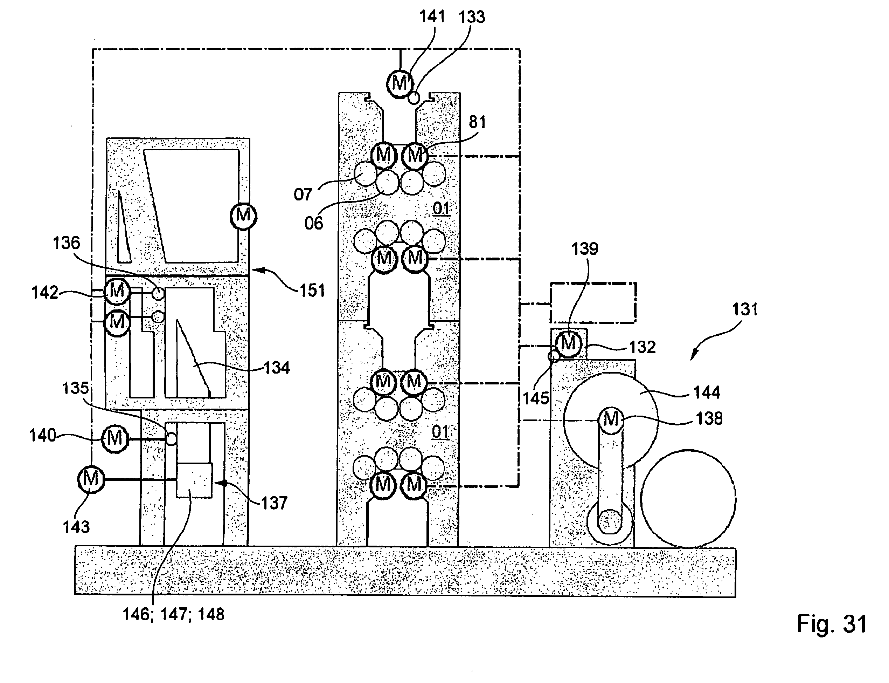

In Fig. 31 sind Grundelemente der Druckmaschine zusammen gestellt, wobei in den Druckeinheiten 01 die oben dargelegten Antriebsmotoren 81 für die als Druckwerkszylinder 06; 07 ausgebildeten rotierenden Bauteile 06; 07 vorgesehen sind. Weiter weist z. B. ein Rollenwechsler 131 einen eine Materialrolle 144 antreibenden Antriebsmotor 138 und/oder eine Zugwalze 145 eines Einzugwerkes 132 einen Antriebsmotor 139 und/oder eine den Druckeinheiten 01 nachgeordnete Zugwalze 133 einen Antriebsmotor 141 und/oder eine einem Falztrichter 134 vorgeordnete Zugwalze 136 einen Antriebsmotor 142 und/oder eine einem Falztrichter 134 nachgeordnete Zugwalze 135 einen Antriebsmotor 140 und/oder mindestens ein Zylinder 146; 147; 148 eines Falzapparates 137 einen Antriebsmotor 143 auf.

Die Materialrolle 144, die Zugwalze 145, die Zugwalze 133, die Zugwalze 135, die Zugwalze 136, der Zylinder 146; 147; 148 stellen eigens getriebene rotierende Bauteile 144; 145; 133; 135; 136; 146; 147; 148 dar und können im Sinne des oben i.V.m. dem Druckwerkszylinder 06; 07 genanten "rotierenden Bauteils" durch die Antriebsmotoren 138; 139; 141; 140; 142; 143 angetriebene sein. Hierbei kann der Antriebsmotoren 138; 139; 140; 141; 142; 143 in einer im Zusammenhang mit dem Druckwerkszylinder 06; 07 genannten Weise an das zugeordnete Bauteil 144; 145; 133; 135; 136; 146; 147; 148 gekoppelt sein, wobei jedoch jeweils die das An-/Abstellen ermöglichende Lageranordnung 14 entfallen kann. Auch kann u. U. die winkel- und/oder versatzausgleichende Kupplung 82 entfallen.

Der das rotierende Bauteil 144; 145; 133; 135; 136; 146; 147; 148 antreibende Antriebsmotor 138; 139; 141; 140; 142; 143 kann in vorteilhafter Ausführung als permanentmagneterregter und/oder als Synchronmotor 138; 139; 141; 140; 142; 143 ausgebildeter Antriebsmotor 138; 139; 141; 140; 142; 143 in oben beschriebener Art ausgebildet sein. Der in einigen Ausführungen vorgesehene Axialantrieb kann hierbei jedoch entfallen. Unterschiede können sich auch im Nenn- und im Maximaldrehmoment ergeben. Es kann einer, mehrere oder alle diese Antriebsmotoren 138; 139; 140; 141; 142; 143 in der Art des Antriebsmotors 81 als permanentmagneterregter Synchronmotor 138; 139; 140; 141; 142; 143 ausgebildet sein.

In den Druckeinheiten 01 und/oder am Falzapparat 137 und/oder an einer Zugwalze 145 (im Falzaufbau 151 oder im Einzugwerk 132) und/oder am Rollenwechsler 138 können somit eigene Antriebsmotoren 81; 138; 139; 141; 140; 142; 143 insbesondere als permanentmagnetangeregte und/oder als Synchronmotoren 81; 138; 139; 141; 140; 142; 143 ausgebildete Antriebsmotoren 81; 138; 139; 141; 140; 142; 143 vorgesehen sein.

Das im Hinblick auf die Ankopplung des Synchronmotors 81 i.V.m. Fig. 19 bis 26 genannte ist-jedoch ohne die Lageranordnung 14 - auch auf die rotierenden Bauteile 144; 145; 133; 135; 136; 146; 147; 148 übertragbar, welche keine Axialbewegung und/oder Stellbewegung senkrecht zur Rotationsachse erfordern.

In Fig. 31 ist schematisch durch eine die Antriebsmotoren 81; 138; 139; 140; 141; 142; 143 verbindende strichpunktierte Linie eine Antriebssteuerung angedeutet, welche unten zu Fig. 37 näher beschrieben ist.

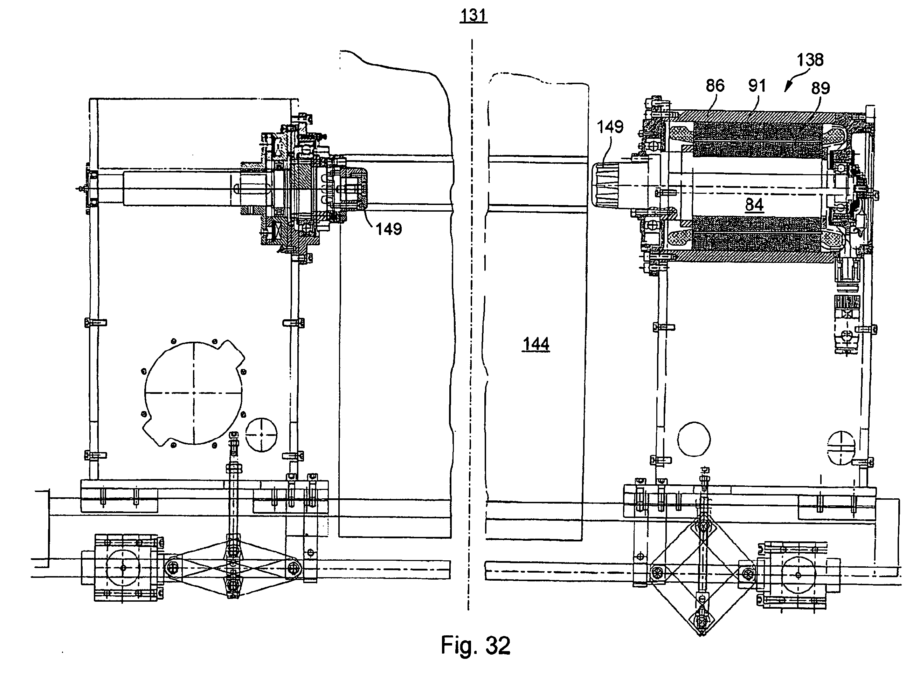

Fig. 32 zeigt die Vorderansicht eines Ausführungsbeispiel für einen Rollenwechsler 131 mit dem als Synchronmotor 138, insbesondere mit Permanentmagneterregung 89 (s.o.), ausgebildeten Antriebsmotor 138, mittels welchem die aufgeachste Materialrolle 144 angetrieben und abgewickelt wird. Mindestens einer von zwei Konen 149 wird z. B durch einen derartigen, oben beschriebenen Synchronmotor 138 mit Permanentmagneten 89 am Rotor 84 und Wicklungen 91 am Stator 86 angetrieben. Der andere Konus 149 kann wie dargestellt ungetrieben sein oder ebenfalls einen derartigen Antriebsmotor 138 aufweisen. Der Konus 149 ist hier nicht aufspreizbar ausgebildet, kann jedoch auch spreizbar ausgebildet sein.

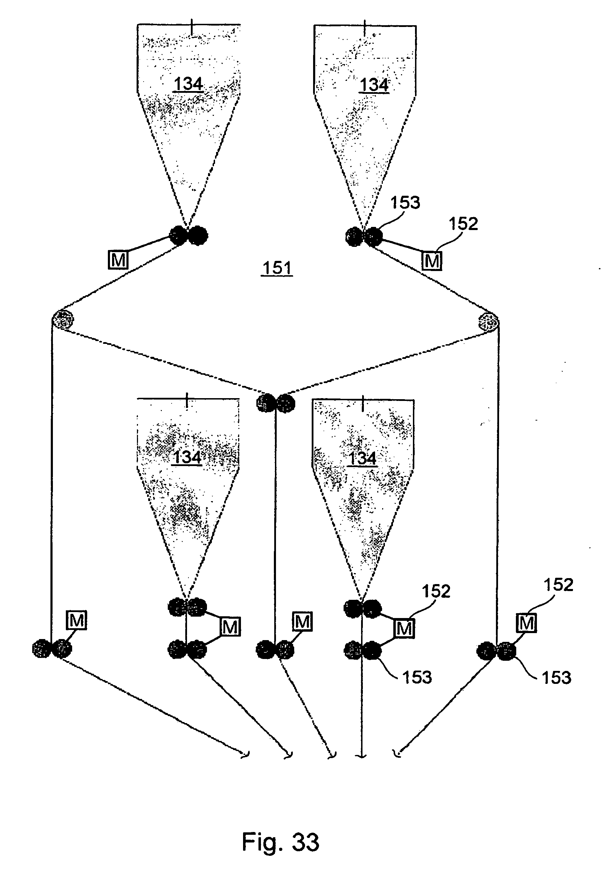

Fig. 33 zeigt einen mehrere Falztrichter 134 aufweisenden Falzaufbau 151 mit durch Antriebsmotoren 152 angetriebenen Zugwalzen 153 als rotierende Bauteile 153. Auch diese Antriebsmotoren 152 können als direkt gekoppelte Synchronmotoren, insbesondere permanentmagneterregt, wie oben beschrieben ausgebildet sein. Neben den in Fig. 31 und 29 dargestellten Zugwalzen 133; 153 können auch getriebene Leitelemente eines Überbaus einen Antriebsmotor in der Art eines Synchronmotors wie oben beschrieben in einer der Ausführungen aufweisen.

Der Antriebsmotor 81 der Zylinder 06; 07 und/oder der Antriebsmotor 93 des Farbwerks 08 und/oder der Antriebsmotor des Feuchtwerks 09 und/oder der Antriebsmotor 143; 162 im Falzapparat 137 und/oder der Antriebsmotor 139; 140; 141; 142; 152; 163 einer Zugwalze 133; 135; 136; 145; 153; 164 (im Überbau und/oder im Falzaufbau 151 und/oder am Eingang des Falzapparates 137) und/oder der Antriebsmotor 138 des Rollenwechslers 131 kann vorzugsweise in der o. g. Ausbildung des Antriebsmotors 81 als Synchronmotor 81 und/oder als Antriebsmotor 81 mit Permanentmagneterregung ausgeführt sein. Hierbei kann der Antrieb der Zylinder 06, 07 vorteilhaft einer Winkellageregelung, und der Antrieb der Zugwalzen 133; 135; 136; 145; 153; 164 und des Rollenwechslers 131 eine Drehzahlregelung, ggf. mit überlagerter Bahnspannungsregelung, unterliegen. Eine Ansteuerung des Antriebsmotors 139; 140; 141; 142; 152; 163 erfolgt z. B. vorteilhaft über eine elektronische Leitachse wie zu Fig. 37 genannt.

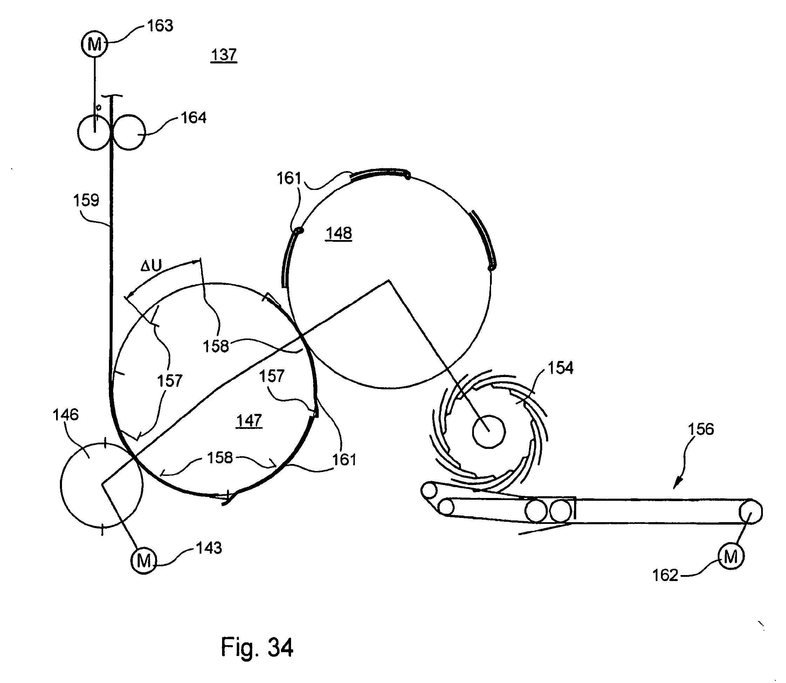

Der schematisch in Fig. 34 dargestellte Falzapparat 137 weist z. B. einen als Schneid- bzw. Messerzylinder 146, einen als Transportzylinder 147 und einen als Falzklappenzylinder 148 ausgebildeten Zylinder 146; 147; 148 auf. Die Übergabe des gefalzten Produktes kann anschließend an ein Schaufelrad 154 und von dort an eine Auslage 156 gegeben werden. Zumindest der als Falzmesserzylinder 147 ausgebildete Transportzylinder 147 kann formatvariabel ausgebildet sein, d. h. ein Abstand ΔU in Umfangsrichtung zwischen Haltemitteln 157 und jeweils nachgeordneten Falzmessern 158 am Umfang des Transportzylinders 147 ist veränderbar ausgeführt. Hierzu können die Haltemittel 157, z. B. als Punkturleisten oder Greifer ausgeführt, einerseits und die Falzmesser 158 andererseits auf zwei verschiedenen koaxial angeordneten Trommeln angeordnet sein, welche sich in Umfangsrichtung zueinander verdrehen lassen. Wird der Abstand ΔU zwischen Haltemittel 157 und nachgeordneten Falzmesser 158 verkleinert, so wird ein von einem Strang 159 durch den Messerzylinder 146 quer abgeschnittener Produktabschnitt 161 bei Ausfahren des Falzmessers 158 nach einer kürzeren Abschnittslänge quer gefalzt und umgekehrt. Der Strang 159 kann aus einer oder mehreren längsgefalzten oder ungefalzten Bahnen 02 bzw. Teilbahnen bestehen.

Schneid-, Transport-, Falzklappenzylinder 146; 147; 148; und ggf. Schaufelrad 154 werden bevorzugt durch mindestens einen Antriebsmotor 143 (M), insbesondere mindestens einen permanentangeregten (Synchron-)Motor 143, mechanisch unabhängig von Druckeinheiten, Überbau sowie Falzaufbau angetrieben. Der Antrieb kann über ein Getriebe, insbesondere ein Untersetzungsgetriebe, vom Antriebsmotor 143 auf einen oder mehrere der Zylinder 146; 147; 148 des Falzapparates 137 erfolgen.

In der in Fig. 34 dargestellten Ausführung wird vom Antriebsmotor 143 über ein nicht dargestelltes Getriebe (z. B. nicht bezeichnete Ritzel bzw. Antriebsräder) auf den Schneidzylinder 146 (bzw. auf einen mehrerer Schneidzylinder) getrieben. Von Letzterem wird auf den Transportzylinder 147 und von diesem auf den Falzklappenzylinder 148 getrieben. Vom Falzklappenzylinder 148 kann ggf. über einen Riementrieb auf das Schaufelrad 154 getrieben werden.

In einer nicht dargestellten Variante wird vom Antriebsmotor 143 über ein Ritzel oder Antriebsrad auf den Transportzylinder 147 getrieben. Von Letzterem wird auf den bzw. die Schneidzylinder 146 und den Falzklappenzylinder 148 getrieben. Vom Falzklappenzylinder 148 wird z. B. wieder über den Riementrieb auf das Schaufelrad 154 getrieben. In beiden beschriebenen Fällen weist die Auslage 156 vorzugsweise einen eigenen, von den Zylindern 146; 147; 148 und dem Schaufelrad 154 mechanisch unabhängigen Antriebsmotor 162 (M) auf.

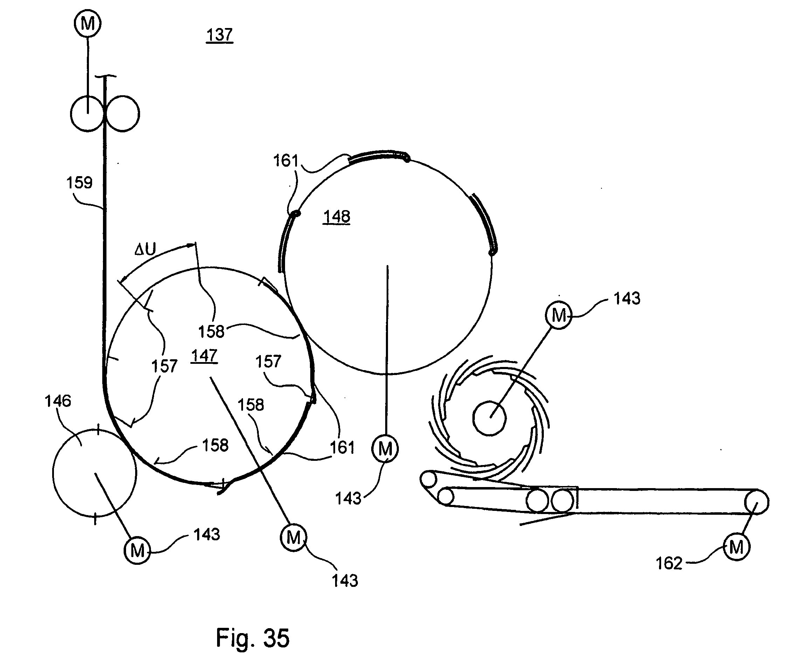

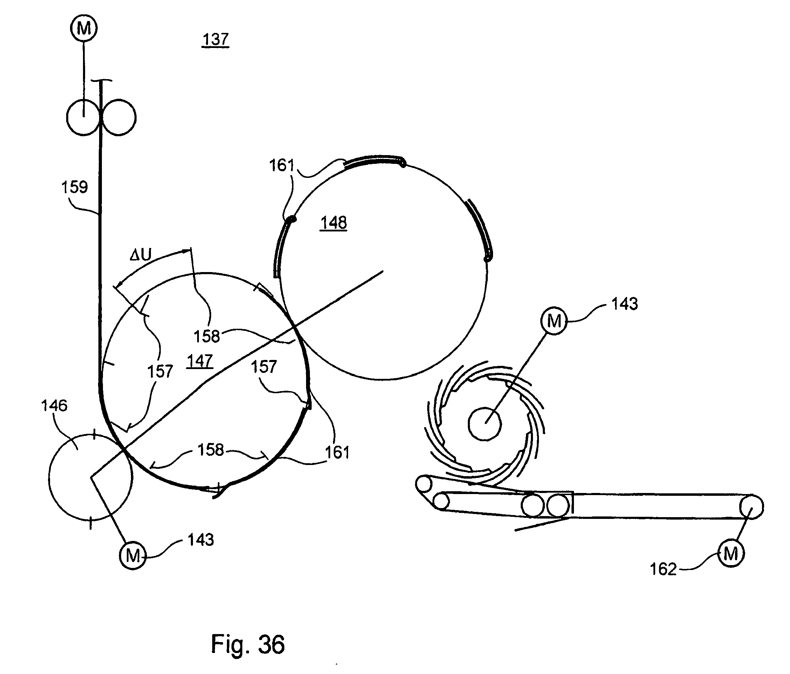

Schneid-, Transport- und Falzklappenzylinder 146; 147; 148 und ggf. Schaufelrad 154 können auch jeweils mechanisch unabhängig voneinander und von den Druckwerken 04 durch eigene Antriebsmotoren 143; 162 (M) angetrieben sein (Fig. 35). In einer Variante (Fig. 36) sind die drei Zylinder 146, 147, 148 gemeinsam und Schaufelrad 154 sowie Auslage 156 jeweils einzeln angetrieben.

In einer anderen Antriebsausführung werden Schneid-, Transport- und Falzklappenzylinder 146; 147; 148 durch mindestens einen gemeinsamen oder alternativ durch je einen von den Druckwerken mechanisch unabhängigen Antriebsmotor 143 angetrieben, während in einer ersten Variante Schaufelrad 154 und Auslagevorrichtung 156 durch einen gemeinsamen Antriebsmotor mechanisch unabhängig von den Zylindern 146; 147; 148 und den Druckwerken 04 und in einer zweiten Variante jeweils durch eigene Antriebsmotoren 143; 162 (M) rotatorisch angetrieben sind.

Auch ein ggf. vorgesehenes Bandsystem zum Führen der Produktabschnitte 161 in den und durch den Falzapparat 137 kann durch einen eigenen Antriebsmotor 162 (M) mechanisch unabhängig von den Zylindern 146; 147; 148 angetrieben sein.

Die genannten Antriebsmotoren 143; 162 (M) können wie oben dargestellt vorteilhaft als permanentmagneterregte Synchronmotoren 143; 162 (M) ausgebildet sein.

Im Einlaufbereich des Falzapparates 137 kann eine ebenfalls durch einen Antriebsmotor 163, z. B. permanentmagnetangeregt, angetriebene Zugwalze 164 als rotierendes Bauteil 164 angeordnet sein.

Zwar ist die im folgenden beschriebene Antriebssteuerung grundsätzlich auch unabhängig von der speziellen oben Beschriebenen Ausbildung der Antriebsmotoren 81; 138; 139; 140; 141; 142; 143; 162; 163 und der speziellen linearen Lagerung der Zylinder 06; 07 von Vorteil. Besonders vorteilhaft ist die Antriebssteuerung jedoch für die direkt angetriebenen Bauteile in o. g. Ausführungen.

Fig. 37 zeigt ein Beispiel für den Antrieb einer Druckmaschine mit mehreren, hier exemplarisch zwei, als Drucktürme 01 ausgeführte Druckeinheiten 01, welche jeweils mehrere Druckwerke 04, hier Doppeldruckwerke 03, aufweisen. Die Druckwerke 04 eines Druckturms 01 bilden zusammen mit ihren Antriebsreglern 166, kurz Antrieben 166 und den Antriebsmotoren 81; 93 eine Gruppe 167, z. B. Antriebsmotor 167, insbesondere eine Druckstellengruppe 167, welche über eine untergeordnete Antriebssteuerung 168 dieser Gruppe 167 mit einer Signale einer jeweiligen Leitachsposition Φ einer virtuellen Leitachse führenden ersten Signalleitung 171 verbunden ist. Die untergeordnete Antriebssteuerung 168 kann jedoch auch Untergruppen von Druckeinheiten 01 oder andere Teilungen verwalten. Mit dieser Signalleitung 171 sind auch weitere, eine eigene untergeordnete Antriebssteuerung 168 aufweisende Einheiten, z. B. ein oder mehrere Leitelemente (z. B. Zugwalze 133, 153, Fig. 31, 33) eines Überbaus und/oder Falzaufbaus 151 und/oder eines oder mehrerer Falzapparate 137 verbunden. Nicht dargestellt ist hier die in der selben Weise mögliche Verbindung zum Rollenwechsler 131 und zum Einzugwerk 132. Die Signalleitung 171 ist hier vorteilhaft als ein erstes Netzwerk 171 in Ringtopologie, insbesondere als Sercos-Ring, ausgeführt, welcher die Leitachsposition Φ durch eine mit dem Netzwerk 171 verbundene übergeordnete Antriebssteuerung 172 erhält. Diese generiert die umlaufende Leitachsposition Φ auf der Basis von Vorgaben bezüglich einer vorgegebenen Produktionsgeschwindigkeit, welche sie von einer Rechen- und/oder Datenverarbeitungseinheit 173, z. B. einem Sektionsrechner, erhält. Die Rechen- und/oder Datenverarbeitungseinheit 173 erhält ihrerseits die Vorgabe der Produktionsgeschwindigkeit von einem mit ihr verbundenen Leitstand 174 bzw. Leitstandsrechner 174.

Um registerhaltiges Drucken und/oder Längsschneiden zu gewährleisten müssen die mechanisch unabhängig voneinander angetriebenen Aggregate (Druckwerke 04 sowie Falzapparat 137), z. B. in Abhängigkeit von einer Bahnführung, in die korrekte Winkellage zueinander stehen. Hierfür sind für die einzelnen, Registerhaltigkeit erfordernden Antriebe 166 Offsetwerte ΔΦᵢ vorgehalten, welche die für die Produktion korrekte relative Winkellage zur gemeinsamen Leitachse und/oder relativ zu einem der Aggregate definieren. Zumindest diese Aggregate (Druckwerke 04 sowie Falzapparat 137) bzw. deren Antriebe 166 unterliegen einer Winkellageregelung. Andere die Bahn 02 führenden Aggregate wie Zugwalzen 133; 135; 136 und/oder Rollenwechsler 131 müssen nicht unbedingt Winkellagegeregelt betrieben sein, sondern können einer Drehzahlregelung unterliegen.

Die für die einzelnen Antriebe 166 relevanten Offsetwerte ΔΦᵢ (zumindest für Antriebe 166 mit Registeranforderung) werden für die betreffende Produktion von der Rechen- und Datenverarbeitungseinheit 173 über eine zweite, von der ersten Signalleitung 171 verschiedene Signalleitung 176, insbesondere ein zweites Netzwerk 176, den dem jeweiligen Antrieb 166 zugeordneten untergeordneten Antriebssteuerungen 168 zugeleitet und in vorteilhafter Ausführung dort gespeichert und mit der Leitachsposition Φ zu korrigierten Leitachspositionen Φᵢ' verarbeitet.

Die Übermittlung der Offsetwerte ΔΦᵢ an die untergeordneten Antriebssteuerungen 168 erfolgt z. B. entweder über entsprechende Signalleitungen vom zweiten Netzwerk 176 direkt zur Antriebssteuerung 168 (nicht dargestellt), oder vorteilhaft über ein Steuersystem 177, welches der jeweiligen Gruppe 167 bzw. der eine eigene untergeordnete Antriebssteuerung 168 aufweisende Einheit zugeordnet ist. Das Steuersystem 177 ist hierzu mit dem zweiten Netzwerk 176 (bzw. mit der Rechen- und Datenverarbeitungseinheit 173) verbunden. Das Steuersystem 177 steuert und/oder regelt beispielsweise die von den Antriebsmotoren 81; 93 verschiedenen Stellglieder und Antriebe der Druckwerke 04 bzw. Falzapparate 137, z. B. Farbzuführung, Stellbewegungen von Walzen und/oder Zylindern, Feuchtwerk, Positionen etc. Das Steuersystem 177 weist eine oder mehrere (insbesondere speicherprogrammierbare) Steuereinheiten 178 auf. Diese Steuereinheit 178 ist über eine Signalleitung 179 mit der untergeordneten Antriebssteuerung 168 verbunden. Im Fall mehrerer Steuereinheiten 178 sind diese durch die Signalleitung 179, z. B. einen Bussystem 179, auch untereinander verbunden.

Über das erste Netzwerk 171 erhalten die Antriebe 166 somit die absolute und dynamische Information zum Umlaufen einer gemeinsam zugrundezulegenden Leitachsposition Φ und über einen zweiten Signalweg, insbesondere über mindestens ein zweites Netzwerk 176, werden die zur registergerechten Verarbeitung erforderlichen Informationen, insbesondere Offsetwerte ΔΦᵢ, für die registergerechte Relativlage der mechanisch voneinander unabhängigen Antriebe 166 bzw. Aggregate übermittelt.

Die am Beispiel einer Druckmaschine mit liegende Doppeldruckwerk 03 vorteilhaften Merkmale (Lageranordnung 14, Antriebsankopplung, Motorausführung als permanentmagneterregter Synchronmotor) sind einzeln oder in Kombination ebenso auf l-Druckeinheiten, d. h. im wesentlichen um 90° gedrehte Doppeldruckwerke 03, anzuwenden. Auch sind die Merkmal der Lageranordnung 14 und/oder des linearen Stellweges und/oder Antriebsankopplung, Motorausführung auch auf neun- oder zehnzylindrige Satellitendruckeinheiten einzeln oder in Kombinationen anzuwenden.

### Bezugszeichenliste

- 01: Druckeinheit, Druckturm
- 01.1: Teildruckeinheit
- 01.2: Teildruckeinheit
- 02: Bedruckstoff, Materialbahn, Bahn
- 03: Doppeldruckwerk
- 04: Druckwerk
- 05: Druckstelle, Doppeldruckstelle
- 06: Zylinder, Übertragungszylinder, Druckwerkszylinder, Bauteil, rotierend
- 07: Zylinder, Formzylinder, Druckwerkszylinder, Bauteil, rotierend
- 08: Farbwerk, Walzenfarbwerk, Kurzfarbwerk
- 09: Feuchtwerk, Sprühfeuchtwerk
- 10: -
- 11: Gestellabschnitt, Wandabschnitt, Seitengestell
- 12: Gestellabschnitt, Wandabschnitt, Seitengestell
- 13: Boden, Träger, Montageplatte, Montagerahmen
- 14: Lageranordnung, Linearlageranordnung, Lagereinheit
- 15: Linearführung
- 16: Gestell, Rahmenkonstruktion (08)
- 17: Zylindereinheit
- 18: Wandabschnitt
- 19: Handhabungsvorrichtung, Druckformwechsler
- 20: -
- 21: Zapfen (06)
- 22: Zapfen (07)
- 23: Wälzkörper
- 24: Klemmeinrichtung
- 25: -
- 26: Ballen (06)
- 27: Ballen (07)
- 28: Abdeckung
- 29: Linearlager
- 30: -
- 31: Lager, Radiallager, Zylinderrollenlager
- 32: Lagermittel, Lagerelement, Linearelement
- 32.1: Führungsfläche
- 32.2: Führungsfläche
- 33: Lagermittel, Lagerelement, Linearelement
- 33.1: Führungsfläche
- 33.2: Führungsfläche
- 34: Lagerblock, Schlitten
- 35: -
- 36: Verbindung, Spannelement
- 37: Träger, Trägerplatte
- 38: Ausnehmung
- 39: Welle, Antriebswelle
- 40: -
- 41: Anschlag, Keil
- 42: Element, Federelement
- 43: Aktor, kraftgesteuert, Stellmittel, druckmittelbetätigbar, Kolben, Hydraulikkolben
- 44: Anschlagfläche (41)
- 45: -
- 46: Stellmittel, Aktor, druckmittelbetätigbar, Kolben
- 47: Übertragungsglied, Kolbenstange
- 48: Rückstellfeder
- 49: Anschlag, Überlastsicherung, Federelement
- 50: -
- 51: Montagehilfe, Passstift
- 52: -
- 53: Haltemittel, Schraube
- 54: Mittel, Spannschraube
- 55: -
- 56: Ventil, steuerbar
- 57: Abdeckung
- 58: Anschlag
- 59: Aktorelement
- 60: -
- 61: Seitenträger, Seitenplatte
- 62: Seitenträger, Seitenplatte
- 63: Seitenträger, Seitenplatte
- 64: Seitenträger, Seitenplatte
- 65: -
- 66: Seitenregisterantrieb, Antriebsmotor
- 67: Lager, Axiallager
- 68: Spindel
- 69: Stirnrad
- 70: -
- 71: Gewindeabschnitt
- 72: Ritzel
- 73: Motor
- 74: Innengewinde
- 75: -
- 76: Topf
- 77: Anschlag
- 78: Scheibe
- 79: Wälzkörper
- 80: -
- 81: Antriebsmotor, Synchronmotor, Elektromotor, Außenläufermotor, permanentmagneterregend
- 82: Kupplung, Lamellenkupplung
- 83: Kupplung, Klauenkupplung
- 84: Rotor
- 85: Motorwelle
- 86: Stator
- 87: Halterung
- 88: Lager, Radiallager, Rollenlager
- 89: Permanentmagnet
- 90: -
- 91: Wicklung
- 92: Walze, Reibzylinder
- 93: Antriebsmotor, Synchronmotor, permanentmagneterregend
- 94: Getriebe
- 95: -
- 96: Antriebsmotor
- 97: Getriebe
- 98: Haltemittel, Buchse, Kragenbuchse
- 99: Schraube
- 100: -
- 101: Spannelement, Spannsatz
- 102: Spannelement, Spannsatz
- 103: Führung, Linearführung
- 104: Stütze, Stützblech
- 105: -
- 106: Sensor, detektierend, Drehwinkelsensor, Winkellagegeber
- 107: Verdrehsicherung
- 108: Anschlussbohrung
- 109: Kühlmittelkanal
- 110: -
- 111: Rotor
- 112: Stator
- 113: Zuführung
- 114: Anschluss
- 115: -
- 116: Stempel
- 117: Leitung
- 118: Durchbruch
- 119: Auslassöffnung
- 120: -
- 121: Leitung, elektrisch
- 122: Signalleitung
- 123: Permanentmagnet
- 124: Signalleitung
- 125: -
- 126: Wicklung
- 127: Steuergerät
- 128: Sensor
- 129: -
- 130: -
- 131: Rollenwechsler
- 132: Einzugwerk
- 133: Zugwalze, Bauteil, rotierend
- 134: Falztrichter
- 135: Zugwalze, Bauteil, rotierend
- 136: Zugwalze, Bauteil, rotierend
- 137: Falzapparat
- 138: Antriebsmotor, Synchronmotor, permanentmagneterregend, Bauteil, rotierend
- 139: Antriebsmotor, Synchronmotor, permanentmagneterregend, Bauteil, rotierend
- 140: Antriebsmotor, Synchronmotor, permanentmagneterregend, Bauteil, rotierend
- 141: Antriebsmotor, Synchronmotor, permanentmagneterregend, Bauteil, rotierend
- 142: Antriebsmotor, Synchronmotor, permanentmagneterregend, Bauteil, rotierend
- 143: Antriebsmotor, Synchronmotor, permanentmagneterregend, Bauteil, rotierend
- 144: Materialrolle
- 145: Zugwalze, Bauteil, rotierend
- 146: Zylinder, Bauteil, rotierend, Schneidzylinder, Messerzylinder
- 147: Zylinder, Bauteil, rotierend, Transportzylinder
- 148: Zylinder, Bauteil, rotierend, Falzklappenzylinder
- 149: Konen
- 150: -
- 151: Falzaufbau
- 152: Antriebsmotor, Synchronmotor, permanentmagneterregend, Bauteil, rotierend
- 153: Zugwalze, Bauteil, rotierend
- 154: Schaufelrad
- 155: -
- 156: Auslage
- 157: Haltemittel
- 158: Falzmesser
- 159: Strang
- 160: -
- 161: Produktabschnitt
- 162: Antriebsmotor, Synchronmotor, permanentmagneterregend, Bauteil, rotierend
- 163: Antriebsmotor, Synchronmotor, permanentmagneterregend, Bauteil, rotierend
- 164: Einzugwalze, Bauteil, rotierend
- 165: -
- 166: Antriebsregler, Antrieb
- 167: Gruppe, Antriebsmotor, Druckstellengruppe
- 168: Antriebssteuerung
- 169: -
- 170: -
- 171: Signalleitung, Netzwerk
- 172: Antriebssteuerung
- 173: Rechen- und/oder Datenverarbeitungseinheit
- 174: Leitstand, Leitstandrechner
- 175: -
- 176: Signalleitung, Netzwerk
- 177: Steuersystem
- 178: Steuereinheit
- 179: Signalleitung, Bussystem
- 180: -
- 181: Teil des Stators
- 182: Gehäuse
- 183: Teils des Rotors
- 184: Verbindung
- 185: -
- 186: Gleitfläche
- 187: Verdrehsicherung
- 188: Anschlag
- 189: Führung
- 190: -
- 191: Haltemittel
- 192: Kupplung
- 193: Anschlag
- 194: Führung
- 195: -
- 196: Lasche
- 197: Dichtung
- 198: Gleitfläche
- 199: Kupplung
- 200: -
- 201: Lamelle
- 202: Federelement
- 203: Abstandsstück
- 204:

- 84': Rotorsegment
- 86': Statorsegment

- E: Ebene, Verbindungslinie, Verbindungsebene
- E1: Ebene
- E2: Ebene
- E': Ebene
- E": Ebene

- L: lichte Weite
- L06: Länge (06)
- L07: Länge (07)
- L107: Länge

- A: Betriebsstellung
- B: Wartungsstellung
- C: Bewegungsrichtung
- F: Kraft

- M: Drehzahl
- P: Druck
- S: Stellrichtung

- Φ: Leitachsposition

- Δ31: Lagerspiel

- ΔU: Abstand

## Patentansprüche

1. Vorrichtung zur Anbindung eines rotierenden Bauteils (06; 07) einer Druckmaschine, welches an Seitengestellen (11; 12) mittels einer Lageranordnung (14) in einer Richtung senkrecht zur Rotationsachse des Bauteils (06; 07) bewegbar angeordnet ist, wobei die Lageranordnung (14) einen bewegbaren Lagerblock (34) zur Aufnahme eines Zapfens (21; 22) des Bauteils (06; 07) aufweist und wobei das Bauteil (06; 07) durch einen eigenen Antriebsmotor (81) rotatorisch angetrieben ist und mindestens ein Haltemittel aufweist, **dadurch gekennzeichnet, dass** zwischen Lageranordnung (14) und Antriebsmotor (81) ein einen Stator (112) und einen Rotor (111) aufweisender Drehübertrager (111, 112) zur Zuführung von Druckmittel in das Bauteil (06; 07) vorgesehen ist, wobei der Stator (112) mindesten eine Auslassöffnung (119) für das Druckmittel aufweist und drehfest mit dem bewegbaren Lagerblock (34) verbunden ist, und derRotot (111) eine in Deckung mit der Auslassöffnung (119) verbringbare Einlassöffnung (118) aufweist und drehfest mit dem Bauteil (06; 07) verbunden ist.

2. Vorrichtung nach Anspruch 1, **dadurch gekennzeichnet, dass** der Drehübertrager mit einer Schnittstelle zwischen Rotor (111) und Stator (112) derart ausgebildet ist, dass an dieser Schnittstelle der zu übertragende Druckmittelstrom in axialer Richtung verläuft.

3. Vorrichtung nach Anspruch 1, **dadurch gekennzeichnet, dass** der Rotor (111) des Drehübertragers mindestens einen axial durch den Rotor (111) hindurchreichenden Durchbruch (118) und der Stator (112) des Drehübertragers in seiner stirnseitigen Kontaktfläche mindestens eine Auslassöffnung (119) aufweist.

4. Vorrichtung nach Anspruch 1, **dadurch gekennzeichnet, dass** durch den Drehübertrager (111, 112) mehrere Versorgungskanäle im Bauteil (07) unabhängig voneinander wahlweise mit Druckmittel beaufschlagbar sind.

5. Vorrichtung nach Anspruch 1, **dadurch gekennzeichnet, dass** der Stator (112) des Drehübertragers mehrere Auslassöffnungen (119) und der Rotor (111) des Drehübertragers mehrere Durchbrüche (118) aufweist.

6. Vorrichtung nach Anspruch 1, **dadurch gekennzeichnet, dass** ein Zapfen (21; 22) des Bauteils (06; 07) im montierten Zustand eine Flucht des Seitengestells (11; 12) nicht durchdringt.

7. Vorrichtung nach Anspruch 1, **dadurch gekennzeichnet, dass** ein Rotor (84) des Antriebsmotors (81) drehfest aber lösbar mit dem Zapfen (21; 22) des Bauteils (06; 07) verbunden ist.

8. Vorrichtung nach Anspruch 1, **dadurch gekennzeichnet, dass** der bewegbare Lagerblock (34) bezüglich der Flucht des Seitengestells (11; 12) auf deren Innenseite liegend angeordnet ist.

9. Vorrichtung nach Anspruch 1, **dadurch gekennzeichnet, dass** ein Stator (86) des Antriebsmotors (81) starr aber lösbar mit dem bewegbaren Lagerblock (34) verbunden ist.

10. Vorrichtung nach Anspruch 1, **dadurch gekennzeichnet, dass** ein Stator (86) des Antriebsmotors (81) starr aber lösbar mit dem Seitengestell (11; 12) verbunden ist.

11. Vorrichtung nach Anspruch 1, **dadurch gekennzeichnet, dass** der Rotor (84) des Antriebsmotors (81) drehfest aber lösbar mit einer Motorwelle (85), und diese drehfest aber lösbar mit dem Zapfen (21; 22) des Bauteils (06; 07) verbunden ist.

12. Vorrichtung nach Anspruch 1, **dadurch gekennzeichnet, dass** ein das Seitengestell (11; 12) durchgreifendes Haltemittel (98) starr aber lösbar mit dem Lagerblock (34) verbunden ist, und dass der Stator (112) des Drehübertragers starr aber lösbar am Haltemittel (98) angeordnet ist.

13. Vorrichtung nach Anspruch 1, **dadurch gekennzeichnet, dass** ein das Seitengestell (11; 12) durchgreifendes Haltemittel (98) starr aber lösbar mit dem Lagerblock (34) verbunden ist, und dass ein auf der Außenseite des Seitengestells (11; 12) liegender Stator (86) des Antriebsmotors (81) starr aber lösbar am Haltemittel (98) angeordnet ist.

14. Vorrichtung nach Anspruch 1, **dadurch gekennzeichnet, dass** die Lageranordnung (14) gestellfeste Lagermittel (32) und den bewegbaren, den Zapfen (21; 22) aufnehmenden Lagerblock (34) aufweist.

15. Vorrichtung nach Anspruch 1, **dadurch gekennzeichnet, dass** der Antriebsmotor (81) ohne motorinterne Lagerung zwischen Stator (86) und Rotor (84) ausgebildet ist.

16. Vorrichtung nach Anspruch 1, **dadurch gekennzeichnet, dass** am Seitengestell (11; 12) ein Mittel zur Abstützung und/oder Verdrehsicherung des Antriebsmotors (81), insbesondere des Stators (86) bzw. dessen Gehäuses (182), vorgesehen ist.

17. Vorrichtung nach Anspruch 16, **dadurch gekennzeichnet, dass** zur Abstützung und/oder Verdrehsicherung eine Führung (103) vorgesehen ist.

18. Vorrichtung nach Anspruch 1, **dadurch gekennzeichnet, dass** mit dem rotierenden Bauteil (06; 07) Permanentmagneten (89) drehfest verbunden sind.

19. Vorrichtung nach Anspruch 1, **dadurch gekennzeichnet, dass** zwischen dem Rotor (84) des Antriebsmotors (81) und dem Zapfen (21; 22) eine winkel- und/oder versatzausgleichende Kupplung (82) vorgesehen ist.

20. Vorrichtung nach Anspruch 1, **dadurch gekennzeichnet, dass** der Antriebsmotor (81) mit motorinterner Lagerung zwischen Stator (86) und Rotor (84) ausgebildet ist.

21. Vorrichtung nach Anspruch 1, **dadurch gekennzeichnet, dass** der Antriebsmotor (81), insbesondere zumindest dessen Rotor (84), im wesentlichen koaxial zur Rotationsachse des Zylinders (06; 07) angeordnet ist.

22. Vorrichtung nach Anspruch 1, **dadurch gekennzeichnet, dass** der Rotor (84) des Antriebsmotors (81) drehfest aber lösbar mit einer Motorwelle (85) verbunden ist.

23. Vorrichtung nach Anspruch 7, **dadurch gekennzeichnet, dass** als Verbindung zwischen Rotor (84) und Zapfen (21; 22) ein Spannelement (102) vorgesehen ist.

24. Vorrichtung nach Anspruch 22, **dadurch gekennzeichnet, dass** als Verbindung zwischen Rotor (84) und Motorwelle (85) ein Spannelement (101) vorgesehen ist.

25. Vorrichtung nach Anspruch 12, **dadurch gekennzeichnet, dass** das Haltemittel (98) als Buchse (98) ausgebildet ist.

26. Vorrichtung nach Anspruch 1, **dadurch gekennzeichnet, dass** mit dem Rotor (84) des Antriebsmotors (81) ein Rotor eines drehzahl- und/oder drehwinkellagedetektierenden Sensors (106) drehfest verbunden ist.

27. Vorrichtung nach Anspruch 26, **dadurch gekennzeichnet, dass** ein Stator des Sensors (106) über eine Verdrehsicherung (107) am Antriebsmotor (81) derart angeordnet ist, dass der Stator einen radialen Freiheitsgrad, insbesondere von mindestens 2 mm, aufweist.

28. Vorrichtung nach Anspruch 1, **dadurch gekennzeichnet, dass** der Antriebsmotor (81) als ein Synchronmotor (81) mit Permanentmagneterregung ausgebildet ist.

29. Vorrichtung nach Anspruch 1, **dadurch gekennzeichnet, dass** der Rotor (84) des Antriebsmotors (81) Pole aus Permanentmagneten (89) aufweist.

30. Vorrichtung nach Anspruch 1, **dadurch gekennzeichnet, dass** am Antriebsmotor (81) eine Kühleinrichtung, insbesondere ein Flüssigkeitskreislauf, vorgesehen ist.

31. Vorrichtung nach Anspruch 1, **dadurch gekennzeichnet, dass** die Lageranordnung (14) einen Lagerblock (34) und zwei den Lagerblock (34) umgreifende Linearlager (29) aufweist.

32. Vorrichtung nach Anspruch 1, **dadurch gekennzeichnet, dass** die Lageranordnung (14) einen in der Lageranordnung (14) integrierten Aktor (43) zur Bewerkstelligung der Stellbewegung umfasst.

33. Vorrichtung nach Anspruch 31, **dadurch gekennzeichnet, dass** sich die beiden Linearlager (29) sich in der Weise gegenüberliegen und den Lagerblock (34) umgreifen, dass die Lagervorspannung und die Lagerkräfte eine wesentliche Komponente in einer Richtung senkrecht zur Rotationsachse des Zylinders (06; 07) erfahren bzw. aufnehmen.

34. Vorrichtung nach Anspruch 1, **dadurch gekennzeichnet, dass** die Lageranordnung (14) Linearlager (29) aufweist, mittels derer der Rotationskörper linear bewegbar ist.

35. Vorrichtung nach Anspruch 34, **dadurch gekennzeichnet, dass** der Rotationskörper samt Lagereinheit (14) vormontierbar ausgebildet ist.

36. Vorrichtung nach Anspruch 1, **dadurch gekennzeichnet, dass** der Antriebsmotor (81) von einer eine virtuelle Leitachse führenden Signalleitung (171) Signale zur Sollwinkellage und/oder Winkelgeschwindigkeit und/oder Leitachsposition (Φ) erhält.

37. Vorrichtung nach Anspruch 1, **dadurch gekennzeichnet, dass** der Rotor (84) des Antriebsmotors (81) axial relativ zum Seitengestell bewegbar gelagert ist, und dass der Rotor (84) und der mit diesem zusammen wirkender Stator (86) des Antriebsmotors (81) in axialer Richtung relativ zueinander bewegbar gelagert sind.

38. Vorrichtung nach Anspruch 37, **dadurch gekennzeichnet, dass** der Stator (86) bezüglich einer Axiatrichtung des Zylinders (06; 07) relativ zum Seitengestell (11; 12) bewegbar gelagert ist.

39. Vorrichtung nach Anspruch 1, **dadurch gekennzeichnet, dass** das Bauteil (06; 07) als Zylinder (06; 07) einer Druckeinheit (01), insbesondere als Formzylinder ausgebildet ist.

## Claims

1. Apparatus for attaching a rotating component (06; 07) of a printing press, which rotating component (06; 07) is arranged on side frames (11; 12) by means of a bearing arrangement (14) such that it can be moved in a direction perpendicularly with respect to the rotational axis of the component (06; 07), the bearing arrangement (14) having a movable bearing block (34) for receiving a journal (21; 22) of the component (06; 07), and the component (06; 07) being driven rotationally by a dedicated drive motor (81) and having at least one holding means, **characterized in that** a rotary transmitter (111, 112) which has a stator (112) and a rotor (111) is provided between the bearing arrangement (14) and the drive motor (81) for feeding pressure medium into the component (06; 07), the stator (112) having at least one outlet opening (119) for the pressure medium and being connected fixedly to the movable bearing block (34) so as to rotate with it, and the rotor (111) having an inlet opening (118), which can be brought into congruence with the outlet opening (119), and being connected fixedly to the component (06; 07) so as to rotate with it.

2. Apparatus according to Claim 1, **characterized in that** the rotary transmitter is configured with an interface between the rotor (111) and the stator (112) in such a way that the pressure-medium stream to be transmitted runs in the axial direction at this interface.

3. Apparatus according to Claim 1, **characterized in that** the rotor (111) of the rotary transmitter has at least one aperture (118) which reaches axially through the rotor (111) and the stator (112) of the rotary transmitter has at least one outlet opening (119) in its end-side contact face.

4. Apparatus according to Claim 1, **characterized in that** a plurality of supply channels (07) in the component can optionally be loaded independently of one another with pressure medium by way of the rotary transmitter (111, 112).

5. Apparatus according to Claim 1, **characterized in that** the stator (112) of the rotary transmitter has a plurality of outlet openings (119) and the rotor (111) of the rotary transmitter has a plurality of apertures (118).

6. Apparatus according to Claim 1, **characterized in that**, in the mounted state, a journal (21; 22) of the component (06; 07) does not penetrate a cover of the side frame (11; 12).

7. Apparatus according to Claim 1, **characterized in that** a rotor (84) of the drive motor (81) is connected fixedly in terms of rotation but releasably to the journal (21; 22) of the component (06; 07).

8. Apparatus according to Claim 1, **characterized in that** the movable bearing block (34) is arranged with regard to the cover of the side frame (11; 12) so as to lie on its inner side.

9. Apparatus according to Claim 1, **characterized in that** a stator (86) of the drive motor (81) is connected rigidly but releasably to the movable bearing block (34).

10. Apparatus according to Claim 1, **characterized in that** a stator (86) of the drive motor (81) is connected rigidly but releasably to the side frame (11; 12).

11. Apparatus according to Claim 1, **characterized in that** the rotor (84) of the drive motor (81) is connected fixedly in terms of rotation but releasably to a motor shaft (85), and the said motor shaft (85) is connected fixedly in terms of rotation but releasably to the journal (21; 22) of the component (06; 07).

12. Apparatus according to Claim 1, **characterized in that** a holding means (98) which reaches through the side frame (11; 12) is connected rigidly but releasably to the bearing block (34), and **in that** the stator (112) of the rotary transmitter is arranged rigidly but releasably on the holding means (98).

13. Apparatus according to Claim 1, **characterized in that** a holding means (98) which reaches through the side frame (11; 12) is connected rigidly but releasably to the bearing block (34), and **in that** a stator (86) of the drive motor (81), which stator (86) lies on the outer side of the side frame (11; 12), is arranged rigidly but releasably on the holding means (98).

14. Apparatus according to Claim 1, **characterized in that** the bearing arrangement (14) has bearing means (32), which are fixed to the frame, and the movable bearing block (34) which receives the journal (21; 22).

15. Apparatus according to Claim 1, **characterized in that** the drive motor (81) is configured without a motor-internal bearing between the stator (86) and the rotor (84).

16. Apparatus according to Claim 1, **characterized in that** a means for supporting and/or securing the drive motor (81) such that it cannot rotate, in particular the stator (86) or its housing (182), is provided on the side frame (11; 12).

17. Apparatus according to Claim 16, **characterized in that** a guide (103) is provided for supporting and/or anti-rotational securing.

18. Apparatus according to Claim 1, **characterized in that** permanent magnets (89) are connected fixedly to the rotating component (06; 07) so as to rotate with it.

19. Apparatus according to Claim 1, **characterized in that** a coupling (82) which compensates for angle and/or offset is provided between the rotor (84) of the drive motor (81) and the journal (21; 22).

20. Apparatus according to Claim 1, **characterized in that** the drive motor (81) is configured with a motor-internal bearing between the stator (86) and the rotor (84).

21. Apparatus according to Claim 1, **characterized in that** the drive motor (81), in particular at least its rotor (84), is arranged substantially coaxially with respect to the rotational axis of the cylinder (06; 07).

22. Apparatus according to Claim 1, **characterized in that** the rotor (84) of the drive motor (81) is connected fixedly in terms of rotation but releasably to a motor shaft (85).

23. Apparatus according to Claim 7, **characterized in that** a clamping element (102) is provided as the connection between the rotor (84) and the journal (21; 22).

24. Apparatus according to Claim 22, **characterized in that** a clamping element (101) is provided as the connection between the rotor (84) and the motor shaft (85).

25. Apparatus according to Claim 12, **characterized in that** the holding means (98) is configured as a sleeve (98).

26. Apparatus according to Claim 1, **characterized in that** a rotor of a sensor (106) which detects rotational speed and/or rotary angle is connected fixedly to the rotor (84) of the drive motor (81) so as to rotate with it.

27. Apparatus according to Claim 26, **characterized in that** a stator of the sensor (106) is arranged on the drive motor (81) via an anti-rotation safeguard (107) in such a way that the stator has a radial degree of freedom, in particular of at least 2 mm.

28. Apparatus according to Claim 1, **characterized in that** the drive motor (81) is configured as a synchronous motor (81) with permanent magnet excitation.

29. Apparatus according to Claim 1, **characterized in that** the rotor (84) of the drive motor (81) has poles comprising permanent magnets (89).

30. Apparatus according to Claim 1, **characterized in that** a cooling device, in particular a liquid circuit, is provided on the drive motor (81).

31. Apparatus according to Claim 1, **characterized in that** the bearing arrangement (14) has a bearing block (34) and two linear bearings (29) which engage around the bearing block (34).

32. Apparatus according to Claim 1, **characterized in that** the bearing arrangement (14) comprises an actuator (43) which is integrated in the bearing arrangement (14) for bringing about the actuating movement.

33. Apparatus according to Claim 31, **characterized in that** the two linear bearings (29) lie opposite one another and engage around the bearing block (34) in such a way that the bearing prestress and the bearing forces experience or absorb a substantial component in a direction perpendicularly with respect to the rotational axis of the cylinder (06; 07).

34. Apparatus according to Claim 1, **characterized in that** the bearing arrangement (14) has linear bearings (29), by means of which the rotational body can be moved linearly.

35. Apparatus according to Claim 34, **characterized in that** the rotational body is configured such that it can be pre-assembled together with the bearing unit (14).

36. Apparatus according to Claim 1, **characterized in that** the drive motor (81) receives signals with respect to the setpoint angular position and/or angular velocity and/or line-shaft position (Φ) from a signal line (171) which guides a virtual line shaft.

37. Apparatus according to Claim 1, **characterized in that** the rotor (84) of the drive motor (81) is mounted such that it can be moved axially relative to the side frame, and **in that** the rotor (84) and the stator (86) of the drive motor (81), which stator (86) interacts with the said rotor (84), are mounted such that they can be moved in the axial direction relative to one another.

38. Apparatus according to Claim 37, **characterized in that** the stator (86) is mounted such that it can be moved relative to the side frame (11; 12) with regard to an axial direction of the cylinder (06; 07).

39. Apparatus according to Claim 1, **characterized in that** the component (06; 07) is configured as a cylinder (06; 07) of a press unit (01), in particular as a forme cylinder.

## Revendications

1. Dispositif pour raccorder un composant (06 ; 07) rotatif d'une machine d'impression, disposé de manière déplaçable dans une direction perpendiculaire à l'axe de rotation du composant (06 ; 07), sur des bâtis latéraux (11 ; 12), au moyen d'un agencement de palier (14), l'agencement de palier (14) présentant un bloc palier (34) pour recevoir un tourillon (21 ; 22) du composant (06 ; 07) et le composant (06 ; 07) étant entraîné en rotation au moyen d'un moteur d'entraînement (81) propre, et présentant au moins un moyen de maintien, **caractérisé en ce qu'**un transmetteur à capacité de rotation (111, 112), présentant un stator (112) et un rotor (111), est prévu entre l'agencement de palier (14) et le moteur d'entraînement (81), pour l'amenée de fluide sous pression dans le composant (06 ; 07), le stator (112) présentant au moins une ouverture d'échappement (119) pour le fluide sous pression et étant relié, de manière assujettie en rotation, au bloc palier (34) déplaçable, et le rotor (111) présentant une ouverture d'admission (118), susceptible d'être placée en coïncidence avec l'ouverture d'échappement (119) et étant relié, de manière assujettie en rotation, au composant (06 ; 07).

2. Dispositif selon la revendication 1, **caractérisé en ce que** le transmetteur à capacité de rotation est réalisé, avec une interface entre rotor (111) et stator (112), de manière que le flux de fluide sous-pression à transmettre s'étende en direction axiale à cette interface.

3. Dispositif selon la revendication 1, **caractérisé en ce que** le rotor (111) du transmetteur à capacité de rotation présente au moins un passage (118) passant axialement à travers le rotor (111), et le stator (112) du transmetteur à capacité de rotation présente au moins une ouverture d'échappement (119) dans sa face de contact située côté frontal.

4. Dispositif selon la revendication 1, **caractérisé en ce que** plusieurs canaux d'alimentation sont susceptibles d'être sollicités indépendamment les uns des autres au choix avec du fluide sous pression au moyen du transmetteur à capacité de rotation (111, 112), dans le composant (07).

5. Dispositif selon la revendication 1, **caractérisé en ce que** le stator (112) du transmetteur à capacité de rotation présente plusieurs ouvertures d'échappement (119) et le rotor (111) du transmetteur à capacité de rotation présente plusieurs passages (118).

6. Dispositif selon la revendication 1, **caractérisé en ce qu'**un tourillon (21 ; 22) du composant (06 ; 07), à l'état monté, ne traverse pas un alignement du bâti latéral (11 ; 12).

7. Dispositif selon la revendication 1, **caractérisé en ce qu'**un rotor (84) du moteur d'entraînement (81) est relié, de manière assujettie en rotation mais en étant désolidarisable, au tourillon (21 ; 22) du composant (06 ; 07).

8. Dispositif selon la revendication 1, **caractérisé en ce que** le bloc palier (34) déplaçable est disposé horizontalement concernant l'alignement du bâti latéral (11 ; 12) sur son côté intérieur.

9. Dispositif selon la revendication 1, **caractérisé en ce qu'**un stator (86) du moteur d'entraînement (81) est relié, rigidement mais en étant désolidarisable, au bloc palier (34) déplaçable.

10. Dispositif selon la revendication 1, **caractérisé en ce qu'**un stator (86) du moteur d'entraînement (81) est relié, rigidement mais en étant désolidarisable, au bâti latéral (11 ; 12).

11. Dispositif selon la revendication 1, **caractérisé en ce que** le rotor (84) du moteur d'entraînement (81) est relié, de manière assujettie en rotation mais en étant désolidarisable, à un arbre moteur (85), et celui-ci est relié, de manière assujettie en rotation mais en étant désolidarisable, au tourillon (21 ; 22) du composant (06 ; 07).

12. Dispositif selon la revendication 1, **caractérisé en ce qu'**un moyen de maintien (98), traversant le bâti latéral (11 ; 12), est relié, rigidement mais en étant désolidarisable, au bloc palier (34), et **en ce que** le stator (112) du transmetteur à capacité de rotation est disposé, rigidement mais en étant désolidarisable, au moyen de maintien (98).

13. Dispositif selon la revendication 1, **caractérisé en ce qu'**un moyen de maintien (98) traversant le bâti latéral (11 ; 12) est relié, rigidement mais en étant désolidarisable, au bloc palier (34), et **en ce qu'**un stator (86), disposé sur le côté extérieur du bâti latéral (11 ; 12), du moteur d'entraînement (81) est disposé, rigidement mais en étant désolidarisable, sur le moyen de maintien (98).

14. Dispositif selon la revendication 1, **caractérisé en ce que** l'agencement de palier (14) présente des moyens de palier (32), fixés au bâti, et le bloc palier (34) déplaçable, recevant le tourillon (21 ; 22).

15. Dispositif selon la revendication 1, **caractérisé en ce que** le moteur d'entraînement (81) est réalisé sans montage en palier interne au moteur, entre stator (86) et rotor (84).

16. Dispositif selon la revendication 1, **caractérisé en ce que**, sur le bâti latéral (11; 12), est prévu un moyen de soutien et/ou de sécurité en rotation du moteur d'entraînement (81), en particulier du stator (86), ou de son boîtier (182).

17. Dispositif selon la revendication 16, **caractérisé en ce qu'**un guidage (103) est prévu pour assurer le soutien et/ou la sécurité en rotation.

18. Dispositif selon la revendication 1, **caractérisé en ce que** des aimants permanents (89) sont reliés de manière assujettie en rotation au composant (06 ; 07) rotatif.

19. Dispositif selon la revendication 1, **caractérisé en ce qu'**un accouplement (82), assurant une compensation angulaire et/ou de décalage est prévu entre le rotor (84) du moteur d'entraînement (81) et le tourillon (21 ; 22).

20. Dispositif selon la revendication 1, **caractérisé en ce que** le moteur d'entraînement (81) est réalisé avec un montage en palier, interne au moteur, entre stator (86) et rotor (84).

21. Dispositif selon la revendication 1, **caractérisé en ce que** le moteur d'entraînement (81), en particulier au moins son rotor (84), est disposé sensiblement coaxialement à l'axe de rotation du cylindre (06 ; 07).

22. Dispositif selon la revendication 1, **caractérisé en ce que** le rotor (84) du moteur d'entraînement (81) est relié, de manière assujettie en rotation mais en étant désolidarisable, à un arbre moteur (85).

23. Dispositif selon la revendication 7, **caractérisé en ce qu'**un élément de serrage (102) est prévu entre rotor (84) et tourillon (21 ; 22).

24. Dispositif selon la revendication 22, **caractérisé en ce qu'**un élément de serrage (101) est prévu entre rotor (84) et arbre moteur (85).

25. Dispositif selon la revendication 12, **caractérisé en ce que** le moyen de maintien (98) est réalisé sous forme de douille (98).

26. Dispositif selon la revendication 1, **caractérisé en ce qu'**un rotor, d'un capteur (106), détectant une vitesse de rotation et/ou une position angulaire, est relié, de manière assujettie en rotation, au rotor (84) du moteur d'entraînement (81).

27. Dispositif selon la revendication 26, **caractérisé en ce qu'**un stator du capteur (106) est disposé sur le moteur d'entraînement (81), par l'intermédiaire d'une sécurité de rotation (107), de manière que le stator présente un degré de liberté radial, en particulier d'au moins 2 mm.

28. Dispositif selon la revendication 1, **caractérisé en ce que** le moteur d'entraînement (81) est réalisé sous forme d'un moteur synchrone (81) avec excitation par aimant permanent.

29. Dispositif selon la revendication 1, **caractérisé en ce que** le rotor (84) du moteur d'entraînement (81) présente des pôles composés d'aimants permanents (89).

30. Dispositif selon la revendication 1, **caractérisé en ce qu'**un dispositif de refroidissement, en particulier un circuit de liquide, est prévu sur le moteur d'entraînement (81).

31. Dispositif selon la revendication 1, **caractérisé en ce que** l'agencement de palier (14) présente un bloc palier (34) et deux paliers linaires (29), entourant le bloc palier (34).

32. Dispositif selon la revendication 1, **caractérisé en ce que** l'agencement de palier (14) comprend un actionneur (43), intégré dans l'agencement de palier (14), pour provoquer le mouvement de réglage.

33. Dispositif selon la revendication 31, **caractérisé en ce que** les deux paliers linéaires (29) sont opposés et entourent le bloc palier (34) de manière que la précontrainte de palier et les efforts de palier subissent ou supportent une composante notable dans une direction perpendiculaire à l'axe de rotation du cylindre (06 ; 07).

34. Dispositif selon la revendication 1, **caractérisé en ce que** l'agencement de palier (14) présente des paliers linéaires (29), au moyen desquels le corps de rotation est déplaçable de manière linéaire.

35. Dispositif selon la revendication 34, **caractérisé en ce que** le corps de rotation, avec l'unité de palier (15), est réalisé de manière à pouvoir être prémonté.

36. Dispositif selon la revendication 1, **caractérisé en ce que** le moteur d'entraînement (81) reçoit, d'une ligne de signalisation (171) guidant un axe directeur virtuel, des signaux pour la position angulaire de consigne et/ou la vitesse angulaire et/ou la position d'axe directeur (Φ).

37. Dispositif selon la revendication 1, **caractérisé en ce que** le rotor (84) du moteur d'entraînement (81) est monté en palier de manière déplaçable axialement par rapport à un bâti latéral, et **en ce que** le rotor (84) et le stator (86), coopérant avec celui-ci, du moteur d'entraînement (81) sont montés en palier, de manière déplaçable l'un par rapport à l'autre en direction axiale.

38. Dispositif selon la revendication 37, **caractérisé en ce que** le stator (86) est monté en palier de manière déplaçable par rapport au bâti latéral (11 ; 12), par rapport à une direction axiale du cylindre (06 ; 07).

39. Dispositif selon la revendication 1, **caractérisé en ce que** le composant (06 ; 07) est réalisé sous forme de cylindre (06 ; 07) d'une unité d'impression (01), en particulier sous forme de cylindre de forme.
